# EUROPEAN PATENT APPLICATION

(11) **EP 4 637 130 A1**
(43) Date of publication of application: **22.10.2025**
(21) Application number: 25169987.2
(22) Date of filing: 11.04.2025
(51) Int. Cl.: H04N 1/00, H04N 1/21, H04N 1/32

(54) **IMAGE TRANSFER APPARATUS, CONTROL METHOD, AND PROGRAM**

(30) Priority: 15.04.2024 JP 2024065326
(71) Applicant: CANON KABUSHIKI KAISHA, Tokyo 146-8501 (JP)
(72) Inventor: TAMAGAWA, Kei, Ohta-ku, Tokyo, 146-8501 (JP)
(74) Representative: TBK

(57) **Abstract**

An image transfer apparatus (120) for transferring a received image to a transfer destination, the image transfer apparatus includes a management unit (323) configured to manage first information in which sortation conditions to sort the received image are held; an association unit (327) configured to associate a sortation condition selected by a user from among the sortation conditions included in the first information with a transfer destination selected by the user; and a transfer unit (330) configured to transfer the received image to a specified transfer destination.

## Description

### Field

The present disclosure relates to image transfer processing.

### Description of the Related Art

There are methods of automatically sorting images obtained by image capturing with an image capturing device.

Japanese Patent Laid-Open No. 2018-005843 discloses that tag information corresponding to a sub-theme is applied to an image that matches the sub-theme and the image is classified to a folder by using the tag information. However, the method of Japanese Patent Laid-Open No. 2018-005843 does not allow a user to select a folder of classification destination.

Japanese Patent Laid-Open No. 2013-045352 discloses a method by which conditions (sortation conditions) for images to be transmitted to an external web service are registered, and in a case where a received image matches a sortation condition, the received image is transmitted to an external service corresponding to the sortation condition.

Sortation conditions registered for transmitting images to an external service are also desired to be used in a case where images are transmitted to another external service. For example, in a case where images satisfying a sortation condition that persons are included is registered to be transmitted to a backup service for backup, images satisfying the same sortation condition are desired to be transmitted to an edit service for image editing. However, with the method of Japanese Patent Laid-Open No. 2013-045352, even in a case where the same sortation condition as a previously registered sortation condition is registered, the user needs to input the sortation condition from scratch, resulting in additional work.

### SUMMARY

The present invention in its first aspect provides an image transfer apparatus as specified in claims 1 to 18.

The present invention in its second aspect provides a control method as specified in claims 19

The present invention in its third aspect provides program as specified in claim 20.

Further features of the present disclosure will become apparent from the following description of exemplary embodiments with reference to the attached drawings.

### BRIEF DESCRIPTION OF THE DRAWINGS

Figs. 1A and 1B are diagrams for description of the configuration of an image transfer system;
Figs. 2A and 2B are hardware configuration diagrams of an image transfer apparatus and an image capturing device;
Fig. 3 is a diagram illustrating an example of functional components included in apparatuses constituting the image transfer system;
Fig. 4 is a sequence diagram of the image transfer system;
Figs. 5A to 5C are sequence diagrams of the image transfer system;
Figs. 6A and 6E are diagrams illustrating an example of various kinds of information;
Figs. 7A to 7C are diagrams illustrating an example of various kinds of information;
Figs. 8A to 8D are diagrams illustrating an example of various kinds of information;
Fig. 9 is a diagram illustrating an example of a main screen;
Fig. 10 is a diagram illustrating an example of a sortation condition setting screen;
Fig. 11 is a flowchart for description of processing of generating a sortation condition production screen;
Fig. 12 is a diagram illustrating an example of a screen for production of sortation condition using object categories;
Fig. 13 is a flowchart for description of sortation condition generation processing;
Fig. 14 is a diagram illustrating an example of a screen for production of sortation condition based on blur-exposure correction;
Fig. 15 is a flowchart for description of the sortation condition generation processing;
Fig. 16 is a diagram illustrating an example of a screen for production of sortation condition using image capturing information;
Fig. 17 is a diagram showing the relationship of Figs. 17A and 17B;
Figs. 17A and 17B are flowcharts for description of the sortation condition generation processing;
Fig. 18 is a diagram illustrating an example of a screen for production of the combined sortation condition;
Figs. 19A and 19B are diagrams illustrating an example of the main screen;
Figs. 20A and 20B are diagrams illustrating an example of a relational information generation screen;
Fig. 21 is a diagram showing the relationship of Figs. 21A and 21B;
Figs. 21A and 21B are flowcharts for description of processing of generating the relational information generation screen;
Fig. 22 is a flowchart for description of relational information generation processing;
Fig. 23 is a flowchart for description of sortation processing;
Fig. 24A is a flowchart for description of match determination processing;
Fig. 24B is a flowchart for description of the match determination processing;
Fig. 25 is a flowchart for description of transfer processing;
Figs. 26A to 26D are diagrams illustrating an example of various kinds of information;
Figs. 27A and 27B are diagrams illustrating an example of a functional configuration of the image transfer apparatus;
Figs. 28A and 28B are diagrams illustrating an example of the main screen;
Fig. 29 is a flowchart for description of starting point selection history generation processing;
Figs. 30A and 30B is a diagram illustrating an example of the relational information generation screen;
Fig. 31 is a flowchart for description of processing of generating the relational information generation screen;
Fig. 32 is a flowchart for description of relational information generation processing;
Fig. 33 is a diagram illustrating an example of a screen for production of sortation condition using object categories;
Fig. 34 is a flowchart for description of the sortation condition generation processing; and
Fig. 35 is a flowchart for description of the sortation processing.

### DESCRIPTION OF THE EMBODIMENTS

The technologies of the present disclosure will be described below in detail based on embodiments with reference to the accompanying drawings. Configurations described in the embodiments below are merely exemplary, and the technologies of the present disclosure is not limited to the described configurations.

### <Embodiment 1>

### [Configuration of image transfer system]

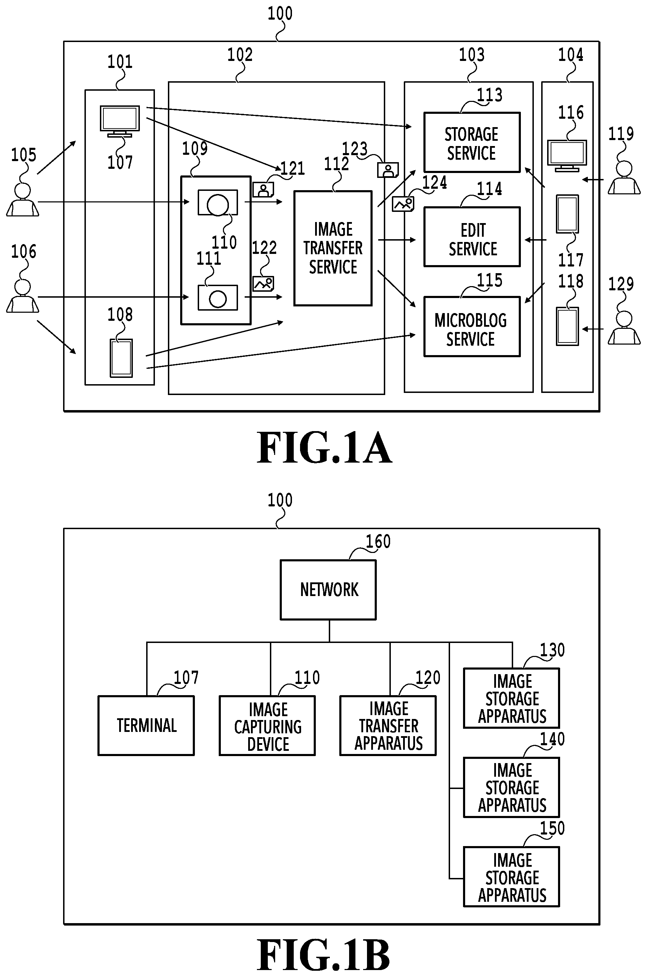

Fig. 1A is a diagram illustrating an overview of an image transfer system 100 according to the present embodiment. The image transfer system 100 includes a terminal group 101, an image capturing transfer system 102, an external service group 103, and a browsing terminal group 104. The terminal group 101 includes, for example, a terminal 107 and a portable terminal 108. The image capturing transfer system 102 includes, for example, an image capturing device group 109 and an image transfer service 112. The image capturing device group 109 includes image capturing devices 110 and 111. The external service group 103 includes one or a plurality of external services. An external service is a service such as a cloud service different from an image transfer service. The external service group 103 includes, for example, external services such as a storage service 113, an edit service 114, and a microblog service 115. The browsing terminal group 104 includes, for example, a PC 116 and portable terminals 117 and 118.

A user 105 can use the image transfer service 112 and the external service group 103 through the terminal 107 or the image capturing device 110. The user 105 can perform, on the image transfer service 112 through the terminal 107, various kinds of setting such as user registration, camera linkage setting, external service linkage setting, and sortation setting. A user 106 uses the image transfer service 112 and the external service group 103 through the portable terminal 108 or the image capturing device 111. The user 106 can perform the above-described various kinds of setting on the image transfer service 112 through the portable terminal 108. An image 121 obtained through image capturing by the user 105 operating the image capturing device 110 and an image 122 obtained through image capturing by the user 106 operating the image capturing device 111 are transmitted to the image transfer service 112. The image transfer service 112 transfers images 123 and 124 to an external service set to cooperate. The images 121 and 123 or the images 122 and 124 may be identical or different.

Users 119 and 129 are users of external services included in the external service group 103. The user 119 accesses an external service included in the external service group 103 through the terminal 116 or the portable terminal 117 and browses images and information provided by the accessed external service. The user 129 accesses an external service included in the external service group 103 through the portable terminal 118 and browses images and information provided by the accessed external service.

Fig. 1B is a diagram illustrating the configuration of apparatuses of the image transfer system 100. Fig. 1B illustrates the configuration of the image transfer system 100 for the user 105, for example. The image transfer system includes the terminal 107, the image capturing device 110, an image transfer apparatus 120, image storage apparatuses 130, 140, and 150, and a network 160. The image transfer apparatus 120 is an apparatus that provides the image transfer service 112. The image storage apparatus 130 is an apparatus that provides the storage service 113. The image storage apparatus 140 is an apparatus that provides the edit service 114. The image storage apparatus 150 is an apparatus that provides the microblog service 115. The terminal 107, the image capturing device 110, the image transfer apparatus 120, and the image storage apparatuses 130, 140, and 150 are connected to one another through the network 160. The network 160 is achieved by, for example, a local area network (LAN) or the Internet and enables mutual communication among connected instruments. The terminal 107 is, for example, a PC having a communication function but is not limited thereto. The terminal 107 may be any apparatus, such as a lens interchangeable digital camera, a compact digital camera, a smartphone, or a tablet, having a communication function and capable of transmitting files to the image transfer apparatus 120. The image capturing device 110 is, for example, a lens interchangeable digital camera or a compact digital camera but not limited thereto and may be, for example, a smartphone or tablet terminal having a camera function.

### [Hardware configuration of image transfer apparatus]

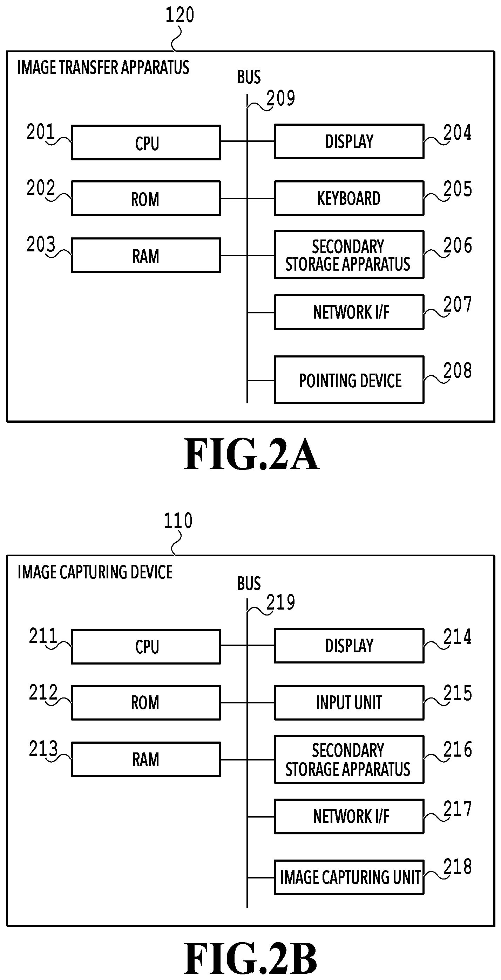

Fig. 2A is a diagram illustrating an example of a hardware configuration of the image transfer apparatus 120. The image transfer apparatus 120 includes a CPU 201, a ROM 202, a RAM 203, a display 204, a keyboard 205, a secondary storage apparatus 206, a network I/F 207, and a pointing device 208, and these components are mutually connected through a bus 209. The CPU 201 is an arithmetic processing unit configured to execute a computer program stored in the ROM 202 or the secondary storage apparatus 206 and control each component connected through the bus 209. The ROM 202 is a read-only memory storing an OS and the like. The RAM 203 is a memory configured to temporarily store data in a case where the CPU 201 executes arithmetic processing. The display 204 is a display unit configured to display a UI screen and the like. The keyboard 205 and the pointing device 208 are input units for a user to perform various input operations. The secondary storage apparatus 206 stores various computer programs, setting value data, and databases (DB) as well as captured image data and the like. The network I/F 207 is an interface for connecting to a network such as a local area network (LAN), an intranet, or the Internet. The terminal 107, the portable terminal 108, the image storage apparatus 130, and the image storage apparatus 140 have the same hardware configuration as in Fig. 2A, and thus description of the hardware configurations of these apparatuses is omitted.

Fig. 2B is a diagram illustrating an example of a hardware configuration of the image capturing device 110. The image capturing device 110 includes a CPU 211, a ROM 212, a RAM 213, a display 214, an input unit 215, a secondary storage apparatus 216, a network I/F 217, and an image capturing unit 218, and these components are mutually connected through a bus 219. The CPU 211 is an arithmetic processing unit configured to execute a computer program stored in the ROM 212 or the secondary storage apparatus 216 and control each component connected through the bus 219. The ROM 212 is a read-only memory storing an OS and the like. The RAM 213 is a memory configured to temporarily store data in a case where the CPU 211 executes arithmetic processing. The display 214 is a display unit configured to display information necessary for users, such as captured images or various UI screens. The input unit 215 is achieved by buttons, a touch panel, a microphone, and the like and receives user operations such as image capturing instructions or various setting instructions. The secondary storage apparatus 216 stores various computer programs, captured image data, setting values of image capturing settings included in ancillary information, and the like. The image capturing settings include ISO sensitivity, shutter speed, exposure correction, and F value. The network I/F 217 is an interface for connecting to a network such as a local area network (LAN), an intranet, or the Internet. The image capturing unit 218 is a module configured to convert light received by an image capturing element, such as a CCD or a CMOS, into an electric signal and record the electric signal as an image.

### [Functional configuration of terminal]

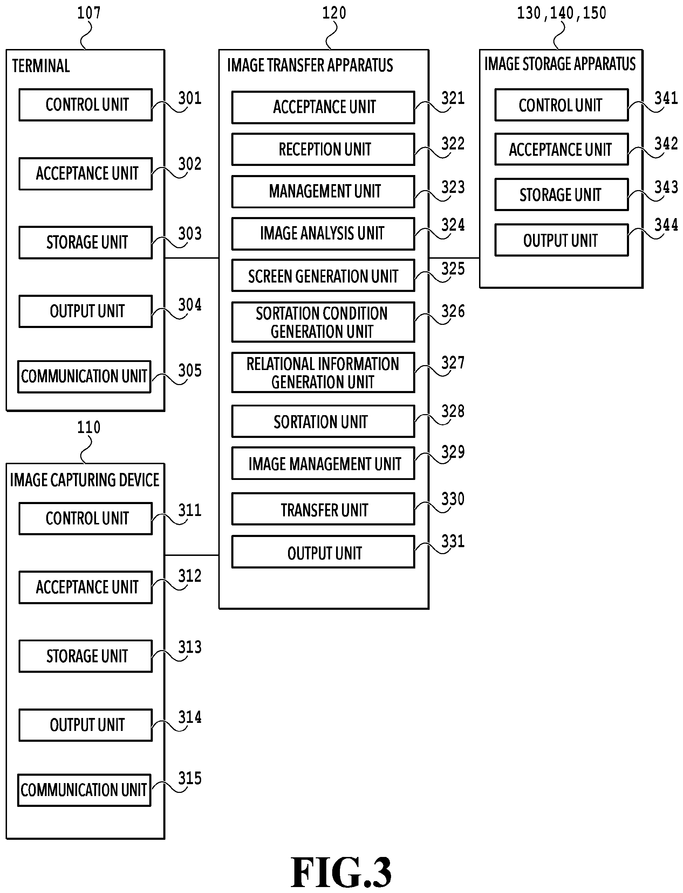

Fig. 3 is a diagram for description of a functional configuration of each apparatus constituting the image transfer system 100 of the present embodiment. The terminal 107 includes a control unit 301, an acceptance unit 302, a storage unit 303, an output unit 304, and a communication unit 305 as functional components. The control unit 301 controls each constituent component of the terminal 107. The acceptance unit 302 accepts input from a user. The storage unit 303 stores a computer program for transmitting files to the image transfer apparatus 120, data to be transmitted to the image transfer apparatus 120, input from the user, and the like in a memory. The output unit 304 performs display control for displaying an input screen of a computer program for transmitting data to the image transfer apparatus 120, transmission results, summary information of data on the image transfer apparatus 120, and the like. The communication unit 305 performs communication with the image transfer apparatus 120 through the computer program for transmitting data to the image transfer apparatus 120. The communication unit 305 performs transmission of data designated by the user, reception of list information of data managed by the image transfer apparatus 120, transmission of operations on data managed by the image transfer apparatus 120, reception of operation results, and the like. Each functional component of the terminal 107 is achieved by the CPU of the terminal 107 loading a computer program stored in the ROM onto the RAM and executing processing in accordance with a sequence diagram to be described later. The execution result of each processing is stored in the RAM of the terminal 107.

### [Functional configuration of image capturing device]

The image capturing device 110 includes a control unit 311, an acceptance unit 312, a storage unit 313, an output unit 314, and a communication unit 315. The control unit 311 controls each constituent component of the image capturing device 110. The acceptance unit 312 accepts input from a user. The storage unit 313 stores captured images, a computer program for transmitting data to the image transfer apparatus 120, data to be transmitted to the image transfer apparatus 120, input from the user, and the like. The output unit 314 displays an input screen of the computer program for transmitting data to the image transfer apparatus 120, transmission results, summary information of data on the image transfer apparatus 120, and the like. The communication unit 315 performs communication with the image transfer apparatus 120 through the computer program for transmitting data to the image transfer apparatus 120. The communication unit 315 performs transmission of data designated by the user, reception of list information of data managed by the image transfer apparatus 120, transmission of operations on data managed by the image transfer apparatus 120, reception of operation results, and the like. Each functional component of the image capturing device 110 is achieved by the CPU 211 of the image capturing device 110 loading a computer program stored in the ROM 212 onto the RAM 213 and executing processing in accordance with a sequence diagram to be described later. The execution result of each processing is stored in the RAM 213.

### [Functional configuration of image transfer apparatus]

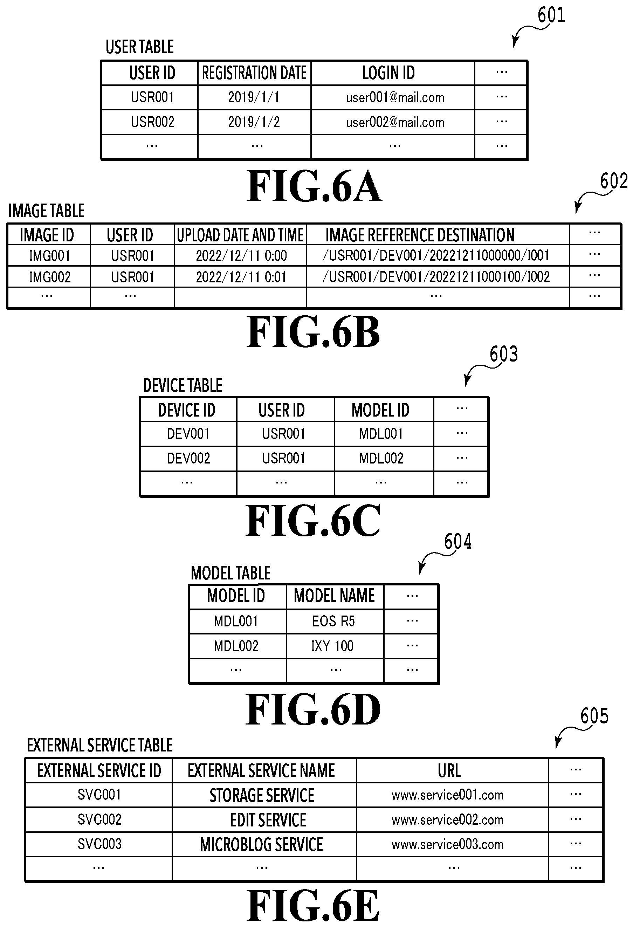

The image transfer apparatus 120 includes an acceptance unit 321, a reception unit 322, a management unit 323, an image analysis unit 324, a screen generation unit 325, a sortation condition generation unit 326, a relational information generation unit 327, a sortation unit 328, an image management unit 329, a transfer unit 330, and an output unit 331. Hereinafter, each functional component will be described below. The acceptance unit 321 accepts input from a user through the terminal 107 and the image capturing device 110. The reception unit 322 receives images, information, and the like from the terminal 107 and the image capturing device 110. The management unit 323 stores and manages static resources and information necessary for processing of various tables and the like in a storage unit. Tables managed by the management unit 323 are tables illustrated in Figs. 6A to 6E, 7A to 7C and 8A to 8D. The image analysis unit 324 performs analysis processing on a received image. The analysis processing will be described later in detail. The screen generation unit 325 performs processing for displaying a screen such as a sortation condition production screen on the terminal 107. Details thereof will be described later. The sortation condition generation unit 326 generates sortation conditions based on input from the user through the sortation condition production screen. Details thereof will be described later. The relational information generation unit 327 associates the sortation conditions with transfer destinations based on input from the user. Details thereof will be described later. The sortation unit 328 executes sortation processing on received images based on the sortation conditions. Details thereof will be described later. The image management unit 329 stores and manages images transmitted from the image capturing device 110 in a storage unit. The transfer unit 330 transfers an image that matches a sortation condition to the corresponding transfer destination. Details thereof will be described later. The output unit 331 outputs various kinds of information. Each functional component of the image transfer apparatus 120 is achieved by the CPU 201 of the image transfer apparatus 120 loading a computer program stored in the ROM 202 onto the RAM 203 and executing processing in accordance with a flowchart to be described later. The execution result of each processing is held the RAM 203 of the image transfer apparatus 120.

### [Functional configuration of image storage apparatus]

The image storage apparatuses 130, 140, and 150 each include a control unit 341, an acceptance unit 342, a storage unit 343, and an output unit 344 as functional components. The control unit 341 controls various kinds of information. The acceptance unit 342 accepts input of various kinds of information. The storage unit 343 stores various kinds of information. The output unit 344 outputs various kinds of information. These functional components are achieved by the CPU of each of the image storage apparatuses 130, 140, and 150 loading a computer program stored in the ROM onto the RAM and executing processing in accordance with a sequence diagram to be described later. The execution result of each processing is held in the RAM of each of the image storage apparatuses 130, 140, and 150.

The functional components included in the terminal 107, the image capturing device 110, the image transfer apparatus 120, and the image storage apparatuses 130, 140, and 150 may be dispersively achieved by a plurality of terminals or information processing apparatuses. In a case where functions are dispersed to a plurality of information processing apparatuses, the information processing apparatuses are connected with each other through a LAN or the like to enable communication therebetween and cooperatively perform a series of processes to be described later.

### [Sequence of sortation condition generation]

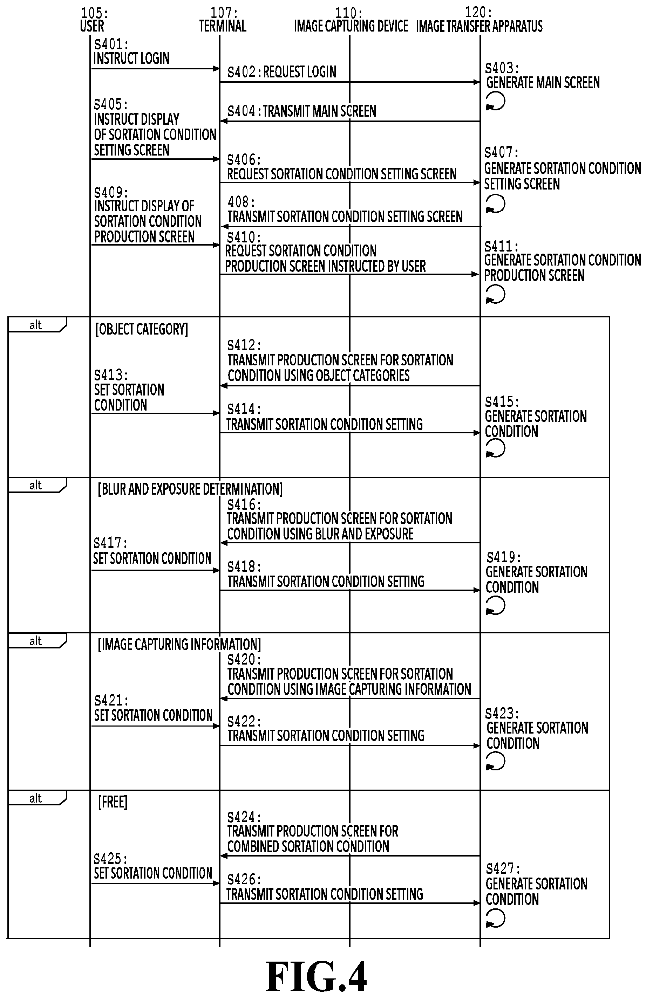

Fig. 4 is a sequence diagram for description of processing flow at apparatuses of the image transfer system 100 during sortation condition generation. Symbol "S" in description of each processing of a sequence diagram or a flowchart below means a process (step) in the sequence diagram or the flowchart. For convenience of description, a user operation as well will be described as a step.

At S401, the user 105 operates the terminal 107 and instructs login to the image transfer apparatus 120. It is assumed that the user 105 has completed user registration to the image transfer apparatus 120 and can use the image transfer apparatus 120. At login, the user 105 inputs, to the terminal 107, login information (login ID and password) registered during user registration. The login ID is, for example, a mail address used by the user. The login ID is not limited to a mail address but may be a string issued by the image transfer apparatus 120 or a string set by the user. In such a case, the login ID is a unique string without duplication with those of other users to uniquely specify the user. The password is an optional string set by the user. The password is not limited to a string but may be living body information such as fingerprint or iris, a physical key, or the like.

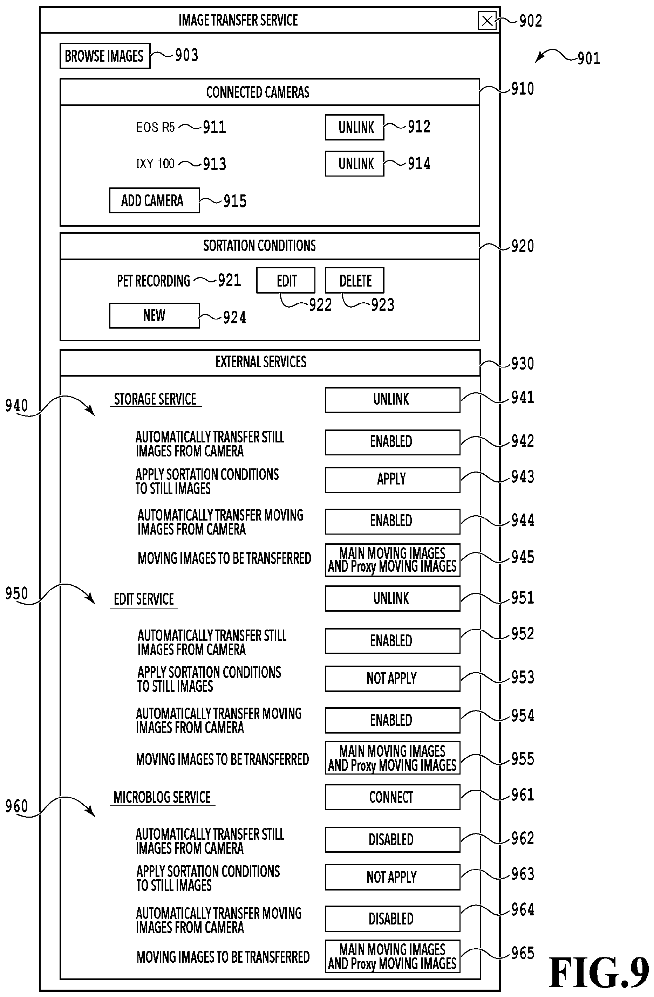

At S402, the terminal 107 transmits the accepted login information to the image transfer apparatus 120 and requests information for displaying a main screen 901 (refer to Fig. 9). The main screen 901 will be described later in detail.

At S403, the image transfer apparatus 120 generates information for displaying the main screen 901 based on the request from the terminal 107.

At S404, the image transfer apparatus 120 transmits the generated information for displaying the main screen 901 to the terminal 107. As a result, the main screen 901 is displayed on the terminal 107.

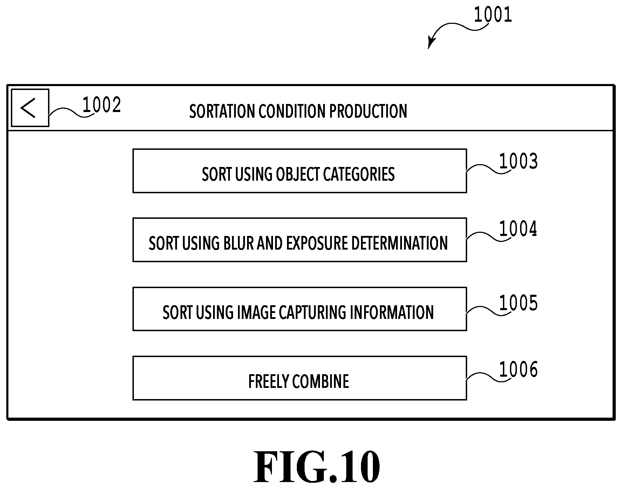

At S405, the user 105 operates the terminal 107 and instructs display of a sortation condition setting screen 1001 (refer to Fig. 10). The instruction to display the sortation condition setting screen corresponds to an operation of pressing a sortation condition setting screen call button 924 (refer to Fig. 9) included in the main screen 901 displayed on the terminal 107.

At S406, the terminal 107 requests the image transfer apparatus 120 for information for displaying the sortation condition setting screen 1001.

At S407, the image transfer apparatus 120 generates, based on the request from the terminal 107, information for displaying the sortation condition setting screen 1001.

At S408, the image transfer apparatus 120 transmits the generated information for displaying the sortation condition setting screen 1001 to the terminal 107. As a result, the sortation condition setting screen 1001 is displayed on the terminal 107. The sortation condition setting screen 1001 will be described later in detail.

At S409, the terminal 107 accepts an instruction to display a sortation condition production screen selected by the user 105. The instruction to display the sortation condition production screen corresponds to an operation of pressing either button included in the sortation condition setting screen 1001 displayed on the terminal 107.

At S410, the terminal 107 transmits, to the image transfer apparatus 120, a request to transmit information for displaying a screen for generating a sortation condition based on a template instructed by the user. The request includes the value of an ID corresponding to the pressed button.

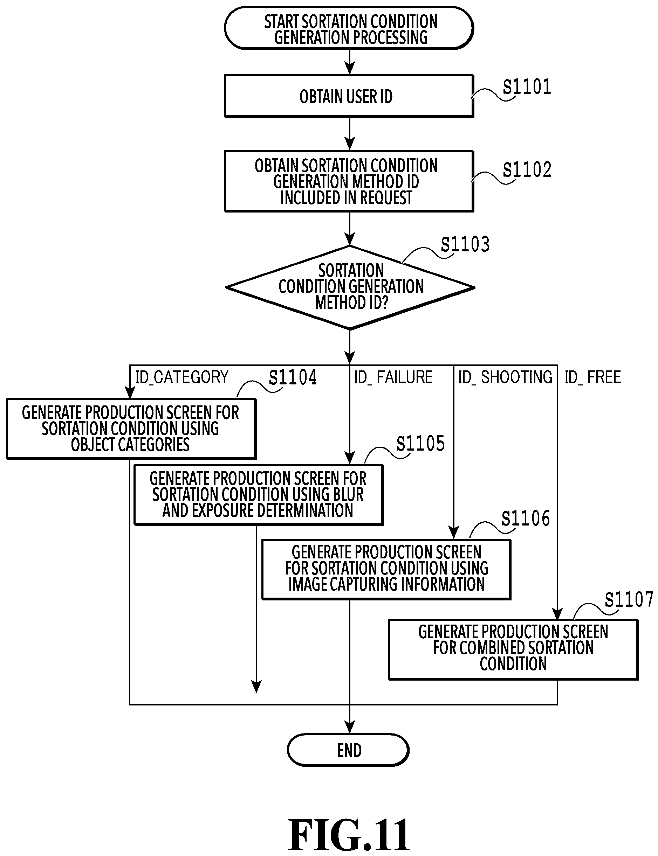

At S411, the image transfer apparatus 120 receives the request transmitted from the terminal 107 and generates information of a sortation condition production screen corresponding to the value of the ID included in the request. In a case where screen information is stored in advance, information of the sortation condition production screen corresponding to the value of the ID may be obtained from the management unit 323. Processing at S411 will be described later in detail by using a flowchart of Fig. 11. The next processing is switched in accordance with the generated sortation condition production screen.

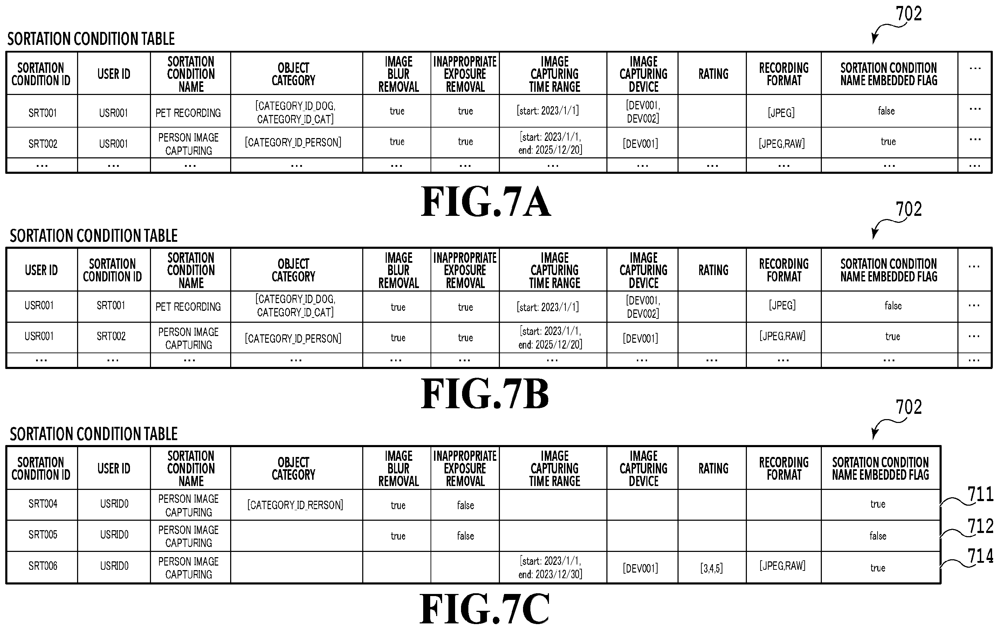

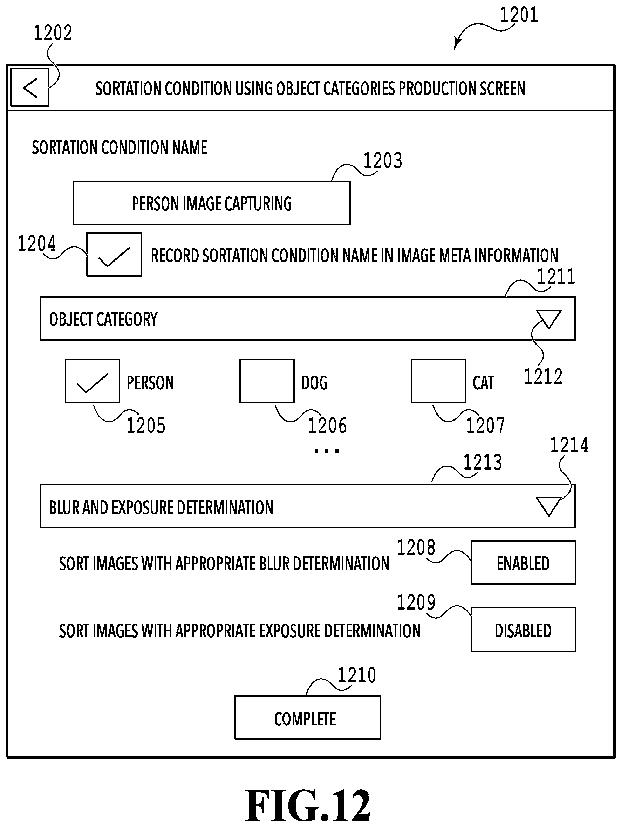

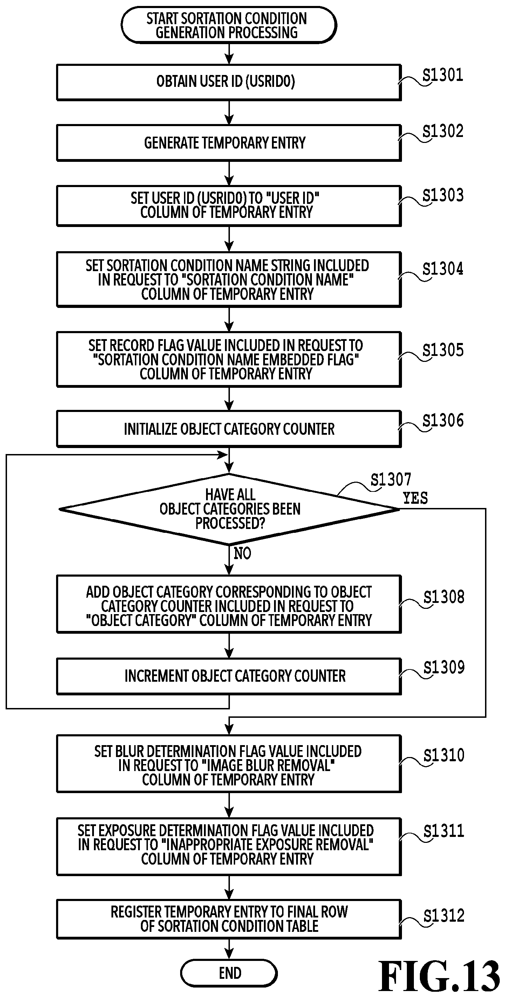

S412 to S415 are processing in a case where a sortation condition using object categories production screen 1201 (refer to Fig. 12) is generated at S411. At S412, the image transfer apparatus 120 transmits information for displaying the sortation condition using object categories production screen 1201 to the terminal 107. The sortation condition using object categories production screen 1201 is displayed on the terminal 107. At S413, the terminal 107 accepts the contents of a sortation condition generated by the user 105 through the sortation condition using object categories production screen 1201. At S414, the terminal 107 transmits the accepted contents of the sortation condition to the image transfer apparatus 120. At S415, the image transfer apparatus 120 generates an entry to be added to a sortation condition table 702 (refer to Fig. 7B) based on the received information of the sortation condition. S415 will be described later in detail by using a flowchart of Fig. 13.

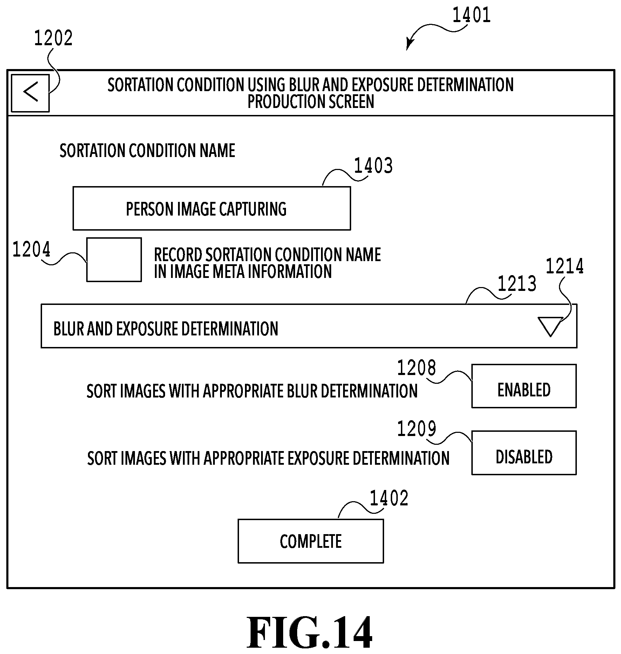

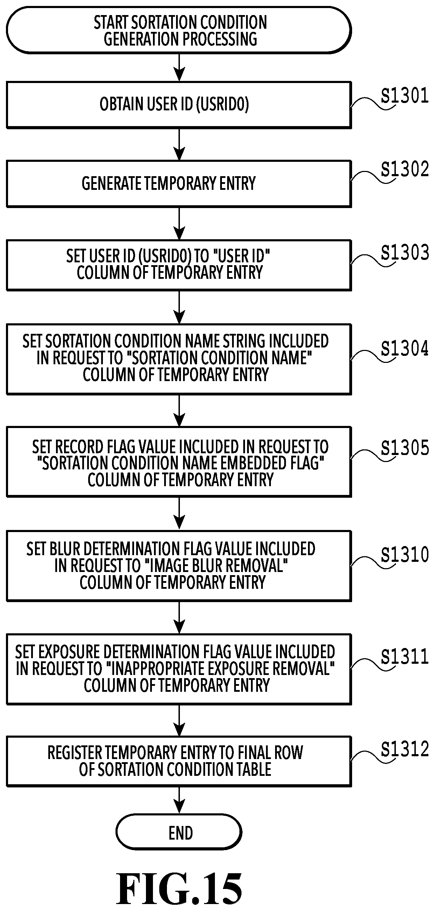

S416 to S419 are processing in a case where a sortation condition using blur and exposure production screen 1401 (refer to Fig. 14) is generated at S411. At S416, the image transfer apparatus 120 transmits information for displaying the sortation condition using blur and exposure production screen 1401 to the terminal 107. The sortation condition using blur and exposure production screen 1401 is displayed on the terminal 107. At S417, the terminal 107 accepts the contents of a sortation condition generated by the user 105 through the sortation condition using blur and exposure production screen 1401. At S418, the terminal 107 transmits the accepted contents of the sortation condition to the image transfer apparatus 120. At S419, the image transfer apparatus 120 generates an entry to be added to the sortation condition table 702 based on the received information of the sortation condition. S419 will be described later in detail by using a flowchart of Fig. 15.

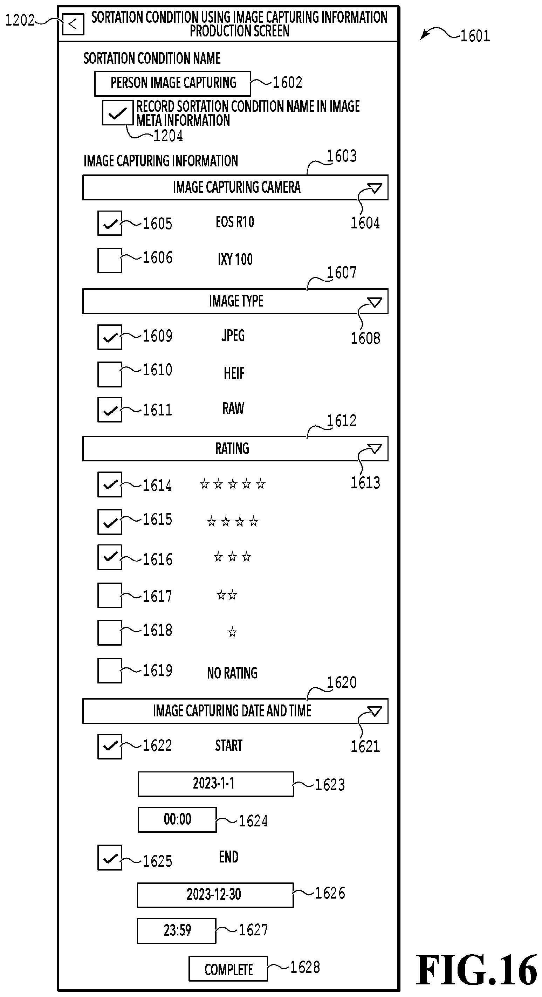

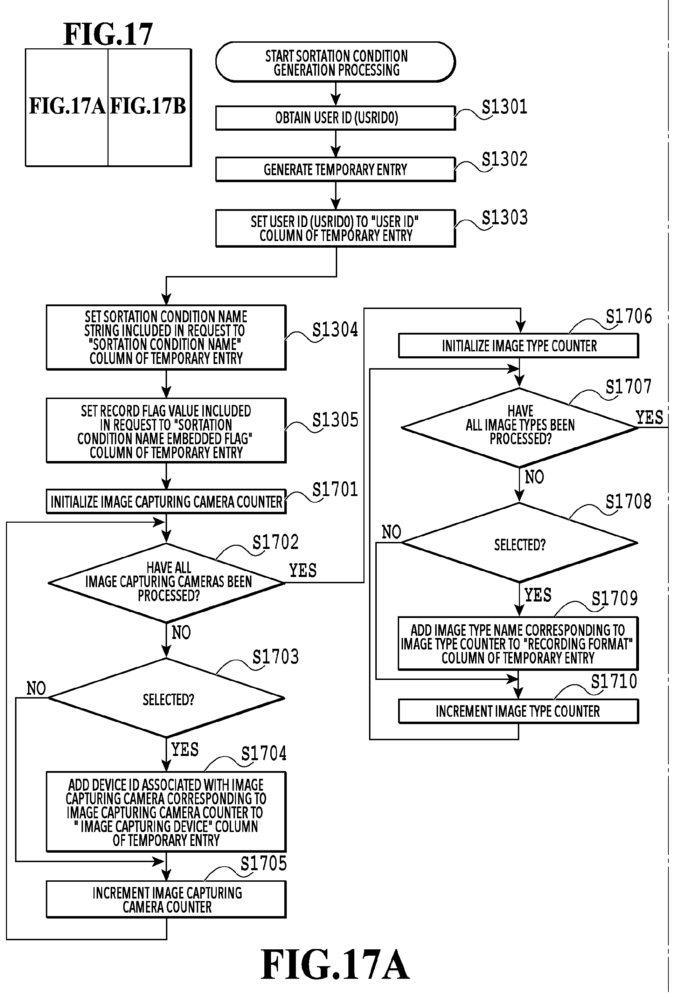

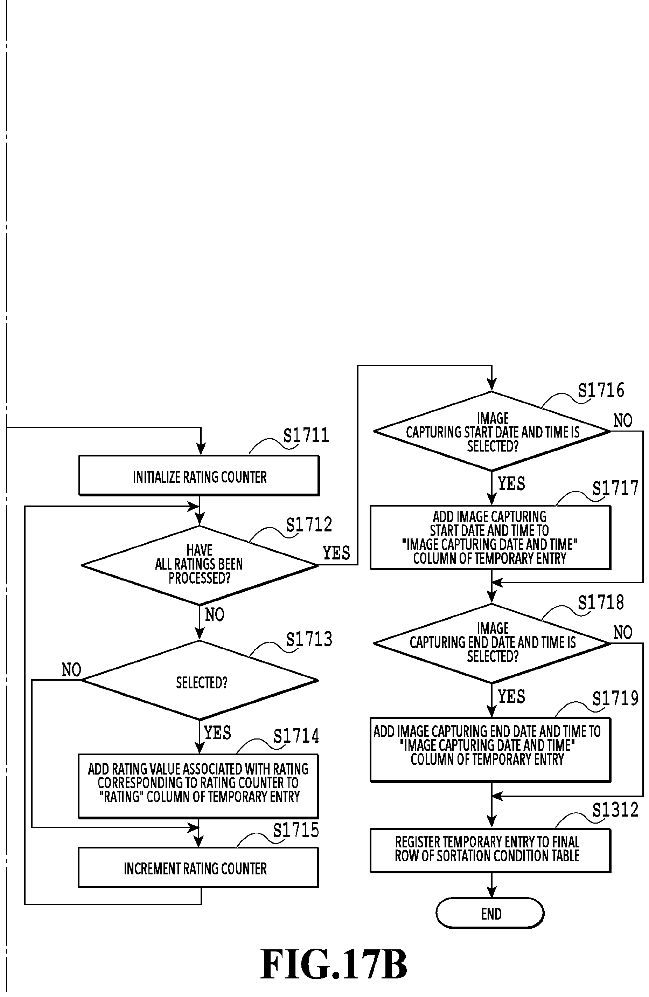

S420 to S423 are processing in a case where a sortation condition using image capturing information production screen 1601 (refer to Fig. 16) is generated at S411. At S420, the image transfer apparatus 120 transmits information for displaying the sortation condition using image capturing information production screen 1601 to the terminal 107. The sortation condition using image capturing information production screen 1601 is displayed on the terminal 107. At S421, the terminal 107 accepts the contents of a sortation condition generated by the user 105 through the sortation condition using image capturing information production screen 1601. At S422, the terminal 107 transmits the accepted contents of the sortation condition to the image transfer apparatus 120. At S423, the image transfer apparatus 120 generates an entry to be added to the sortation condition table 702 based on the received information of the sortation condition. Processing at S423 will be described later in detail by using flowcharts of Figs. 17A and 17B.

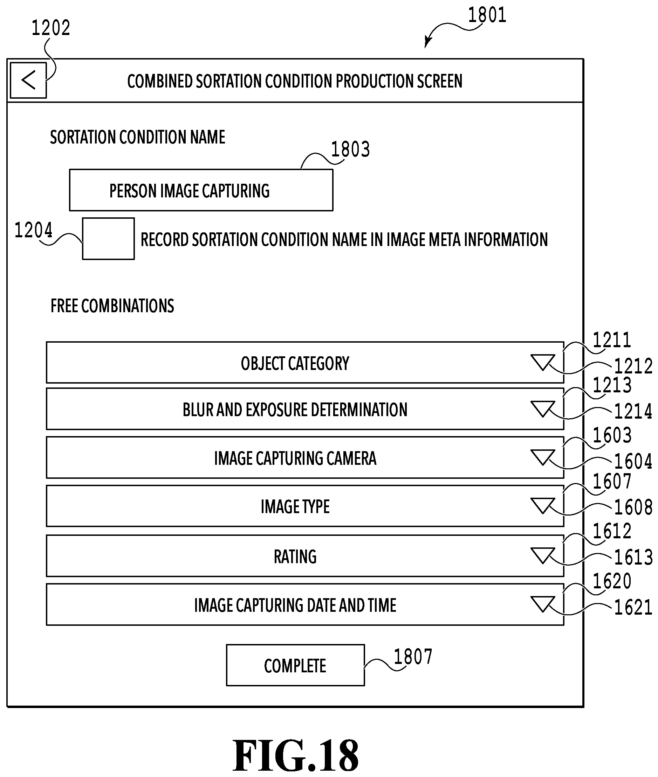

S424 to S427 are processing in a case where a combined sortation condition production screen 1801 (refer to Fig. 18) is generated at S411. At S424, the image transfer apparatus 120 transmits information for displaying the combined sortation condition production screen 1801 (refer to Fig. 18) to the terminal 107. The combined sortation condition production screen 1801 (refer to Fig. 18) is displayed on the terminal 107. At S425, the terminal 107 accepts the contents of a sortation condition generated by the user 105 through the combined sortation condition production screen 1801. At S426, the terminal 107 transmits the accepted contents of the sortation condition to the image transfer apparatus 120. At S427, the image transfer apparatus 120 generates an entry to be added to the sortation condition table 702 based on the received information of the sortation condition.

### [Association of sortation condition and transfer destination]

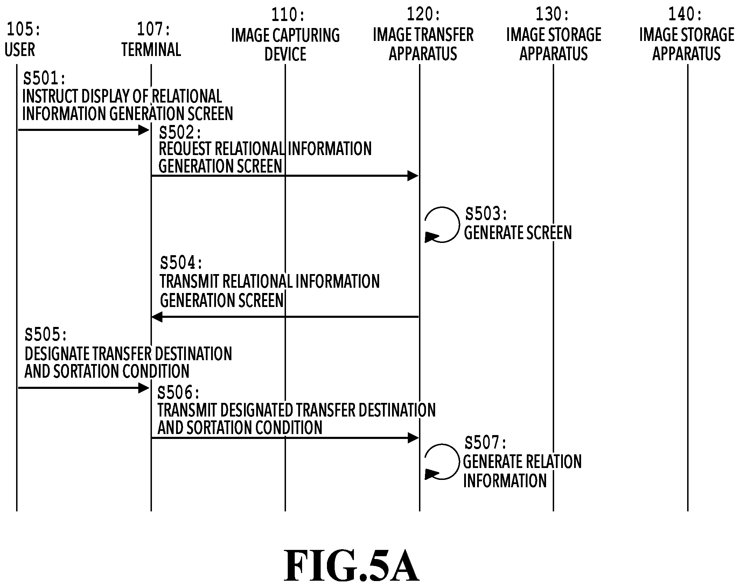

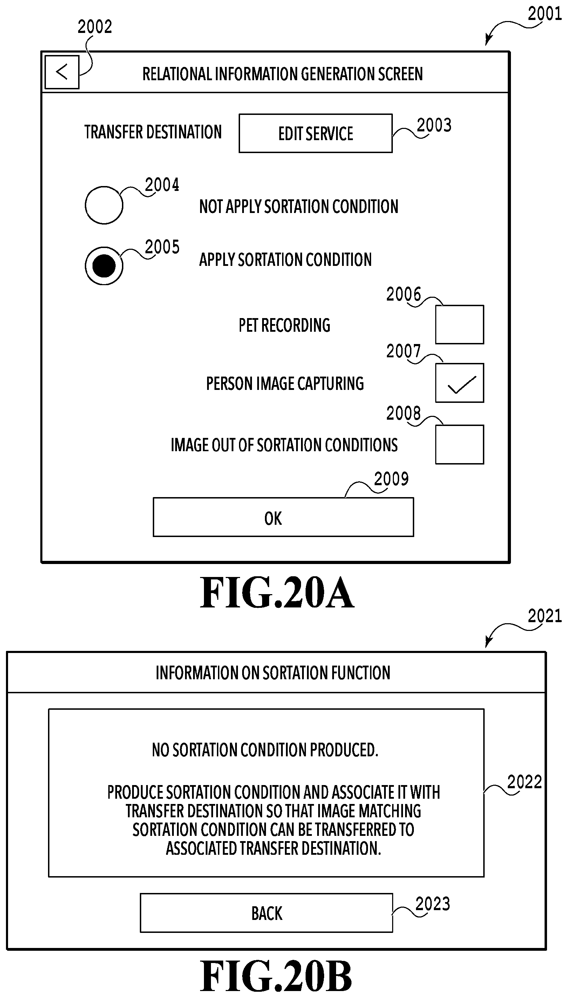

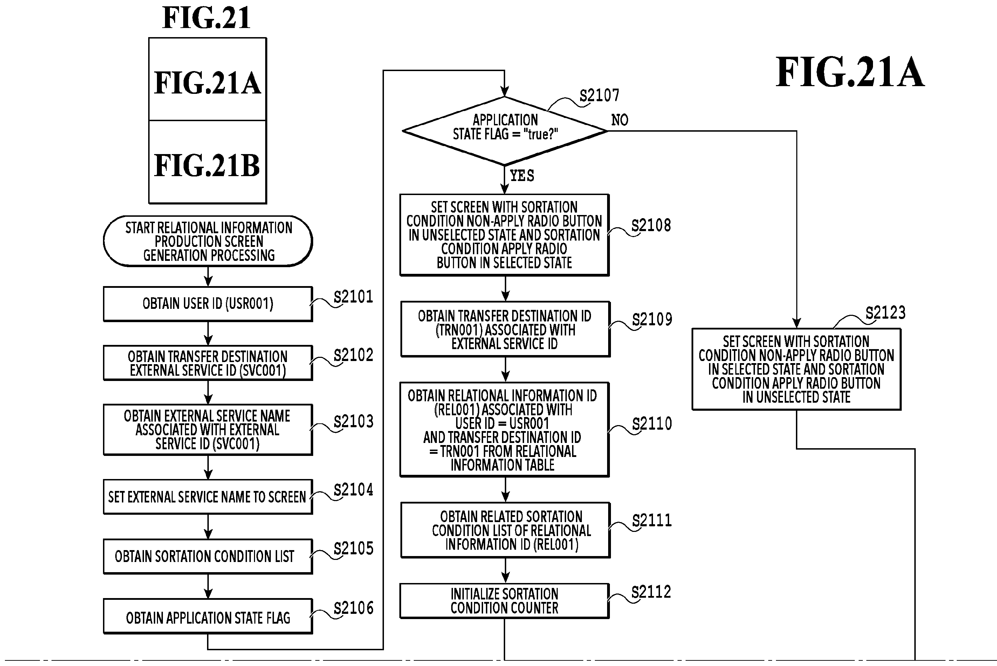

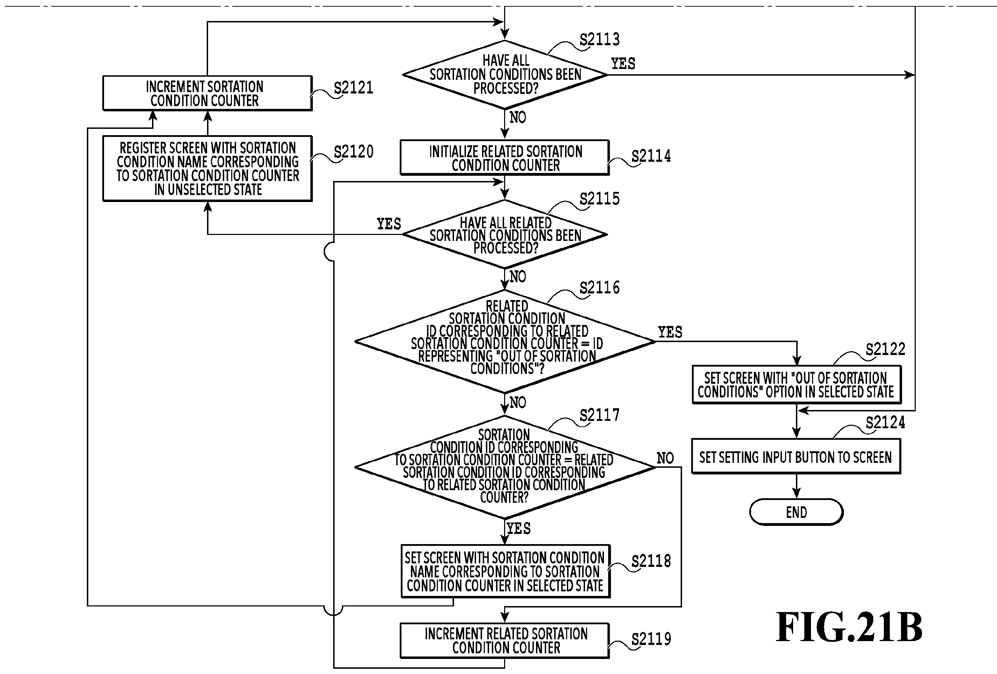

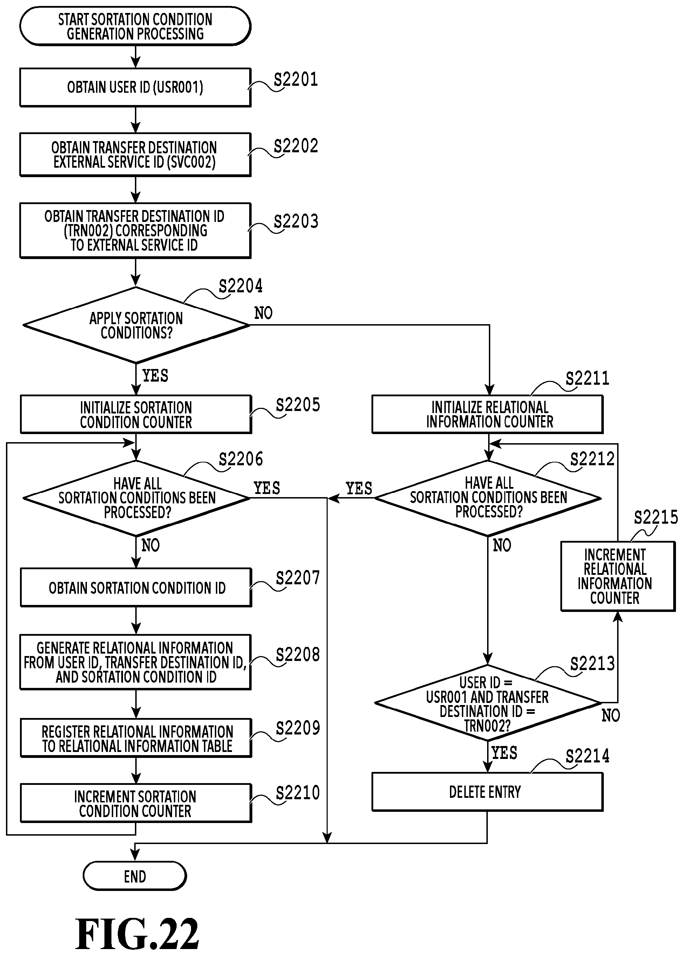

Fig. 5A is a sequence diagram for description of processing flow at apparatuses of the image transfer system 100 during processing of associating an image transfer destination and a sortation condition. At S501, the terminal 107 accepts an instruction to display a relational information generation screen 2001 (refer to Fig. 20A) from the user 105. The relational information generation screen 2001 will be described later in detail. At S502, the terminal 107 transmits a request to display the relational information generation screen 2001 to the image transfer apparatus 120. At S503, the image transfer apparatus 120 generates information for displaying the relational information generation screen 2001. Processing at S503 will be described later in detail by using flowcharts of Figs. 21A and 21B. At S504, the image transfer apparatus 120 transmits the generated information for displaying the relational information generation screen 2001 to the terminal 107. The relational information generation screen 2001 is displayed on the terminal 107. At S505, the terminal 107 accepts a sortation condition to be associated with a transfer destination, which is selected by the user 105 through the relational information generation screen 2001. At S506, the terminal 107 transmits, to the image transfer apparatus 120, a request to associate the sortation condition selected by the user with a transfer destination. At S507, the image transfer apparatus 120 generates an entry (relational information) to be add to a relational information table 803 based on the request received from the terminal 107. S507 will be described later in detail by using a flowchart of Fig. 22.

### [Image capturing with image capturing device to transfer of captured image]

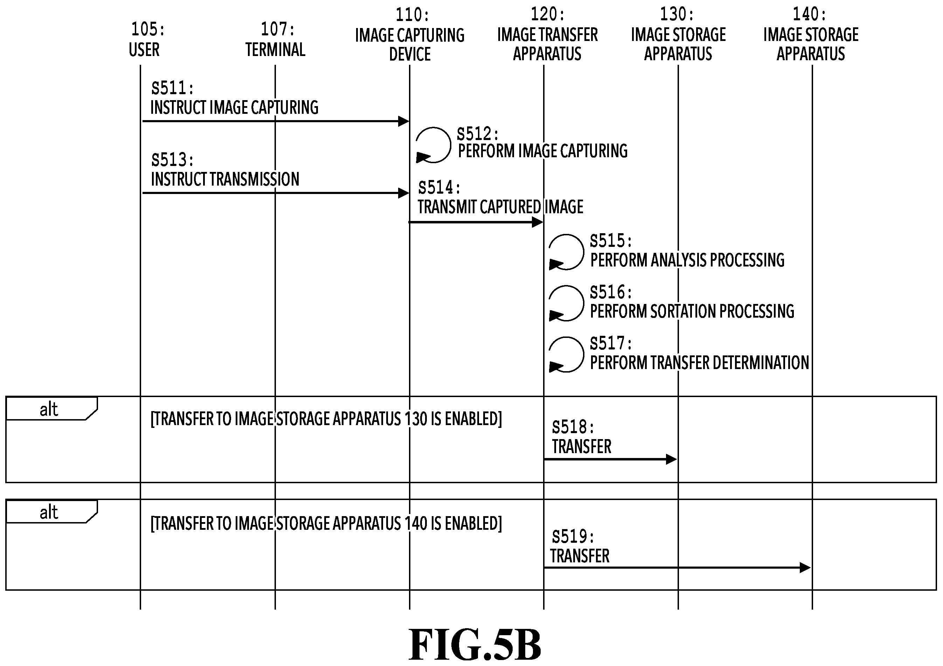

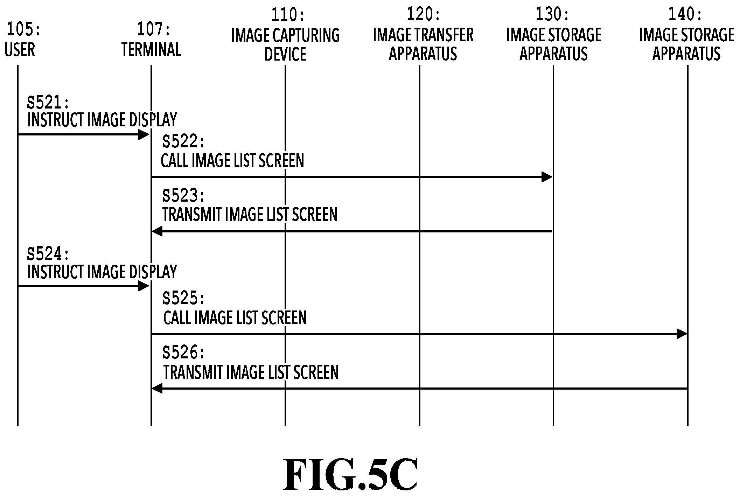

Figs. 5B and 5C are sequence diagrams for description of processing flow through which a captured image obtained by image capturing with the image capturing device 110 registered to the image transfer apparatus 120 is transferred to an external service and a user browses the image registered to the external service.

At S511, the image capturing device 110 accepts an image capturing instruction from the user 105. At S512, the image capturing device 110 performs image capturing based on the image capturing instruction from the user 105. At S513, the image capturing device 110 accepts, from the user 105, a transmission instruction to transmit a captured image obtained by the image capturing to the image transfer apparatus 120. At S514, the image capturing device 110 transmits the captured image to the image transfer apparatus 120 based on the transmission instruction from the user. The image transfer apparatus 120 receives the captured image transmitted from the image capturing device 110. At S515 to S519, processing is performed on the received captured image.

At S515, the image transfer apparatus 120 executes analysis processing on the received captured image. Analysis processing will be described later in detail. The result (analysis result) of the analysis processing is associated with the value of the ID (image ID) of the received image and managed by the management unit 323.

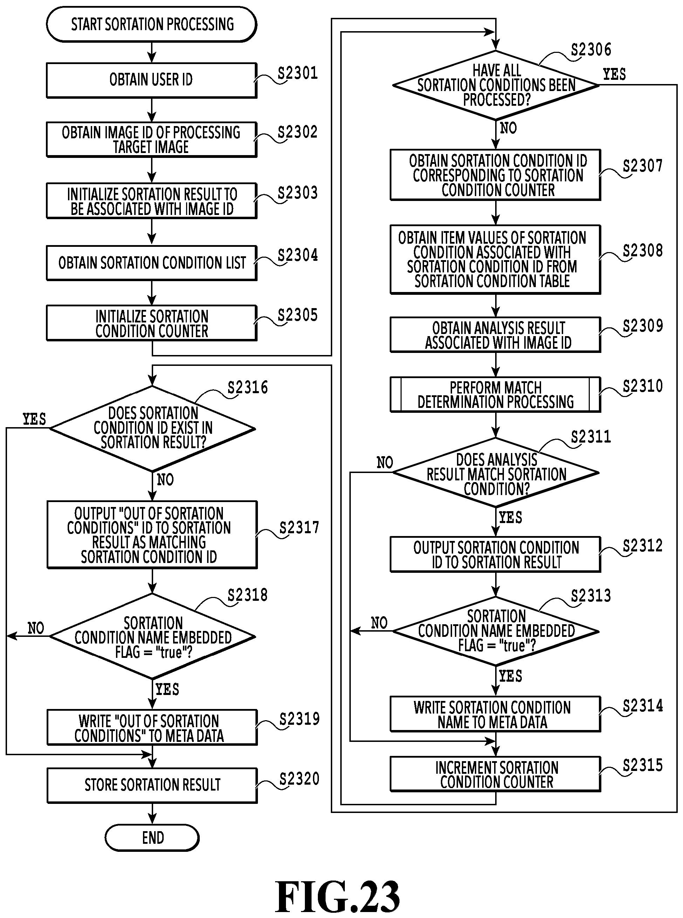

At S516, the image transfer apparatus 120 executes, on the received captured image, sortation processing of determining a sortation condition that matches the analysis result. The sortation processing will be described later in detail by using a flowchart of Fig. 23.

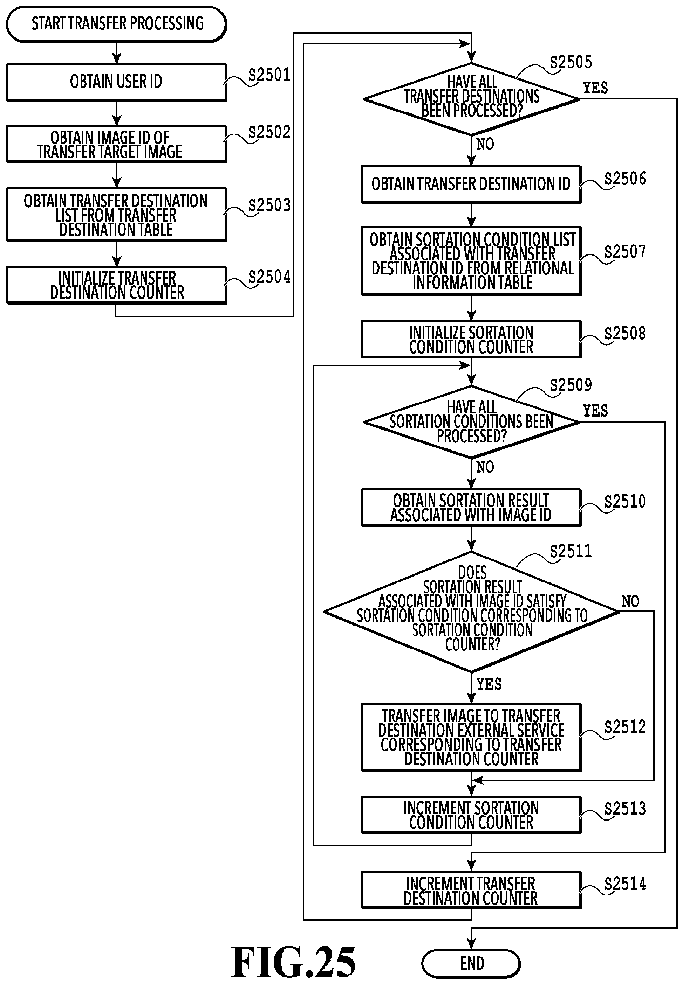

At S517, the image transfer apparatus 120 determines any external service that is the transfer destination of the received image based on an external service linkage state, the result of the sortation processing, and relational information. It is assumed that, as a result, the transfer destination of the received captured image is determined to be the image storage apparatus 130 and the image storage apparatus 140. At S518, the image transfer apparatus 120 transfers the received captured image to the image storage apparatus 130. The received captured image is registered to the image storage apparatus 130. At S519, the image transfer apparatus 120 transfers the received captured image to the image storage apparatus 140. The received captured image is registered to the image storage apparatus 140. S517 to S519 are transfer processing on the received captured image. The transfer processing will be described later in detail by using a flowchart of Fig. 25.

At S521, the terminal 107 receives an instruction to display an image registered to the image storage apparatus 130 from the user 105. At S522, the terminal 107 instructs the image storage apparatus 130 to display an image list screen. The image list screen is a screen that displays a list of user images registered to a target image storage apparatus. At S523, the image storage apparatus 130 transmits information for displaying the image list screen to the terminal 107. At S524, the terminal 107 receives an instruction to display an image registered to the image storage apparatus 140 from the user 105. At S525, the terminal 107 instructs the image storage apparatus 140 to display the image list screen. At S526, the image storage apparatus 140 transmits information for displaying the image list screen to the terminal 107.

### [Analysis processing]

It is assumed that, as an example, image capturing information extraction processing, object classification processing, and failure determination processing are executed in the analysis processing executed at S515 in Fig. 5B. It is also assumed that blur determination processing and exposure determination processing are executed in the failure determination processing.

The image capturing information extraction processing is processing of extracting information from an analysis processing target image, and in the present embodiment, is assumed to be processing of extracting a tag value from Exif applied to the image. However, the extracted information is not limited to the Exif tag value, but additional information may be embedded in the image as watermark information and extracted. Moreover, the extracted information may be any metadata applied to the image.

The object classification processing is processing of extracting any object included in an analysis processing target image and determining a classification (category) of the extracted object. In a case where a person is included in the image, information indicating that the extracted object is a person, a real number representing a likelihood that the extracted object is a person, and coordinate information of a bounding box enclosing the extracted object in the image coordinate system are output as the processing result. The likelihood is not limited to a real number but may be an integer corresponding to 0 to 100 or may be an identifier corresponding to A to J. The coordinate information of the bounding box is its upper-left and lower-right coordinates in the image coordinate system but is not limited thereto. Alternatively, the coordinate information may be the upper-right and lower-left coordinates, may be the upper-left coordinate and the horizontal and vertical widths of the bounding box, or may be the center coordinate of the object in the image coordinate system and the radius of a circle enclosing the object. Moreover, the coordinate information may be the focal point coordinates of an ellipse enclosing the object in the image coordinate system, may be the long and short axial lengths of an ellipse enclosing the object and the coordinate of the intersection point of the long and short axes, or may be any information with which the position of the object can be specified.

The blur determination processing is processing of determining existence of blur in a whole analysis processing target image. In the blur determination processing, processing of detecting blur generated in the analysis processing target image is executed to output a value representing the result of blur existence determination. The result of the blur determination processing is referred to as blur determination result. "False" is output as the blur determination result in a case where blur is detected, or "true" is output as the blur determination result in a case where no blur is detected. The blur detection processing may be performed by any method with which blur can be detected. For example, the spatial frequency of the image may be calculated and it may be determined that blur exists in a case where the intensity of the low-frequency component is equal to or lower than a specified threshold value. Alternatively, not only the intensity of the low-frequency component but also the intensity of the high-frequency component may be considered and it may be determined that blur exists in a case where the intensity of the high-frequency component is equal to or higher than a specified threshold value. Moreover, blur may be determined by machine learning. The blur determination result is not limited to a Boolean value. Instead, the blur determination result may be a real number representing the degree of blur, an integer corresponding to 0 to 100, or an identifier corresponding to a specified string of A to J.

The exposure determination processing is processing of determining whether the exposure of an analysis processing target image is appropriate. In a case where the average luminance of the image is equal to or higher than a first threshold value or equal to or lower than a second threshold value, it is determined that the exposure is inappropriate, and a result is output. This determination result is referred to as exposure determination result. "False" is output as the exposure determination result in a case where it is determined that the exposure is inappropriate, or "true" is output as the exposure determination result in a case where it is determined that the exposure is appropriate. The exposure determination processing may be performed by, for example, a method of converting the pixel values of the image into L values in the CIELAB color space and determining that the exposure is inappropriate in a case where the number of pixels with L values equal to or larger than 90 is equal to or larger than 20% of the number of all pixels. Alternatively, it may be determined that the exposure is inappropriate in a case where the number of pixels with L values equal to or smaller than 10 is equal to or larger than 20% of the number of all pixels. Alternatively, whether the exposure is inappropriate may be determined by machine learning, or any method capable of determining the degree of exposure is applicable. Although a Boolean value is output as the exposure determination result in the above, the present invention is not limit thereto, but the appropriateness of exposure may be output as a real number, may be an integer corresponding to 0 to 100, or may be an identifier corresponding to a specified string such as A to J.

The failure determination processing is not limited to the blur determination processing and the exposure determination processing but may include, for example, tilt determination processing of determining whether an object in an image is tilted. In a method of the tilt determination processing, the image is provided with straight line detection processing such as Hough transform and it is determined that the object is tilted in a case where the number of detected straight lines with tilts within a specified range is equal to or larger than a specified threshold value. Alternatively, an object may be extracted and determined to be tilted in a case where the object is an object expected to be substantially horizontally positioned, such as an eye and is tilted, for example, obliquely by 45° within a specified range. Alternatively, existence of tilt may be determined by machine learning, or any method capable of determining the degree of tilt is applicable. An output value may be a Boolean value, may be a real number or normalized integer of likelihood, or may an identifier corresponding to likelihood.

### [Information managed by image transfer apparatus]

Figs. 6A to 6E, 7A to 7C and 8A to 8D are diagrams illustrating an example of information managed by the management unit 323 of the image transfer apparatus 120 according to the present embodiment. Values held in tables in Figs. 6A to 6E, 7A to 7C and 8A to 8D are exemplary, and values other than the values illustrated in Figs. 6A to 6E, 7A to 7Cand 8A to 8D may be held in the tables.

### [[User information]]

In a user table 601 in Fig. 6A, information of users who use the image transfer apparatus 120 is expressed in a table format. In the user table 601, the value of a user ID that uniquely identifies a user is associated with the registration date of the user and the value of a login ID for the user to log in, which are held in the same entry (row). The registration date is a date on which the user completed user registration to the image transfer apparatus 120. In the image transfer apparatus 120, the value of a user ID representing a user can be used as a key to refer to values such as the registration date and login ID of the user.

### [[Image information]]

In an image table 602 in Fig. 6B, information of images managed by the image transfer apparatus 120 is expressed in a table format. In the image table 602, the value of an image ID that uniquely identifies an image is associated with the user ID of the owner of the image, the upload date and time of the image, a reference destination of the image, which are held in the same entry. The upload date and time is date and time when the image is uploaded to the image transfer apparatus 120. The image reference destination is a path to a storage destination of the image. In the image transfer apparatus 120, the value of the image ID of an image can be used as a key to refer to values such as the user ID, upload date and time, and image reference destination of the image.

### [[Image capturing device information]]

In a device table 603 in Fig. 6C, information of image capturing devices managed by the image transfer apparatus 120 is expressed in a table format. In the device table 603, the value of a device ID that uniquely identifies an image capturing device registered to the image transfer apparatus 120 by a user is associated with the values of a user ID representing the user and the model ID of the image capturing device, which are held in the same entry. The value of the model ID is a value for uniquely identifying the model of the image capturing device. In the image transfer apparatus 120, the value of the device ID of an image capturing device can be used as a key to refer to the value of a user ID representing the user of the image capturing device, and the value of the model ID of the image capturing device.

In a model table 604 in Fig. 6D, information of the models of image capturing devices managed by the image transfer apparatus 120 is expressed in a table format. In the model table 604, the value of a model ID is associated with the model name of an image capturing device corresponding to the model ID, which is held in the same entry. In the image transfer apparatus 120, the value of a model ID can be used as a key to refer to the name (model name) of a model represented by the model ID.

### [[External service information]]

In an external service table 605 in Fig. 6E, information of external services registered to the image transfer apparatus 120 is expressed in a table format. In the external service table 605, the value of an external service ID for uniquely identifying an external service is associated with the values of the name (external service name) of the external service and a URL of the external service, which are held in the same record. In the image transfer apparatus 120, the value of an external service ID representing an external service can be used as a key to refer to an external service name representing the external service, the URL of the external service, and the like.

### [[Sortation condition information]]

In the sortation condition table 702 in Fig. 7A, "sortation conditions" managed by the image transfer apparatus 120 are expressed in a table format. In the present embodiment, as illustrated in the sequence diagram of Fig. 4, users can generate various sortation conditions, and thus sortation conditions generated by users are managed in the sortation condition table 702. Each entry (row) in the sortation condition table 702 is added for the value of a sortation condition ID that uniquely identifies a sortation condition. The value of a user ID, a sortation condition name, the value (sortation item value) of a sortation item, and the Boolean value of a sortation condition name embedded flag, which are associated with the value of a sortation condition ID are held in the same entry. The sortation condition name is the name of a sortation condition. In the image transfer apparatus 120, the value of a sortation condition ID can be used as a key to refer to the values of the user ID, the sortation condition name, each sortation item value, the sortation condition name embedded flag from the sortation condition table 702.

Sortation items included in the sortation condition table 702 are roughly classified into an object classification information sortation item, an failure classification information sortation item, and an image capturing information sortation item.

The object classification information sortation item is a sortation item related to classification of an object included in an image. For example, "object category" included in the sortation condition table 702 is an example of the object classification information sortation item. A sortation item value held in the column of "object category" in the sortation condition table 702 is the value of an ID (object category ID) representing the category of an object. The category of an object is, for example, person, living being, animal, dog, cat, bird, plant, vehicle, car, train, airplane, food, sport, building, mountain, sea, night scene, or still object. In a case where a value is held in the column of "object category", this entry indicates a sortation condition with which an image including an object of the object category is a sortation target. The value of an object category ID representing an object category selected by a user is held in the column of "object category" in the sortation condition table 702. In the sortation processing using object categories, the sortation target is an image including an object represented by a value held in the column of "object category".

The failure classification information sortation item is a sortation item representing the state of an image evaluated as a failed image in a case where the image is browsed by a photographer or a viewer. For example, "image blur removal" and "inappropriate exposure removal" included in the sortation condition table 702 are an example of the failure classification information sortation item. For example, image tilt, which is not included in the sortation condition table 702, is the failure classification information sortation item. Although it is assumed that the sortation item value of "image blur removal" is a Boolean value representing whether blur is generated in an image, the sortation item value may be a continuous value representing the degree of blur. Although it is assumed that the sortation item value of "inappropriate exposure removal" is a Boolean value representing whether the exposure of an image is appropriate, the sortation item value may be a continuous value representing the appropriateness of exposure.

The image capturing information sortation item is a sortation item related to image capturing. For example, "image capturing time range", "image capturing device", "rating", and "recording format" included in the sortation condition table 702 are examples of the image capturing information sortation item. For example, multiple exposure image capturing, continuous image capturing, lens used, scene mode, image capturing mode, strobe light emission state, recording quality, DPRAW, aspect ratio, exposure metering mode, white balance, and color reproduction parameter, which are not included in the sortation condition table 702, are examples of the image capturing information sortation item. The item "image capturing device" is an item for sorting an image based on an image capturing device having captured the image. The sortation item value of "image capturing device" is the value of the device ID. In a case where the sortation item value is "DEV001", an image captured with EOS R10 is determined to be a sortation target. In a case where the sortation item value is "DEV002", an image captured with IXY 100 is determined to be a sortation target. A device ID list (image capturing device list) is held in "image capturing device". The item "recording format" is an item for sorting images based on the image type of each captured image. The sortation item value of "recording format" is a string representing a recording format. In a case where the sortation item value is "JPEG", an image recorded in the JPEG format is determined to be a sortation target. In a case where the sortation item value is "HEIF", an image recorded in the HEIF format is determined to be a sortation target. In a case where the sortation item value is "RAW", an image recorded in the RAW format is determined to be a sortation target. The item "rating" is an item for sorting an image based on a rating applied to the image. The sortation item "rating" is a rating value. In a case where the sortation item value is "5", an image with the rating value of 5 is determined to be a sortation target. In a case where the sortation item value is "4", an image with the rating value of 4 is determined to be a sortation target. In a case where the sortation item value is "3", an image with the rating value of 3 is determined to be a sortation target. In a case where the sortation item value is "2", an image with the rating value of 2 is determined to be a sortation target. In a case where the sortation item value is "1", an image with the rating value of 1 is determined to be a sortation target. In a case where the sortation item value is "NA", an image to which no rating is applied is determined to be a sortation target. A rating value list (rating list) is held in the "rating" column. The item "image capturing time range" is an item for sorting an image based on the image capturing date and time of the image. The sortation item value of "image capturing time range" is start date and time and end date and time designating an image capturing time range. For example, in a case where the sortation item value is "start: 2023/1/1 ", an image with the image capturing date and time of 2023-1-1 00:00 or later is determined to be a sortation target. In a case where the sortation item value is "end: 2023/12/20", an image with the image capturing date and time of 2023-12-20 23:59 or earlier is determined to be a sortation target.

The "sortation condition name embedded flag" column in the sortation condition table 702 holds "true" in a case where the name of any matching sortation condition is to be written to the metadata of an image, or holds "false" in a case where the sortation condition name is not to be written to the image metadata.

### [[Object category information]]

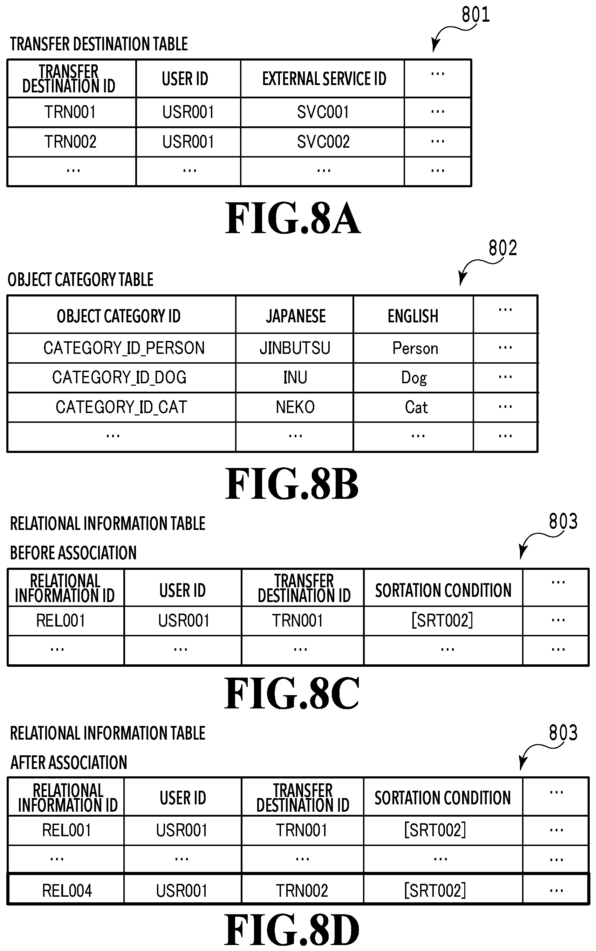

In an object category table 802 in which object categories managed by the image transfer apparatus 120 are expressed in a table format in Fig. 8B. In the object category table 802, the value of an object category ID for uniquely identifying an object category is associated with a display name of the object category in each language, which is held in the same entry. The image transfer apparatus 120 can refer the display name of an object category in each language or the like by using the value of the object category ID as a key. For example, the image transfer apparatus 120 obtains language settings to the image transfer apparatus 120 by the user. Then, the display name of the object category in a language set by the user can be obtained from among display names referred by using the value of the object category ID as a key. In the above description, the value of the object category ID is held as the sortation item value of "object category" in the sortation condition table 702, but the present invention is not limited thereto. The sortation item value of "object category" may be a display name such as "person" or "dog". With such a configuration, it is not needed to obtain, based on the value of an object category ID, the corresponding display name, but it is possible to directly obtain the display name. Accordingly, the display name of an object category can be obtained fast.

### [[Transfer destination information]]

In a transfer destination table 801 in Fig. 8A, information of external services managed as transfer destinations by the image transfer apparatus 120 is expressed in a table format. In the transfer destination table 801, the value of a transfer destination ID for uniquely identifying a transfer destination is associated with the values of a user ID and an external service ID representing an external service at the transfer destination, which are held in the same entry. The image transfer apparatus 120 can obtain the values of a user ID, an external service ID, and the like by using the value of a transfer destination ID as a key. Moreover, the value of the transfer destination ID corresponding to an external service can be obtained by using the value of an external service ID as a key.

### [[Relational information]]

In a relational information table 803 in Fig. 8C, relational information managed by the image transfer apparatus 120 is expressed in a table format. The relational information is information of combination of a transfer destination ID, which is a value representing an external service at an image transfer destination, and a sortation condition ID associated with the transfer destination ID. In a case where only images that match a sortation condition are desired to be transferred to a transfer destination, the user instructs to associate a transfer destination ID representing the transfer destination and a sortation condition ID representing the sortation condition. As a result, relational information is generated. In the relational information table 803, a relational information ID uniquely identifying relational information is associated with the values of a user ID, a transfer destination ID, and a sortation condition ID, which are held in the same entry. The image transfer apparatus 120 can refer the values of a user ID, a transfer destination ID, a sortation condition ID, and the like by using the value of a relational information ID as a key. A list of the values of sortation condition IDs representing sortation conditions associated with the transfer destination by the user is held in the "sortation condition" column in the relational information table 803.

The relational information table 803 in Fig. 8D is an example of a relational information table in a case where a new entry is added to the relational information table 803 in Fig. 8C. An entry with the relational information ID "REL004", which is illustrated with a bold frame, is relational information newly added to the final row. The entry with a bold frame in Fig. 8D is relational information added in a case where a user with the user ID "USR001" instructs to associate a transfer destination (external service) with the transfer destination ID "TRN002" and a sortation condition with the sortation condition ID "SRT002".

Although the left end column of each table is used as a search key in the above description, search may be performed by using another column as a key. Alternatively, as illustrated in the sortation condition table 702 in Fig. 7B, a user ID may be used as a partition key and a sortation condition ID may be used as a sort key. With such a configuration, processing of extracting sortation conditions registered by a user having logged in can be speeded up in a configuration using a NoSQL database.

In the present embodiment, information is managed in table format as illustrated in Figs. 6A to 8D to simplify description. However, the method of information management is not limited to table format, but information may be managed in, for example, the JSON format. For example, in a case where sortation conditions are managed in the JSON format and the sortation item value of a sortation item is not set for a sortation condition, the sortation item may be not included in the configuration of the sortation condition.

### [Configuration of main screen]

Fig. 9 is a diagram illustrating a main screen of the present embodiment. The main screen 901 is the main screen of an application displayed on the terminal 107 of the user 105 having logged in the image transfer apparatus 120. The main screen 901 is generated by the image transfer apparatus 120 at S403 in Fig. 4 and displayed on the terminal 107. A close button 902 is a button for closing the main screen 901 upon press by the user. A call button 903 is a button for displaying an image list screen (not illustrated) that displays a list of uploaded images, upon press by the user.

An image capturing device management region 910 is a region for performing registration of new image capturing devices to the image transfer apparatus 120 and management of image capturing devices registered to the image transfer apparatus 120. Model name display regions 911 and 913 are regions that display the model names of image capturing devices registered to the image transfer apparatus 120. Model names displayed on the model name display regions 911 and 913 are the model names of registered image capturing devices. In Fig. 9, image capturing devices with the model names of "EOS R5" and "IXY 100" are registered. Unlink buttons 912 and 914 are buttons for the image transfer apparatus 120 to cancel linkage with corresponding image capturing devices upon press by the user. The unlink button 912 corresponds to the image capturing device corresponding to the model name displayed in the model name display region 911, and the unlink button 914 corresponds to the image capturing device corresponding to the model name displayed in the model name display region 913. An image capturing device registration screen call button 915 is a button for displaying an image capturing device registration screen (not illustrated) for registering a new image capturing device to the image transfer apparatus 120, upon press by the user.

A sortation condition management region 920 is a region for performing registration of a new sortation condition to the image transfer apparatus 120 and management of sortation conditions registered to the image transfer apparatus 120. A sortation condition name display region 921 is a region that displays the name of a sortation condition registered to the image transfer apparatus 120. A condition edit screen call button 922 is a button for calling a sortation condition generation screen to edit a sortation condition corresponding to the sortation condition name displayed in the sortation condition name display region 921. A condition delete button 923 is a button for deleting the sortation condition corresponding to the sortation condition name displayed in the sortation condition name display region 921. The sortation condition setting screen call button 924 is a button for calling the sortation condition setting screen 1001 (refer to Fig. 10) for selecting a sortation condition template.

An external service setting region 930 is a region for performing setting related to each external service. The external service setting region 930 includes setting regions 940, 950, and 960 corresponding to respective registered external services, and each setting region displays an external service name indicating a setting target external service. For example, the setting region 940 is a region in which setting for "storage service" operated by the image storage apparatus 130 is performed. The setting region 950 is a region in which setting for "edit service" operated by the image storage apparatus 140 is performed. The setting region 960 is a region in which setting for "microblog service" operated by the image storage apparatus 150 is performed. The external services corresponding to the respective setting regions 940, 950, and 960 are referred to as "target external services". For example, the target external service of the setting region 940 is a storage service.

Link buttons 941, 951, and 961 are buttons for switching the states of linkage with target external services. "Unlink" indicating disabling of linkage is displayed on a link button in a case where a target external service is currently linked, or "connect" indicating enabling of linkage is displayed on the link button in a case where no target external service is currently linked.

Still image transfer setting buttons 942, 952, and 962 are each a button for setting whether a still image transmitted from an image capturing device is to be transferred to a target external service. In a case where transfer of a still image transmitted from an image capturing device to a target external service is set to enabling, "enabled" is displayed on the corresponding still image transfer setting button. In a case where the still image transfer setting button 942 on which "enabled" is displayed is pressed by the user, setting of transfer to the target external service is changed to disabled. In a case where transfer of a still image transmitted from an image capturing device to a target external service is set to disabled, "disabled" is displayed on the corresponding still image transfer setting button. In a case where the still image transfer setting button 962 on which "disabled" is displayed is pressed by the user, setting of transfer to the target external service is changed to "enabled".

Sortation condition application buttons 943, 953, and 963 are each a button for selecting whether to execute the sortation processing based on a sortation condition in a case where a still image transmitted from an image capturing device is to be transferred to the corresponding target external service. In a case where it is selected to execute the sortation processing, "apply" is displayed on the button like the sortation condition application button 943. In a case where it is selected not to execute the sortation processing, "not apply" is displayed on the button like the sortation condition application button 953. In a case where press of the sortation condition application buttons 943, 953, and 963 by the user is accepted, processing at the screen generation unit 325 is called. Details thereof will be described later.

Moving image transfer setting buttons 944, 954, and 964 are each a button for selecting whether to transfer a moving image transmitted from an image capturing device to the corresponding target external service. In a case where it is selected to enable transfer of a moving image transmitted from an image capturing device to the corresponding target external service, "enabled" is displayed on the moving image transfer setting button. In a case where the moving image transfer setting button 944 on which "enabled" is displayed is pressed by the user, setting of transfer of a moving image to the target external service is changed to disabled. In a case where it is selected to disable transfer of a moving image transmitted from an image capturing device to the target external service, "disabled" is displayed on the moving image transfer setting button. In a case where the moving image transfer setting button 964 on which "disabled" is displayed is pressed by the user, setting of transfer of a moving image to the target external service is changed to "enabled". Transfer moving image type setting buttons 945, 955, and 965 are each a button for setting the type of moving image to be transferred. At each acceptance of button press, setting is switched among the three types of main moving image only, Proxy moving image only, and both main moving image and Proxy moving image. A notation representing selected setting is displayed on the transfer moving image type setting buttons 945, 955, and 965.

### [Processing of generating new sortation condition]

The following describes processing of generating a new sortation condition and adding an entry (row) corresponding to the new sortation condition to the sortation condition table 702.

### [[Configuration of sortation condition setting screen]]

Fig. 10 is a diagram illustrating an example of the sortation condition setting screen on which the user selects a sortation condition template. Press of the sortation condition setting screen call button 924 is accepted on the main screen 901 in Fig. 9 (S405). Then, information for displaying a screen is generated by the image transfer apparatus 120 (S407), and the sortation condition setting screen 1001 in Fig. 10 is displayed on the terminal 107 (S408).

The sortation condition setting screen 1001 in Fig. 10 can transition to a screen for generating a sortation condition based on a sortation condition template registered to the image transfer apparatus 120 in advance. The sortation condition setting screen 1001 can also transition to a screen for producing an optional sortation condition. In the present embodiment, three templates for a sortation condition using object categories, a sortation condition using blur and exposure determination, and a sortation condition using image capturing conditions are templates registered in advance. Accordingly, sortation condition production screen call buttons 1003 to 1005 corresponding to the three sortation condition templates, respectively, are displayed on the sortation condition setting screen 1001 in Fig. 10. A back button 1002 is a button for closing the condition setting screen 1001 and causing transition to the main screen 901 as the caller upon press by the user. The first call button 1003 is a button for causing transition to the sortation condition using object categories production screen 1201 (refer to Fig. 12). The second call button 1004 is a button for causing transition to the sortation condition using blur and exposure production screen 1401 (refer to Fig. 14). The third call button 1005 is a button for causing transition to the sortation condition using image capturing information production screen 1601 (refer to Fig. 16). A fourth call button 1006 is a button for causing transition to the combined sortation condition production screen 1801 (refer to Fig. 18).

### [[Processing flow until transition to sortation condition production screen]]

Fig. 11 is a flowchart for detailed description of S411 in Fig. 4. The flowchart in Fig. 11 is started in a case where either of the call buttons 1003 to 1006 in Fig. 10 is pressed and a request is received from the terminal 107. A series of processes described in the flowchart below is performed as the CPU of the image transfer apparatus 120 loads a program code stored in the ROM or a HDD onto the RAM and executes the program code. Functions of some or all steps in the flowchart below may be achieved by hardware such as ASIC or electronic circuit.

At S410 in Fig. 4, at least the values of a user ID and a sortation condition generation method ID are included in the request transmitted from the terminal 107 and stored in the RAM 203 of the image transfer apparatus 120. The sortation condition generation method ID is a value corresponding to either of the call buttons 1003 to 1006 selected on the sortation condition setting screen 1001 by the user. In a case where the first call button 1003 is pressed, "ID_CATEGORY" is included in the request as the value of the sortation condition generation method ID. In a case where the second call button 1004 is pressed, "ID_FAILURE" is included in the request as the value of the sortation condition generation method ID. In a case where the third call button 1005 is pressed, "ID_SHOOTING" is included in the request as the value of the sortation condition generation method ID. In a case where the fourth call button 1006 is pressed, "ID_FREE" is included in the request as the value of the sortation condition generation method ID.

At S1101, the sortation condition generation unit 326 obtains the value of the user ID included in the received request.

At S1102, the sortation condition generation unit 326 obtains the value of the sortation condition generation method ID included in the received request.

At S1103, the sortation condition generation unit 326 switches processing in accordance with the value of the sortation condition generation method ID obtained at S1102. In a case where the sortation condition generation method ID is "ID_CATEGORY", the process proceeds to S1104. In a case where the sortation condition generation method ID is "ID_FAILURE", the process proceeds to S1105. In a case where the sortation condition generation method ID is "ID_SHOOTING", the process proceeds to S1106. In a case where the sortation condition generation method ID is "ID_FREE", the process proceeds to S1107.

At S1104, the sortation condition generation unit 326 generates information for displaying the sortation condition using object categories production screen 1201 (refer to Fig. 12).

At S1105, the sortation condition generation unit 326 generates information for displaying the sortation condition using blur and exposure production screen 1401 (refer to Fig. 14).

At S1106, the sortation condition generation unit 326 generates information for displaying the sortation condition using image capturing information production screen 1601 (refer to Fig. 16).

At S1107, the sortation condition generation unit 326 generates information for displaying the combined sortation condition production screen 1801 (refer to Fig. 18).

### [[Process for production of Sortation condition using object categories ]]

Fig. 12 is a diagram illustrating an example of a screen for production of sortation condition using object categories, which is a screen based on the screen information generated at S411 (S1104) and transmitted at S412. The sortation condition using object categories production screen 1201 in Fig. 12 is also referred to as first sortation condition production screen 1201. A back button 1202 is a button for closing the displayed screen and causing transition to the sortation condition setting screen 1001 as the caller upon press by the user.

Through the first sortation condition production screen 1201, the user can generate a new sortation condition based on a template for a sortation condition using object categories. The sortation condition using object categories is a sortation condition including the sortation item value of "object category".

A sortation condition name display region 1203 is a region in which a sortation condition name representing a sortation condition generated with the first sortation condition production screen 1201 is displayed. Although a default string is initially displayed, the user can change the sortation condition name by inputting a new name. A check box 1204 is a check box for setting the value of "sortation condition name embedded flag" in the sortation condition table 702.

A setting region title 1211 displays the title of a region for selecting the sortation item value of "object category". An opening-closing button 1212 is a button for switching display and non-display of a region (accordion menu) indicated by the setting region title 1211. The accordion menu can be expanded by pressing the button while the accordion menu is closed. On the other hand, the accordion menu can be closed by pressing the button while the accordion menu is expanded. With such a configuration, a region in which the user has no interest or setting is completed is not displayed, and thus screen display can be simplified. This is the same for opening-closing buttons included in other sortation condition production screens.

Check boxes 1205 to 1207 are check boxes for the user to select the sortation item value of "object category" to be included in a new sortation condition. An "object category list" consisting of object categories corresponding to checked check boxes among the check boxes 1205 to 1207 is included in a request to be described later. Object categories that can be selected by the user are "person", "dog", and "cat" in the following description. In a case where the check box 1205 is checked, "person" is included as an element in the object category list. In a case where the check box 1206 is checked, the category "dog" is included as an element in the object category list. In a case where the check box 1207 is checked, the category "cat" is included as an element in the object category list.

A setting region title 1213 displays the title of a region for setting the sortation item value of blur and exposure determination. An opening-closing button 1214 is a button for switching display and non-display of the setting region indicated by the setting region title 1213. A setting button 1208 is a button for setting the sortation item value of "image blur removal". A setting button 1209 is a button for setting the sortation item value of "inappropriate exposure removal". In a case where press of the setting buttons 1208 and 1209 is accepted, display is switched between enabled and disabled.

In a case where press of a complete button 1210 is accepted, a request to generate a sortation condition based on contents displayed on the first sortation condition production screen 1201 is transmitted to the image transfer apparatus 120 (S414). The request includes the value of the user ID specifying the user having logged in the terminal 107, a condition name displayed in the sortation condition name display region 1203, and the above-described object category list. The request further includes the value of "blur determination flag". The value of "blur determination flag" is "true" in a case where the setting button 1208 is enabled, or the value of "blur determination flag" is "false" in a case where the setting button 1208 is disabled. The request further includes the value of "exposure determination flag". The value of "exposure determination flag" is "true" in a case where the setting button 1209 is enabled, or the value of "exposure determination flag" is "false" in a case where the setting button 1209 is disabled. The request further includes the value of "record flag". The value of "record flag" is "true" in a case where the check box 1204 is checked, or the value of "record flag" is "false" in a case where the check box 1204 is not checked.

Fig. 13 is a flowchart for detailed description of the sortation condition generation processing at S415 in Fig. 4. The flowchart in Fig. 13 is started in a case where the request transmitted at S414 upon press of the complete button 1210 on the first sortation condition production screen 1201 is received. The information included in the request is stored in the RAM 203. The request is generated, for example, in a case where the terminal 107 calls a REST API provided by the image transfer apparatus 120.

At S1301, the sortation condition generation unit 326 obtains the value of the user ID included in the received request. The value of the user ID obtained at S1301 is "USRID0" in description of subsequent steps.

At S1302, the sortation condition generation unit 326 generates an object from adding an entry (row) to the sortation condition table 702. The object is referred to as temporary entry.

At S1303, the sortation condition generation unit 326 holds the user ID "USRID0" obtained at S1301 in a "user ID" column of the temporary entry.

At S1304, the sortation condition generation unit 326 holds the string of "sortation condition name" included in the received request in a "sortation condition name" column of the temporary entry.

At S1305, the sortation condition generation unit 326 holds the value of "record flag" included in the request in the "sortation condition name embedded flag" column of the temporary entry.

At S1306, the sortation condition generation unit 326 initializes an object category counter.

The following S1307 to S1309 is loop processing performed on an element (object category) corresponding to the value of the object category counter in the object category list included in the request received from the terminal 107. The object category counter is initialized so that the first element in the object category list is to be processed first.

At S1307, the sortation condition generation unit 326 determines whether all elements included in the object category list included in the request have been processed. In a case where it is determined that not all elements have been processed (NO at S1307), the process proceeds to S1308.

At S1308, the sortation condition generation unit 326 adds the value of an object category ID corresponding to a current processing target element among the elements of the object category list included in the request to the column of "object category" in the temporary entry. For example, the first element of the object category list is the zero-th target. In a case where the object category counter is zero and the first element of the object category list is "person", an object category ID "CATEGORY_ID_PERSON" corresponding to "person" is added to the column of "object category" in the temporary entry. In this manner, in a case where an element of the object category list is the name of an object category, the object category table 802 is referred and the value of an object category ID corresponding to the processing target element is added to the column of "object category" in the temporary entry.

At S1309, the sortation condition generation unit 326 increments the object category counter, and the process returns to S1307.

At S1307, in a case where it is determined that all elements have been processed (YES at S1307), the process proceeds to S1310.

At S1310, the sortation condition generation unit 326 holds the value of "blur determination flag" included in the request in an "image blur removal" column in the temporary entry.

At S1311, the sortation condition generation unit 326 holds the value of "exposure determination flag" included in the request in an "inappropriate exposure removal" column in the temporary entry.

At S1312, the sortation condition generation unit 326 registers the temporary entry holding values to the final row in the sortation condition table 702 as a new entry.

For example, in a case where the complete button 1210 is pressed in the state of the screen in Fig. 12, the request includes the sortation condition name of "person image capturing", "record flag" of "true", "blur determination flag" of "true", and "exposure determination flag" of "false". Moreover, "person" is included as an element in the object category list included in the request. In this case, an entry 711 in Fig. 7C is a sortation condition generated as a result of performing the flowchart in Fig. 13.

In description of the present embodiment, the temporary entry is generated and then registered to the sortation condition table after values are set to the temporary entry, but the method of registering a new sortation condition to the sortation condition table is not limited to this method. Instead, for example, an entry may be generated in the sortation condition table and then values may be set to the entry, or any method capable of registering values to the sortation condition table is applicable.

### [[Process for generation of Sortation condition using blur and exposure determination]]

Fig. 14 is a diagram illustrating an example of the screen for sortation condition production using blur and exposure determination, which is a screen based on the screen information generated at S411 (S1105) and transmitted at S416. The sortation condition using blur and exposure production screen 1401 in Fig. 14 is also referred to as second sortation condition production screen 1401. Any part same as a part included in the first sortation condition production screen 1201 is denoted by the same reference sign and description thereof is omitted. A sortation condition name display region 1403 displays a sortation condition name representing a sortation condition generated with the second sortation condition production screen 1401. In a case where press of a complete button 1402 is accepted, a request to generate a sortation condition based on contents displayed on the second sortation condition production screen 1401 is transmitted to the image transfer apparatus 120 (S418). The request includes the user ID, a condition name displayed in the sortation condition name display region 1403, the value of "blur determination flag", the value of "exposure determination flag", and the value of "record flag".

Fig. 15 is a flowchart for detailed description of the sortation condition generation processing at S419 in Fig. 4. The flowchart in Fig. 15 is started in a case where the request transmitted at S418 upon press of the complete button 1402 on the second sortation condition production screen 1401 in Fig. 14 is received by the image transfer apparatus 120. In the flowchart in Fig. 15, any step same as a step in the flowchart in Fig. 13 is denoted by the same number in Fig. 15. The request transmitted upon press of the complete button 1402 on the second sortation condition production screen 1401 in Fig. 14 includes at most the values of the sortation condition name, the record flag, the blur determination flag, and the exposure determination flag. Accordingly, the flowchart in Fig. 15 corresponds to subset processing of the processing of the flowchart in Fig. 13 started in accordance with the request in response to press of the complete button 1210 on the first sortation condition production screen 1201. Thus, description of the flowchart in Fig. 15 is omitted. For example, an entry 712 in Fig. 7C is a sortation condition generated in a case where the complete button 1210 is pressed in the state of the screen in Fig. 14 and the flowchart in Fig. 15 is performed.

### [[Process for Production of Sortation condition using image capturing conditions]]

Fig. 16 is a diagram illustrating an example of a screen for sortation condition production using image capturing conditions, which is a screen based on the screen information generated at S411 (S1106) and transmitted at S420. The sortation condition using image capturing information production screen 1601 in Fig. 16 is also referred to as third sortation condition production screen 1601. Any part same as a part included in the first sortation condition production screen 1201 is denoted by the same reference sign and description thereof is omitted. A sortation condition name display region 1602 displays a sortation condition name representing a sortation condition generated with the third sortation condition production screen 1601.

Setting region titles 1603, 1607, 1612, and 1620 each display the title of a setting region achieved by an accordion menu. Opening-closing buttons 1604, 1608, 1613, and 1621 are buttons for switching display and non-display of the accordion menus represented by the respective setting region titles 1603, 1607, 1612, and 1620.

The accordion menu represented by the setting region title 1603 is a region for setting the sortation item value of "image capturing device" and includes check boxes 1605 and 1606 corresponding to the model names of image capturing devices registered to the image transfer apparatus 120 by the user. An image capturing camera list indicating that the model name of the image capturing device corresponding to a checked check box among the check boxes 1605 and 1606 is selected is included in a request to be described later. For example, in a case where the check box 1605 is checked, an image capturing camera list indicating that "EOS R10" is selected is included in the request.

The accordion menu represented by the setting region title 1607 is a region for setting the sortation item value of "image format" and includes check boxes 1609 to 1611 corresponding to recording formats. An image type list indicating that an image type name corresponding to a checked check box among the check boxes 1609 to 1611 is selected is included in the request. For example, in a case where the check box 1609 is checked, an image type list indicating that "JPEG" is selected is included in the request.

The accordion menu represented by the setting region title 1612 is a region for setting the sortation item value of "rating" and includes check boxes 1614 to 1619 corresponding to the values of ratings. A rating list indicating that the value of a rating corresponding to a checked check box among the check boxes 1614 to 1619 is selected is included in the request. For example, in a case where the check box 1614 is checked, an image type list indicating that "5" is selected is included in the request.

The accordion menu represented by the setting region title 1620 is a region for setting the sortation item value of "image capturing time range". A start date setting box 1623 is a region for inputting the start date of the image capturing time range. A start time setting box 1624 is a region for inputting the start time point of the image capturing time range. An end date setting box 1626 is a region for inputting the end date of the image capturing time range. An end time setting box 1627 is a region for inputting the end time point of the image capturing time range. In a case where at least one of check boxes 1622 and 1625 is checked, the value of "image capturing time range" is included in the request. Specifically, in a case where the check box 1622 is checked, a value indicating that the start date and time of the image capturing time range is enabled, and a date and a time point displayed in the start date setting box 1623 and the start time setting box 1624 are included in the request. In a case where the check box 1625 is checked, a value indicating that the end date and time of the image capturing time range is enabled, and a date and a time point displayed in the end date setting box 1626 and the end time setting box 1627 are included in the request.

In a case where press of a complete button 1628 is accepted, the request to generate a sortation condition based on contents input by the user and displayed on the third sortation condition production screen 1601 is transmitted to the image transfer apparatus 120.

Figs. 17A and 17B are flowcharts for detailed description of the sortation condition generation processing at S423 in Fig. 4. In Figs. 17A and 17B, any step of performing the same processing as that of a step in the flowchart in Fig. 13 is denoted by the same number in Figs. 17A and 17B. Thus, description of the flowcharts in Figs. 17A and 17B will be made on any step different from the flowchart in Fig. 13. The flowcharts in Figs. 17A and 17B is started in a case where the request transmitted at S422 upon press of the complete button 1628 in Fig. 16 is received by the image transfer apparatus 120. The request includes the value of the user ID, a condition name displayed in the sortation condition name display region 1602, and the value of "record flag". The request may include the image capturing camera list, the image type list, the rating list, and the value of the image capturing time range described above. The information included in the request is stored in the RAM 203 of the image transfer apparatus 120.

At S1701, the sortation condition generation unit 326 initializes an image capturing camera counter. The following S1702 to S1705 is loop processing performed on an element corresponding to the value of the image capturing camera counter among the elements of the image capturing camera list included in the request.

At S1702, the sortation condition generation unit 326 determines whether all image capturing devices of the image capturing camera list included in the request have been processed. In a case where it is determined that there is any unprocessed image capturing device (NO at S1702), the process proceeds to S1703.

At S1703, the sortation condition generation unit 326 determines whether selection of the current processing target image capturing device is enabled. In other words, it is determined whether the current processing target image capturing device is checked on the third sortation condition production screen 1601. In a case where it is determined that selection of the current processing target image capturing device is enabled (YES at S1703), the process proceeds to S1704. In a case where it is determined that selection of the current processing target image capturing device is disabled (NO at S1703), the process skips S1704 and proceeds to S1705.

At S1704, the sortation condition generation unit 326 adds the value of a device ID corresponding to the processing target image capturing device to the "image capturing device" column in the temporary entry. For example, the image capturing camera counter is zero, the first element of the image capturing camera list is "EOS R5", and selection thereof is enabled. In this case, device ID "DEV001" corresponding to "EOS R5" is obtained from the model table 604 and the device table 603 and added to the "image capturing device" column in the temporary entry.

At S1705, the sortation condition generation unit 326 increments the image capturing camera counter, and the process returns to S1702. In a case where it is determined at S1702 that all image capturing devices have been processed (YES at S1702), the process proceeds to S1706.

At S1706, the sortation condition generation unit 326 initializes the value of an image type counter. The following S1707 to S1710 is loop processing performed on an image type corresponding to the value of the image type counter among image types in the image type list included in the request.

At S1707, the sortation condition generation unit 326 determines whether all image types in the image type list included in the request have been processed. In a case where it is determined that there is any unprocessed image type (NO at S1707), the process proceeds to S1708.

At S1708, the sortation condition generation unit 326 determines whether selection of the current processing target image type is enabled. In other words, it is determined whether the current processing target image type is checked on the third sortation condition production screen 1601. In a case where it is determined that selection of the current processing target image type is enabled (YES at S1708), the process proceeds to S1709. In a case where it is determined that selection of the current processing target image type is disabled (NO at S1708), the process skips S1709 and proceeds to S1710.

At S1709, the sortation condition generation unit 326 adds a value corresponding to the processing target image type to "recording format" column in the temporary entry. For example, the image type counter is zero, the first element of the image type list is "JEPG", and selection thereof is enabled. In this case, "JEPG" is added to "recording format" column in the temporary entry.

At S1710, the sortation condition generation unit 326 increments the image type counter, and the process returns to S1707. In a case where it is determined at S1707 that all image types have been processed (YES at S1707), the process proceeds to S1711.

At S1711, the sortation condition generation unit 326 initializes a rating counter. The following S1712 to S1715 is loop processing performed on a rating corresponding to the value of the rating counter among ratings in the rating list included in the request.

At S1712, the sortation condition generation unit 326 determines whether all ratings in the rating list included in the request have been processed. In a case where it is determined that there is any unprocessed rating (NO at S1712), the process proceeds to S1713.

At S1713, the sortation condition generation unit 326 determines whether selection of the current processing target rating is enabled. In other words, it is determined whether the current processing target rating is checked on the third sortation condition production screen 1601. In a case where it is determined that selection of the current processing target rating is enabled (YES at S1713), the process proceeds to S1714. In a case where it is determined that selection of the current processing target rating is disabled (NO at S1713), the process skips S1714 and proceeds to S1715.

At S1714, the sortation condition generation unit 326 adds a value corresponding to the processing target rating to "rating" column in the temporary entry. For example, the rating counter is zero, the first element of the rating list is "5", and selection thereof is enabled. In this case, "5" is added to "rating" column in the temporary entry.

At S1715, the sortation condition generation unit 326 increments the rating counter, and the process returns to S1712. In a case where it is determined at S1712 that all ratings have been processed (YES at S1712), the process proceeds to S1716.

At S1716, the sortation condition generation unit 326 determines whether selection of the start date and time of the image capturing time range is enabled based on the request. In a case where it is determined that selection of the start date and time of the image capturing time range is enabled (YES at S1716), the process proceeds to S1717. In a case where it is determined that selection of the start date and time of the image capturing time range is disabled (NO at S1716), the process skips S1717 and proceeds to S1718.

At S1717, the sortation condition generation unit 326 holds a value representing the start date and time of the image capturing time range included in the request in "image capturing time range" column in the temporary entry so that the value can be determined to be a value corresponding to the start date and time. For example, the string of "start" in dictionary format is used as a key, and the start date and time is held as its value.

At S1718, the sortation condition generation unit 326 determines whether selection of the end date and time of the image capturing time range is enabled based on the request. In a case where it is determined that selection of the end date and time of the image capturing time range is enabled (YES at S1718), the process proceeds to S1719. In a case where it is determined that selection of the end date and time of the image capturing time range is disabled (NO at S1718), the process skips S1719 and proceeds to S1312.

At S1719, the sortation condition generation unit 326 holds a value representing the end date and time of the image capturing time range included in the request in "image capturing time range" column in the temporary entry so that the value can be determined to be a value corresponding to the end date and time. For example, the string of "end" in dictionary format is used as a key, and the end date and time is stored as its value. Then, the process proceeds to S1312.

For example, an entry 714 in Fig. 7C is a sortation condition generated in a case where the complete button 1628 is pressed in the state of the screen in Fig. 16 and the flowcharts in Figs. 17A and 17B is performed.

### [Process for generation of combined Sortation condition ]

Fig. 18 is a diagram illustrating an example of a screen for producing the combined sortation condition, which is a screen based on the screen information generated at S411 (S1107) and transmitted at S424. The combined sortation condition production screen 1801 in Fig. 18 is also referred to as fourth sortation condition production screen 1801. Any part same as a part included in the first sortation condition production screen 1201, the second sortation condition production screen 1401, or the third sortation condition production screen 1601 is denoted by the same reference sign and description thereof is omitted. A sortation condition name display region 1803 displays a sortation condition name representing a sortation condition generated with the fourth sortation condition production screen 1801.

The fourth sortation condition production screen 1801 includes accordion menus as the above-described setting regions related to object category, blur and exposure determination, image capturing camera, image type, rating, and image capturing time range. Fig. 18 illustrates a state in which all accordion menus are closed. For example, in a case where the opening-closing button 1212 is pressed, the check boxes 1205 to 1207 for sortation by object category are displayed. In a case where the opening-closing button 1214 is pressed, the blur image sortation setting button 1208 is displayed. In a case where press of a complete button 1807 is accepted, a request to generate a sortation condition based on contents input by the user and displayed on the fourth sortation condition production screen 1801 is transmitted to the image transfer apparatus 120 (S426).

In a case where the request transmitted at S426 upon press of the complete button 1807 in Fig. 18 is received by the image transfer apparatus 120, the sortation condition generation processing at S427 in Fig. 4 is started. The combined sortation condition generation processing at S427 in Fig. 4 corresponds to sequential execution of the sortation condition generation using object categories in Fig. 13, the sortation condition generation using blur-exposure correction in Fig. 15, and the sortation condition generation for sortation using image capturing information in Figs. 17A and 17B. Thus, detailed description of the processing is omitted. In the combined sortation condition generation processing, common processes such as obtainment of the user ID, stored of the sortation condition name, and storage of the sortation condition name embedded flag are not executed in duplication.

### [[Main screen after sortation condition addition]]

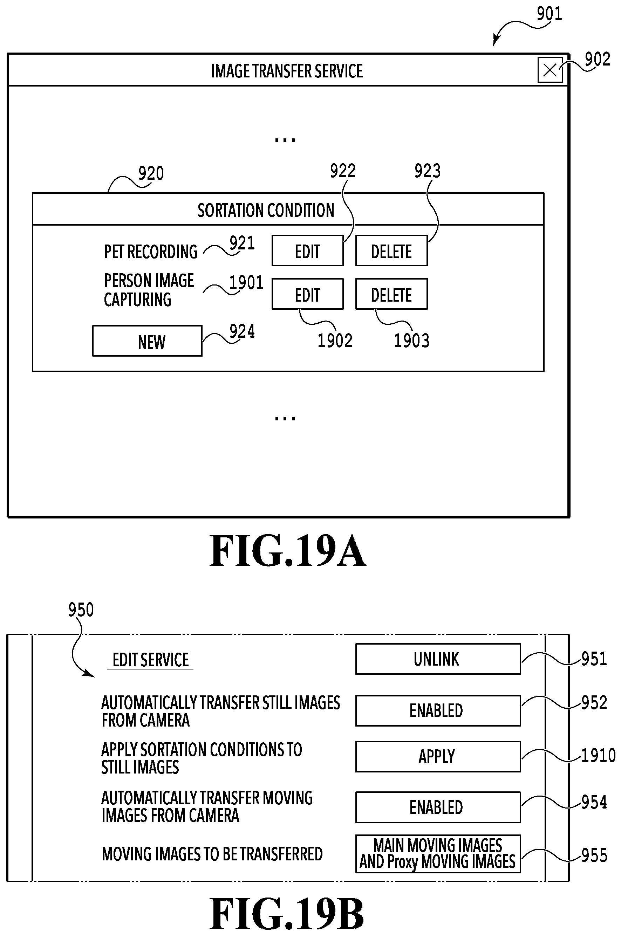

Fig. 19A is a diagram illustrating the main screen 901 after sortation conditions are newly generated based on an instruction from the user through the sortation condition production screens in Figs. 12, 14, 16, and 18. It is assumed that the complete button 1402 on the second sortation condition production screen 1401 in Fig. 14 is pressed and the flowchart in Fig. 15 is executed, and accordingly, a new sortation condition with the sortation condition name of "person image capturing" is generated. In this case, as illustrated in Fig. 19A, in the sortation condition management region 920, the sortation condition name of "person image capturing" representing the sortation condition newly generated this time is newly displayed in a sortation condition name display region 1901. A sortation condition edit screen call button 1902 is a button for calling a sortation condition edit screen for editing the newly added sortation condition of "person image capturing". A sortation condition delete button 1903 is a button for deleting the newly added sortation condition of "person image capturing".

### [Generation of relational information]

Figs. 20A and 20B are diagrams illustrating an example of the relational information generation screen generated at S503 in Fig. 5. The relational information generation screen 2001 of the present embodiment is generated for each external service registered as a transfer destination. The relational information generation screen is a screen for associating a target transfer destination with a sortation condition selected by the user on the screen and adding a new entry (relational information) to the relational information table 803 and for editing the relational information. For example, in a case where the sortation condition application button 953 on which "not apply" is displayed is pressed on the main screen 901 in Fig. 9, the relational information generation screen for a target external service corresponding to the button is displayed. In a case where generated relational information is to be edited, transition can be made from a non-illustrated screen to the relational information generation screen 2001.

Fig. 20A is the relational information generation screen 2001 displayed in a case where one or more sortation conditions are registered to the image transfer apparatus 120. A back button 2002 is a button closing the relational information generation screen 2001 and returning to the main screen 901 as the caller.

A transfer destination external service name display region 2003 is a region for displaying the name of an external service (transfer destination) to be associated with a sortation condition. In a case where the sortation condition application button 953 for a target external service "edit service" is pressed on the main screen 901 and transition is made to the relational information generation screen 2001, "edit service" is displayed in the transfer destination external service name display region 2003.

A radio button 2004 is a radio button for the user to instruct not to associate a sortation condition with the external service displayed in the transfer destination external service name display region 2003. The radio button 2004 is also referred to as sortation condition non-application radio button. A radio button 2005 is a radio button for the user to instruct to associate a sortation condition with the external service displayed in the transfer destination external service name display region 2003. The radio button 2005 is also referred to as sortation condition application radio button. The selection states of the radio buttons 2004 and 2005 are exclusively controlled so that one of them is not selected in a case where the other is selected.

Check boxes 2006 to 2008 are each a check box for selecting a sortation condition to be associated with the external service. The check boxes 2006 to 2008 correspond to candidates for sortation conditions to be associated with the external service. It is assumed that two sortation conditions are generated by the above-described sortation condition generation processing and registered to the sortation condition table 702. In this case, the two check boxes 2006 and 2007 each correspond to either of the generated sortation conditions. It is assumed that the first check box 2006 corresponds to a first sortation condition registered to the sortation condition table, and the second check box 2007 corresponds to a second sortation condition registered to the sortation condition table.

The first check box 2006 is a check box for associating the first sortation condition with the external service displayed in the transfer destination external service name display region 2003. In a case where the first check box 2006 is checked, an entry is generated in the relational information table 803 so that images that match the first sortation condition are transferred to the external service displayed in the transfer destination external service name display region 2003. In a case where the first check box 2006 is not checked, the first sortation condition is not applied. In the example of Fig. 20A, the first sortation condition is a sortation condition with the sortation condition name of "pet recording". The second check box 2007 is a check box for associating the second sortation condition with the external service displayed in the transfer destination external service name display region 2003. In a case where the second check box 2007 is checked, an entry is generated in the relational information table 803 so that images that match the second sortation condition are transferred to the external service displayed in the transfer destination external service name display region 2003. In a case where the second check box 2007 is not checked, the second sortation condition is not applied. In the example of Fig. 20A, the second sortation condition is a sortation condition with the sortation condition name of "person image capturing".

The third check box 2008 is a check box for associating "out of sortation conditions" with the external service displayed in the transfer destination external service name display region 2003. In a case where the third check box 2008 is checked, an entry is generated in the relational information table 803 so that images out of sortation conditions are transferred to the external service displayed in the transfer destination external service name display region 2003. The images out of sortation conditions mean images that match none of sortation conditions registered to the sortation condition table 702. In the case of Fig. 20A, the images out of sortation conditions are images that match none of the first and second sortation conditions. In the present embodiment, it is assumed that the value of a sortation condition ID indicating "out of sortation conditions" is "SRT999".

The check boxes 2006 to 2008 are controlled to allow check by the user in a case where the radio button 2005 is selected. Screen control is performed so that check of the first check box 2006 and the second check box 2007 is canceled in a case where the third check box 2008 is checked. Moreover, screen control is performed so that check of the third check box 2008 is canceled in a case where any of the first check box 2006 and the second check box 2007 is checked. In the present embodiment, check of the third check box 2008 is canceled in the above-described case, but the check does not necessarily need to be canceled.
An OK button 2009 is a button for accepting settings input by the user.

Fig. 20B is an example of a relational information generation screen 2021 displayed in a case where the sortation condition generation processing is yet to be executed and no sortation condition table 702 is stored in the image transfer apparatus 120. A message 2022 that prompts the user to generate sortation conditions is displayed on the relational information generation screen 2021 and displayed to prompt the user to generate sortation conditions. A back button 2023 is a back button for closing the relational information generation screen and returning to transition to the main screen 901 as the caller.

Figs. 21A and 21B are flowcharts for detailed description of S503 in Fig. 5. Processing of generating the relational information generation screen 2001 as in Fig. 20A will be described below with reference to the flowcharts in Figs. 21A and 21B. The description with reference to the flowcharts of Figs. 21A and 21B will be made on a method of generating the relational information generation screen 2001 so that the state of relational information registered by the user is reproduced. In other words, the description will be made on a method of displaying the relational information generation screen on which any sortation condition associated with a target external service is checked. Thus, with the flowcharts in Figs. 21A and 21B, it is possible to provide the relational information generation screen on which the user can check current setting and easily edit relational information.

The flowcharts in Figs. 21A and 21B is started in a case where the request transmitted from the terminal 107 upon press of a sortation condition application button on which "not apply" is displayed, such as the sortation condition application button 953 on the main screen 901, is received by the image transfer apparatus 120. Alternatively, the flowcharts in Figs. 21A and 21B is started in a case where the request transmitted from the terminal 107 upon instruction performed by the user to edit generated relational information of an external service on a non-illustrated screen is received by the image transfer apparatus 120. Alternatively, a "button for editing generated relational information" may be disposed on the main screen 901, and the flowcharts in Figs. 21A and 21B may be started upon press of the button. The request transmitted from the terminal 107 includes the values of the user ID, an external service ID indicating an external service at the transfer destination, and an application state flag, and each information is stored in the RAM 203 of the image transfer apparatus 120. The application state flag indicates whether to apply a sortation condition in a case where an image is transferred to the transfer destination. The value of the application state flag is "true" in a case where application of a sortation condition at image transfer to the transfer destination is set, or is "false" in a case where application of a sortation condition is not set.

At S2101, the screen generation unit 325 obtains the value of the user ID as a processing target of the present flowchart, which is included in the request. In description of subsequent steps, it is assumed that the obtained user ID is "USR001".

At S2102, the screen generation unit 325 obtains the value of the external service ID as a processing target of the present flowchart, which is included in the request. For example, in a case where the sortation condition application button 953 is pressed, an external service ID "SVC002" corresponding to the edit service is included in the request, and accordingly, "SVC002" is obtained at S2102. However, in description of subsequent steps, it is assumed that the external service ID obtained at S2102 is "SVC001".

At S2103, the screen generation unit 325 obtains an external service name associated with the value of the processing target external service ID from the external service table 605.

At S2104, the screen generation unit 325 sets the external service name obtained at S2103 to be displayed in the transfer destination external service name display region 2003 on the relational information generation screen 2001.

At S2105, the screen generation unit 325 obtains the values of all sortation condition IDs associated with the value of the processing target user ID from the sortation condition table 702 and generates their list. Specifically, the sortation condition table 702 is scanned to generate a list with elements that are the values of sortation condition IDs included in an entry in which the processing target user ID "USR001" is held in the sortation condition table 702. This list is referred to as a sortation condition list in the present flowchart. It is assumed that the sortation condition list of the present flowchart further includes the value of a sortation condition ID representing "out of sortation conditions". For example, in the case of the sortation condition table 702 in Fig. 7A, "SRT001" and "SRT002" are obtained from "sortation condition ID" column of an entry with "USR001" held in the user ID column. It is also assumed that the sortation condition ID representing "out of sortation conditions" is determined to be "SRT999". In this case, the sortation condition list with three elements of "SRT001", "SRT002", and "SRT999" is obtained at S2105. Instead of "SRT999", an ID representing "out of sortation conditions" may be set to the value of a sortation condition in the relational information table 803.

At S2106, the screen generation unit 325 obtains the value of the application state flag included in the request.

At S2107, the screen generation unit 325 determines whether application of a sortation condition for an external service represented by the value of the processing target external service ID is designated by the user. Specifically, it is determined whether the value of the application state flag obtained at S2106 is "true", and the following processing is switched in accordance with the value of the application state flag. In a case where it is determined that the application state flag is "false" (NO at S2107), the process proceeds to S2123.

At S2123, the screen generation unit 325 sets to display the relational information generation screen 2001 on which the radio button 2004 is selected and the radio button 2005 is not selected. Then, the process proceeds to S2124.

In a case where it is determined that the application state flag is "true" (YES at S2107), the process proceeds to S2108. At S2108, the screen generation unit 325 sets to display the relational information generation screen 2001 on which the radio button 2004 is not selected and the radio button 2005 is selected. Then, the process proceeds to S2109.

At S2109, the screen generation unit 325 obtains the value of a transfer destination ID associated with the value of the processing target user ID and the value of the processing target external service ID from the transfer destination table 801. Specifically, the value of a transfer destination ID associated with the user ID "USR001" and the external service ID "SVC001" in the transfer destination table 801 is obtained. The obtained value is set as the value of a transfer destination ID as a processing target of the present flowchart. In description of subsequent steps, it is assumed that the obtained transfer destination ID is "TRN001".

At S2110, the screen generation unit 325 obtains the value of a relational information ID associated with the value of the processing target user ID and the value of the processing target transfer destination ID. Specifically, the value of a relational information ID associated with the user ID of "USR001" and the transfer destination ID of "TRN001" in the relational information table 803 is obtained. The obtained value is set as the value of a relational information ID as a processing target of the present flowchart. In description of subsequent steps, it is assumed that the obtained relational information ID is "REL001".

At S2111, the screen generation unit 325 obtains the values of all sortation condition IDs associated with the relational information ID "REL001" as a processing target of the present flowchart in the relational information table 803 and generates their list. The list with elements that are the values of sortation condition IDs obtained at S2111 is referred to as "related sortation condition list". The sortation condition IDs as elements of the related sortation condition list are referred to as related sortation condition IDs. For example, in a case where the relational information table 803 is in the state of Fig. 8C, the sortation condition ID "SRT002" held in "sortation condition" column of an entry with "REL001" held in a relational information ID column is obtained as a related sortation condition ID. In other words, the "related sortation condition list" with an element that is "SRT002" is obtained.

At S2112, the screen generation unit 325 initializes a sortation condition counter. The following S2113 to S2121 is loop processing performed on an element (sortation condition ID value) corresponding to the value of the sortation condition counter among the elements of the sortation condition list obtained at S2105.

At S2113, the screen generation unit 325 determines whether all elements included in the sortation condition list obtained at S2105 have been processed. In a case where there is any unprocessed element among the elements of the sortation condition list (NO at S2113), the process proceeds to S2114.

At S2114, the screen generation unit 325 initializes a related sortation condition counter. The following S2115 to S2119 is loop processing performed on an element (value of the related sortation condition ID) corresponding to the value of the related sortation condition counter among the elements of the related sortation condition list obtained at S2111.

At S2115, the screen generation unit 325 determines whether all elements included in the related sortation condition list obtained at S2111 have been processed. In a case where there is any unprocessed element among the elements constituting the related sortation condition list (NO at S2115), the process proceeds to S2116.

At S2116, the screen generation unit 325 obtains an element of the related sortation condition list, which corresponds to the current value of the related sortation condition counter, as a processing target element. For example, in a case where the related sortation condition counter is zero, the value of a related sortation condition ID as the first element of the related sortation condition list is obtained. Then, it is determined whether the value of the current processing target related sortation condition ID is the value "SRT999" of the sortation condition ID representing "out of sortation conditions". In a case where the processing target element is determined to be the value of the sortation condition ID representing "out of sortation conditions" (YES at S2116), the process exits the loop processing and proceeds to S2122.

At S2122, the screen generation unit 325 sets to select the option for "out of sortation conditions" on the relational information generation screen 2001. In other words, the relational information generation screen 2001 is set to a state in which the third check box 2008 is checked. In this case, the first check box 2006 and the second check box 2007 may be set to unchecked states. Then, the process proceeds to S2124.

In a case where it is determined that the value of the current processing target related sortation condition ID does not match the value of the sortation condition ID representing "out of sortation conditions" (NO at S2116), the process proceeds to S2117.

At S2117, the screen generation unit 325 determines whether the value of the current processing target sortation condition ID in the sortation condition list matches the value of the current processing target related sortation condition ID in the related sortation condition list. In a case where the values match, it is meant that the value of the current processing target sortation condition ID in the sortation condition list obtained at S2105 is already associated with the value of the processing target transfer destination ID in the present flowchart. In this case (YES at S2117), the process proceeds to S2118.

At S2118, the screen generation unit 325 obtains, from the sortation condition table 702, a sortation condition name corresponding to the value of the current processing target sortation condition ID in the sortation condition list obtained at S2105. Then, the screen generation unit 325 sets to display the relational information generation screen 2001 on which a check box corresponding to the obtained sortation condition name is checked. Then, the process exits the loop processing at S2115 to S2119 and proceeds to S2121.

In a case where it is determined that the values do not match (NO at S2117), the value of the current processing target sortation condition ID is not associated with the value of the processing target transfer destination ID, and accordingly, the process skips S2118 and proceeds to S2119.

At S2119, the screen generation unit 325 increments the value of the related sortation condition counter. Then, the process returns to S2115. At S2115, in a case where it is determined that all elements included in the related sortation condition list have been processed (YES at S2115), the process proceeds to S2120.

At S2120, the screen generation unit 325 obtains, from the sortation condition table 702, a sortation condition name corresponding to the value of the current processing target sortation condition ID in the sortation condition list obtained at S2105. Then, the screen generation unit 325 sets to display the relational information generation screen 2001 on which a check box corresponding to the obtained sortation condition name is not checked.

For example, it is assumed that the sortation condition table 702 holds the values of sortation condition IDs corresponding to the sortation condition names of "pet recording" and "person image capturing" as sortation conditions associated with the processing target user. In this case, the sortation condition list obtained at S2105 includes, as elements, the values of three sortation condition IDs corresponding to "pet recording", "person image capturing", and "out of sortation conditions". It is also assumed that only the value of the sortation condition ID of "person image capturing" is associated with the value of the processing target transfer destination ID in the relational information table 803. In this case, only the value of the sortation condition ID of "person image capturing" is included as an element in the related sortation condition list obtained at S2111. Then, in a case where the value of the sortation condition ID of "person image capturing" in the sortation condition list becomes the processing target of the loop processing at S2113 to S2121, it is determined at S2117 that the value of the sortation condition ID of "person image capturing" in the related sortation condition list matches the element. In this case, the process proceeds to S2118, and setting is performed to display the relational information generation screen 2001 on which the second check box 2007 corresponding to "person image capturing" is checked as in Fig. 20A. Consider a case where the value of the sortation condition ID of "pet recording" in the sortation condition list becomes the processing target of the loop processing at S2113 to S2121. In this case, it is not determined at S2117 that the value matches an element included in the related sortation condition list, and accordingly, the process transitions to S2120 without transitioning to S2118. In this case, setting is performed to display the relational information generation screen 2001 on which the first check box 2006 corresponding to "pet recording" is not checked as in Fig. 20A. Similarly, setting is performed to display the relational information generation screen 2001 on which the third check box 2008 is not checked.

At S2121, the screen generation unit 325 increments the sortation condition counter. Then, the process returns to S2113.

At S2113, in a case where it is determined that all elements of the sortation condition list have been processed (YES at S2113), the process proceeds to S2124.

At S2124, the screen generation unit 325 sets an OK button on the relational information generation screen 2001. Then, the present flowchart ends, and information set on the relational information generation screen 2001 is transmitted to the terminal 107. Then, the relational information generation screen 2001 is displayed on the terminal 107. In a case where press of the OK button 2009 on the relational information generation screen 2001 is accepted, a request to generate relational information based on contents displayed on the relational information generation screen 2001 is transmitted to the image transfer apparatus 120.

Fig. 22 is a flowchart for detailed description of S507 in Fig. 5A. Processing of associating a sortation condition with a transfer destination selected by the user through the relational information generation screen 2001, and processing of deleting relational information from the relational information table 803 will be described below with reference to Fig. 22. The flowchart in Fig. 22 is started in a case where the request transmitted from the terminal 107 in response to press of the OK button 2009 on the relational information generation screen 2001 in Fig. 20A is received by the image transfer apparatus 120. Alternatively, the flowchart in Fig. 22 is started in a case where the request transmitted from the terminal 107 upon press of the sortation condition application button 943 on which "apply" is displayed on the main screen 901 in Fig. 9 is received by the image transfer apparatus 120.

The request transmitted from the terminal 107 includes the value of the user ID representing a user having logged in, the value of an external service ID, and the value of a sortation condition application flag. The request transmitted upon press of the OK button 2009 on the relational information generation screen 2001 as in Fig. 20A further includes a sortation condition list with elements that are the values of sortation condition IDs corresponding to sortation conditions selected by the user on the relational information generation screen 2001. The value of the external service ID included in the request is the value of an external service ID as a processing target. The request transmitted upon press of the sortation condition application button 943 on which "apply" is displayed on the main screen 901 in Fig. 9 includes the value of an external service ID corresponding to a setting region in which the sortation condition application button 943 is included. The request transmitted upon press of the OK button 2009 on the relational information generation screen 2001 as in Fig. 20A includes the value of an external service ID corresponding to an external service name displayed in the transfer destination external service name display region 2003 on the relational information generation screen 2001. Each information included in the request is stored in the RAM 203 of the image transfer apparatus 120.

The value of the application state flag indicates whether to apply sortation conditions in a case where an image is transferred to a transfer destination indicated by the value of an external service ID included in the request. The value of "sortation condition application flag" included in the request transmitted upon press of the sortation condition application button 943 on which "apply" is displayed on the main screen 901 in Fig. 9 is "false". The value of "sortation condition application flag" included in the request transmitted upon press of the OK button 2009 on the relational information generation screen 2001 as in Fig. 20A is "true".

At S2201, the relational information generation unit 327 obtains the value of the processing target user ID included in the request. In description of subsequent steps, it is assumed that the processing target user ID is "USR001".

At S2202, the relational information generation unit 327 obtains the value of the processing target external service ID included in the request. For example, in a case where the OK button 2009 on the relational information generation screen 2001 of "edit service" in Fig. 20A is pressed, the external service ID "SVC002" corresponding to "edit service" as illustrated in Fig. 6E is obtained. In description of subsequent steps, it is assumed that the processing target external service ID is "SVC002".

At S2203, the relational information generation unit 327 obtains the value of a transfer destination ID associated with the value of the processing target user ID and the value of the processing target external service ID from the transfer destination table 801. For example, "TRN002" is obtained from the transfer destination table 801 in Fig. 8A as the value of a transfer destination ID associated with the processing target user ID "USR001" and the processing target external service ID "SVC002". The obtained transfer destination ID is set as the value of the processing target transfer destination ID of the present flowchart. In description of S2204 to S2210, it is assumed that the processing target transfer destination ID is "TRN002".

At S2204, the relational information generation unit 327 determines whether sortation condition application is designated. Specifically, the relational information generation unit 327 determines whether the value of "sortation condition application flag" included in the request received from the terminal 107 is "true". In a case where it is determined that the sortation condition application flag is "true" (YES at S2204), the process proceeds to S2205.

At S2205, the relational information generation unit 327 initializes the sortation condition counter. The following S2206 to S2210 is loop processing performed on an element corresponding to the value of the sortation condition counter among the elements of the sortation condition list included in the received request.

At S2206, the relational information generation unit 327 determines whether all elements constituting the sortation condition list included in the request have been processed. Specifically, the determination is performed by comparing the value of the sortation condition counter and the list length of the sortation condition list. In a case where there is any unprocessed element of the sortation condition list (NO at S2206), the process proceeds to S2207. In a case where processing has been performed on all elements constituting the sortation condition list (YES at S2206), the present flowchart ends.

At S2207, the relational information generation unit 327 obtains the value of a processing target sortation condition ID corresponding to the sortation condition counter from the sortation condition list.

At S2208, the relational information generation unit 327 generates an entry (relational information) in which the value of the user ID obtained at S2201, the value of transfer destination ID obtained at S2203, and the value of the current processing target sortation condition ID are associated. In a case where the value of the current processing target sortation condition ID is "SRT002", an entry (relational information) is generated by associating "USR001", "SRT002", and "TRN002".

At S2209, the relational information generation unit 327 adds the entry (relational information) generated at S2208 to the relational information table 803. In this case, the value of the relational information ID is held in the entry. As a result, a new entry is added to the final row as illustrated in Fig. 8D.

At S2210, the relational information generation unit 327 increments the sortation condition counter so that the next element among the elements of the sortation condition list becomes a processing target. Then, the process returns to S2206.

Fig. 19B is a diagram illustrating part of the main screen. Fig. 19B illustrates the main screen after sortation conditions are associated with the edit service through execution of Fig. 22 upon press of the OK button 2009 on the relational information generation screen 2001 to which the main screen 901 in Fig. 9 has transitioned upon press of the sortation condition application button 953. Since sortation conditions are associated, "apply" indicating the association with sortation conditions is displayed on a sortation condition application button 1910 in Fig. 19B unlike the sortation condition application button 953 in Fig. 9.

A transfer destination selected by a user may be associated with a sortation condition generated by another user. For example, sortation conditions generated by users belonging to a group may be shared by the users belonging to the group.

At S2204, in a case where it is determined that the sortation condition application flag is "false" (NO at S2204), the process proceeds to S2211.

At S2211, the relational information generation unit 327 initializes a relational information counter. The following S2212 to S2215 is loop processing performed on an entry corresponding to the value of the relational information counter among the entries of the relational information table 803. The relational information counter is initialized so that the first entry of the relational information table 803 is to be processed first.

At S2212, the relational information generation unit 327 determines whether all entries of the relational information table 803 have been processed. In a case where it is determined that there is any unprocessed entry (NO at S2212), the process proceeds to S2213.

At S2213, the relational information generation unit 327 obtains a user ID value and a transfer destination ID value included in a processing target entry in the relational information table 803. Then, it is determined whether the obtained user ID value matches the user ID value "USR001" obtained at S2201 and the obtained transfer destination ID value matches the transfer ID value "TRN002" obtained at S2203. It is meant that a deletion target entry is found in a case where the values match, or it is meant that no deletion target entry is found in a case where the values do not match. In a case where it is determined that the values match (YES at S2213), the process proceeds to S2214.

At S2214, the relational information generation unit 327 deletes the current processing target entry in the relational information table 803 from the relational information table 803. In other words, association of the processing target transfer destination with sortation conditions is canceled for the processing target user. Then, the present flowchart ends. Accordingly, the sortation processing is not performed for image transfer to an external service represented by the processing target transfer destination ID.

At S2213, in a case where it is determined that the values do not match (NO at S2213), the process proceeds to S2215. At S2215, the relational information generation unit 327 increments the relational information counter so that the next entry among the entries of the relational information table becomes a processing target entry. Then, the process returns to S2212. At S2212, in a case where it is determined that all entries have been processed (YES at S2212), the present flowchart ends.

### [Sortation processing]

Fig. 23 is a flowchart for detailed description of the sortation processing at S516 in Fig. 5B. The flowchart in Fig. 23 is started in a case where the analysis processing (S515) on an image transmitted from the image capturing device 110 is completed. A request received by the image transfer apparatus 120 together with the image includes at least the value of a user ID representing the user of the image capturing device 110 and the value of an image ID representing the image transmitted from the image capturing device at S514. It is assumed that each information included in the request is stored in the RAM 203 of the image transfer apparatus 120.

At S2301, the sortation unit 328 obtains the value of the user ID included in the request. The value of the user ID obtained at the present step is set as the value of the processing target user ID in the present flowchart.

At S2302, the sortation unit 328 obtains the value of the image ID included in the request. The value of the image ID obtained at the present step is set as the value of the processing target image ID of the present flowchart. In other words, the image transmitted from the image capturing device at S514 is set as the processing target.

At S2303, the sortation unit 328 initializes an object that records the result of the sortation processing on the image represented by the value of the processing target image ID. This object is referred to as "sortation result" of the value of the processing target image ID.

At S2304, the sortation unit 328 obtains the values of all sortation conditions ID associated with the value of the processing target user ID from the sortation condition table 702 and generates a list with elements that are the obtained sortation conditions ID values. In the present flowchart, this list is referred to as sortation condition list.

At S2305, the sortation unit 328 initializes the sortation condition counter. The following S2306 to S2315 is loop processing performed on an element (sortation condition ID value) corresponding to the value of the sortation condition counter among the elements of the sortation condition list obtained at S2304. The sortation condition counter is initialized so that the first element of the sortation condition list is to be processed first.

At S2306, the sortation unit 328 determines whether all elements included in the sortation condition list obtained at S2304 have been processed. In a case where it is determined that there is any unprocessed element (NO at S2306), the process proceeds to S2307.

At S2307, the sortation unit 328 obtains the value of a processing target sortation condition ID that is the processing target element among the elements of the sortation condition list.

At S2308, the sortation unit 328 obtains sortation item values associated with the value of the processing target sortation condition ID obtained at S2307 from the sortation condition table 702.

At S2309, the sortation unit 328 obtains an analysis result associated with the value of the processing target image ID obtained at S2302 from the management unit 323. In other words, the result of the analysis processing executed at S515 for the image represented by the processing target image ID is obtained.

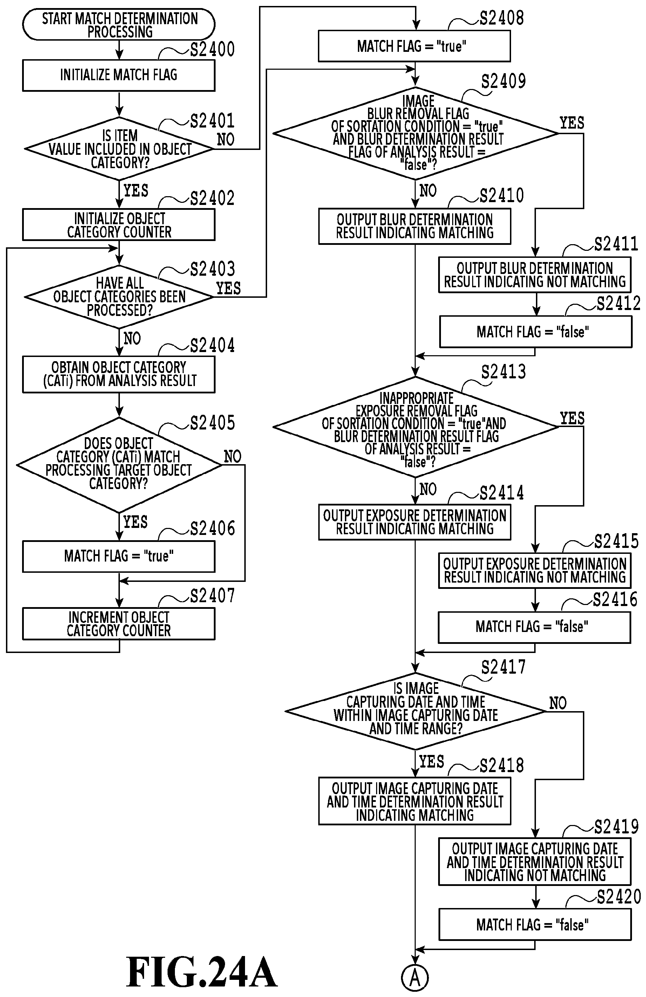

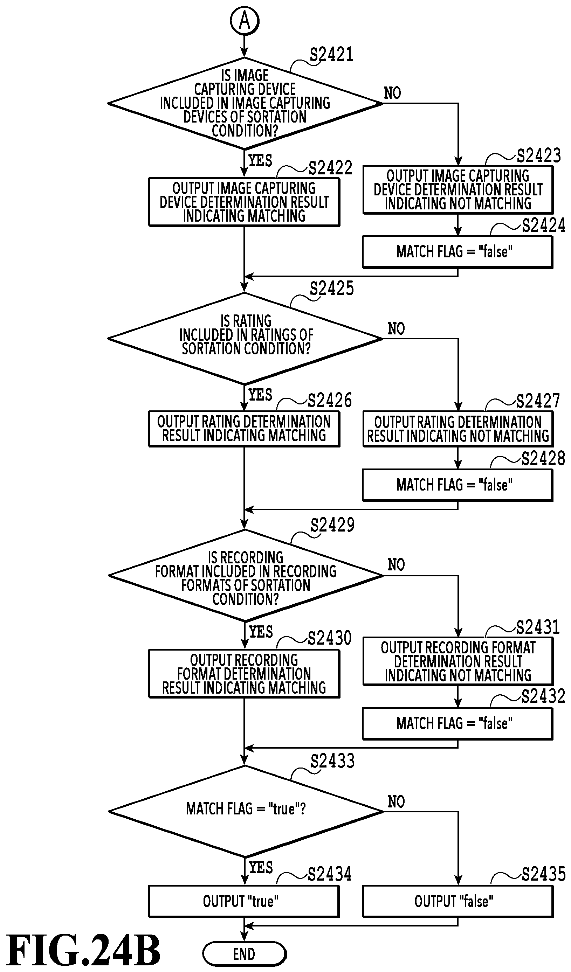

At S2310, the sortation unit 328 performs match determination processing of outputting "true" in a case where the analysis result obtained at S2309 matches all sortation item values associated with the processing target sortation condition ID or outputting "false" otherwise. The match determination processing at S2310 will be described later in detail with reference to Figs. 24A and 24B.

At S2311, the sortation unit 328 determines whether "true" is output in the match determination processing. In a case where it is determined that "true" is output in the match determination processing (YES at S2311), the process proceeds to S2312. In a case where it is determined that "false" is output in the match determination processing, the process skips S2312 to 2314 and proceeds to S2315.

At S2312, the sortation unit 328 holds the value of the current processing target sortation condition ID in the sortation result obtained at S2303. For example, the value of the current processing target sortation condition ID is "SRT001". In this case, "SRT001" is held in the sortation result.

At S2313, the sortation unit 328 obtains the value of the sortation condition name embedded flag associated with the value of the processing target sortation condition ID from the sortation condition table 702. Then, it is determined whether the obtained value is "true". In a case where it is determined that the obtained value is "true" (YES at S2313), the process proceeds to S2314. In a case where the obtained value is "false" (NO at S2313), the process skips S2314 and proceeds to S2315.

At S2314, the sortation unit 328 performs processing of writing the sortation condition name corresponding to the value of the processing target sortation condition ID to metadata such as Exif of the image represented by the processing target image ID. Then, the process proceeds to S2315.

At S2315, the sortation unit 328 increments the sortation condition counter, and the process returns to S2306.

At S2306, in a case where it is determined that all elements of the sortation condition list have been processed (YES at S2306), the process proceeds to S2316.

At S2316, the sortation unit 328 determines whether the value of the sortation condition ID is held in the sortation result. In a case where it is determined that the value of the sortation condition ID is held in the sortation result (YES at S2316), the process skips S2317 to S2319 and proceeds to S2320. In a case where it is determined that the value of the sortation condition ID is not held in the sortation result (NO at S2316), the process proceeds to S2317.

At S2317, the sortation unit 328 holds the value of the sortation condition ID corresponding to "out of sortation conditions" in the sortation result obtained at S2303. In a case where the value of the sortation condition ID is not held in the sortation result as a result of the loop processing at S2306 to S2315, it is meant that the image represented by the processing target image ID does not match none of the sortation conditions registered to the sortation condition table 702. Thus, the image represented by the processing target image ID is processed so that it can be understood that it is out of sortation conditions. For example, in a case where the value of the sortation condition ID corresponding to "out of sortation conditions" is "SRT999", "SRT999" is held in the sortation result. The reason why the value of the sortation condition ID corresponding to "out of sortation conditions" holds in the sortation result is that in a case where transfer of images out of sortation conditions to an external service is set, images out of sortation conditions can be transferred to a designated transfer destination in the following transfer determination processing.

At S2318, the sortation unit 328 obtains the value of the sortation condition name embedded flag associated with the value of the processing target sortation condition ID from the sortation condition table 702. Then, it is determined whether the obtained value is "true". In a case where it is determined that the obtained value is "true" (YES at S2318), the process proceeds to S2319. In a case where the obtained value is "false" (NO at S2318), the process skips S2319 and proceeds to S2320.

At S2319, the sortation unit 328 performs processing of writing a value representing "out of sortation conditions" to metadata such as Exif of the image represented by the processing target image ID. For example, a string such as "out of sortation conditions" is written to the metadata. Then, the process proceeds to S2320.

At S2320, the management unit 323 associates the sortation result generated through the present flowchart with the value of the processing target image ID of the present flowchart and stores them in a storage unit. In other words, the data is stored in a format with which the sortation result can be referred by the value of the image ID. For example, the value of the processing target image ID is included in part of a file path or a file name. Alternatively, the value of the processing target image ID may be stored in association with a file path so that the file path can be searched by using the value of the image ID as a key.

### [Flow of match determination processing at S2310]

Figs. 24A and 24B are flowcharts for detailed description of the match determination processing executed at S2310.

At S2400, the sortation unit 328 initializes a match flag. The match flag is a flag indicating whether the analysis result associated with the value of the processing target image ID of the flowchart in Fig. 23 satisfies the current processing target sortation condition. The value of the match flag being "true" indicates that the analysis result and the sortation condition match. The value of the match flag being "false" indicates that the analysis result and the sortation condition do not match. The initial value of the match flag is "false".

At S2401, the sortation unit 328 determines whether the value of the processing target sortation condition ID is associated with the value of an object category ID in the sortation condition table 702. In a case where the value of an object category ID is held in the object category column like the entry 711 in Fig. 7B, it is determined that the value of the processing target sortation condition ID is associated with the value of an object category ID. In this case (YES at S2401), the process proceeds to S2402.

At S2402, the sortation unit 328 initializes the object category counter. The sortation unit 328 obtains an object category list with elements that are the values of object category IDs associated with the value of the processing target sortation condition ID in the sortation condition table 702. The following S2403 to S2407 is loop processing performed on an element (object category ID value) corresponding to the value of the object category counter among the elements of the obtained object category list.

At S2403, the sortation unit 328 determines whether all elements included in the object category list have been processed. In a case where it is determined that there is any unprocessed element (NO at S2403), the process proceeds to S2404.

At S2404, the sortation unit 328 obtains the value of an object category ID from the analysis result associated with the value of the processing target image ID of the flowchart in Fig. 23. The obtained value of the object category ID is referred to as CATi. In other words, CATi is a value representing the category of an object included in the image represented by the value of the processing target image ID.

At S2405, the sortation unit 328 determines whether the obtained CATi matches the value of the current processing target object category ID. In a case where it is determined that the values match, objects in the image represented by the value of the processing target image ID include a sortation target object. In this case (YES at S2405), the process proceeds to S2406.

At S2406, the sortation unit 328 sets the match flag to "true". Then, the process proceeds to S2407.

In a case where it is determined that the values do not match (NO at S2405), the process skips S2406 and proceeds to S2407. At S2407, the sortation unit 328 increments the object category counter. Then, the process returns to S2403. At S2403, in a case where it is determined that all elements of the object category list have been processed (YES at S2403), the process proceeds to S2409.

In a case where no value of an object category ID is held in the object category column like the entries 712 and 714 in Fig. 7B, it is determined that the value of the processing target sortation condition ID is associated with no value of an object category ID. In this case (NO at S2401), the process proceeds to S2408. At S2408, the sortation unit 328 changes the match flag to "true". Then, the process proceeds to S2409.

At S2409, the sortation unit 328 determines whether an image blur removal value associated with the value of the processing target sortation condition ID is "true" and the blur determination result in the analysis result associated with the value of the processing target image ID "is "false". In other words, it is determined whether the current processing target sortation condition sorts an image without blur and the image represented by the value of the processing target image ID is an image with blur. In a case where YES is determined at S2409, the process proceeds to S2411. At S2411, the sortation unit 328 outputs that the result of the blur determination indicates no matching. Then at S2412, the sortation unit 328 changes the match flag to "false". Then, the process proceeds to S2413.

In a case where NO is determined at S2409, the process proceeds to S2410. However, in a case where no value is held in "image blur removal" column like the entry 714 in Fig. 7B or "image blur removal" column value associated with the value of the processing target sortation condition ID is "false", the process skips S2410 and proceeds to S2413. At S2410, the sortation unit 328 outputs that the result of the blur determination indicates matching.

At S2413, the sortation unit 328 determines whether an exposure inappropriate removal value associated with the value of the processing target sortation condition ID is "true" and the exposure determination result in the analysis result associated with the value of the processing target image ID is "false". In other words, it is determined whether the current processing target sortation condition sorts an image without inappropriate exposure and the image represented by the value of the processing target image ID is an image with inappropriate exposure. In a case where YES is determined at S2413, the process proceeds to S2415. At S2415, the sortation unit 328 outputs that the result of the exposure determination indicates no matching. Then at S2416, the sortation unit 328 changes the match flag to "false". Then, the process proceeds to S2417.

In a case where NO is determined at S2413, the process proceeds to S2414. However, in a case where no value is held in "exposure inappropriate removal" column like the entry 714 in Fig. 7B or "exposure inappropriate removal" column value associated with the value of the processing target sortation condition ID is "false", the process skips S2414 and proceeds to S2417. At S2414, the sortation unit 328 outputs that the result of the exposure determination indicates matching.

At S2417, the sortation unit 328 determines whether the image capturing date and time is within the image capturing time range of the processing target sortation condition. Specifically, it is determined whether the image capturing date and time of the image represented by the processing target image ID is within the image capturing time range associated with the value of the processing target sortation condition ID in the sortation condition table 702. In a case where it is determined that the image capturing date and time is within the image capturing time range of the sortation condition (YES at S2417), the process proceeds to S2418. At S2418, the sortation unit 328 outputs that the result of the image capturing date and time determination indicates matching. Then, the process proceeds to S2421. In a case where no value is held in "image capturing time range" column like the entry 711 in Fig. 7B, the process skips S2418 to S2420 and proceeds to S2421.

In a case where it is determined that the image capturing date and time is not within the image capturing time range of the sortation condition (NO at S2417), the process proceeds to S2419. At S2419, the sortation unit 328 outputs that the result of the image capturing date and time determination indicates no matching. At S2420, the sortation unit 328 changes the match flag to "false". Then, the process proceeds to S2421.

At S2421, the sortation unit 328 determines whether an image capturing device having captured the image is included in the processing target sortation condition. Specifically, it is determined whether an image capturing device having captured the image represented by the processing target image ID is included in image capturing devices associated with the value of the current processing target sortation condition ID in the sortation condition table 702. In a case where it is determined that the image capturing device having captured the image is included in the sortation condition (YES at S2421), the process proceeds to S2422. At S2422, the sortation unit 328 outputs that the result of the image capturing device determination indicates matching. Then, the process proceeds to S2425. In a case where no value is held in "image capturing device" column like the entry 711 in Fig. 7B, the process skips S2422 to S2424 and proceeds to S2425.

In a case where it is determined that the image capturing device having captured the image is not included in the sortation condition (NO at S2421), the process proceeds to S2423. At S2423, the sortation unit 328 outputs that the result of the image capturing device determination indicates no matching. At S2424, the sortation unit 328 changes the match flag to "false". Then, the process proceeds to S2425.

At S2425, the sortation unit 328 determines whether the rating of the image is included in the processing target sortation condition. Specifically, it is determined whether the rating of the image represented by the processing target image ID is included in ratings associated with the value of the current processing target sortation condition ID in the sortation condition table 702. In a case where it is determined that the rating of the image is included in the sortation condition (YES at S2425), the process proceeds to S2426. At S2426, the sortation unit 328 outputs that the result of the rating determination indicates matching. Then, the process proceeds to S2429. In a case where no value is held in "rating" column like the entry 711 in Fig. 7B, the process skips S2426 to S2428 and proceeds to S2429.

In a case where it is determined that the rating of the image is not included in the sortation condition (NO at S2425), the process proceeds to S2427. At S2427, the sortation unit 328 outputs to the sortation result that the result of the rating determination indicates no matching. At S2428, the sortation unit 328 changes the match flag to "false". Then, the process proceeds to S2429.

At S2429, the sortation unit 328 determines whether the image type of the image is included in the processing target sortation condition. Specifically, it is determined whether the image type of the image represented by the processing target image ID is included in recording formats associated with the value of the current processing target sortation condition ID in the sortation condition table 702. In a case where it is determined that the image type of the image is included in the sortation condition (YES at S2429), the process proceeds to S2430. At S2430, the sortation unit 328 outputs that the result of the recording format determination indicates matching. Then, the process proceeds to S2433. In a case where no value is held in "recording format" column like the entry 711 in Fig. 7B, the process skips S2430 to S2432 and proceeds to S2433.

In a case where it is determined that the image type of the image is not included in the sortation condition (NO at S2429), the process proceeds to S2431. At S2431, the sortation unit 328 outputs that the result of the recording format determination indicates no matching. At S2432, the sortation unit 328 changes the match flag to "false". Then, the process proceeds to S2433.

At S2433, the sortation unit 328 determines whether the match flag is "true". In a case where the match flag is "true", the image represented by the processing target image ID matches the sortation condition represented by the current processing target sortation condition ID. In a case where it is determined that the match flag is "true" (YES at S2433), the sortation unit 328 outputs "true", which indicates matching as the result of the match determination processing, at S2434. Then, the process proceeds to S2311 in Fig. 23. In this case, YES is determined at S2311. In a case where the match flag is "false", the image represented by the processing target image ID does not match the sortation condition represented by the processing target sortation condition ID. In a case where it is determined that the match flag is "false" (NO at S2433), the sortation unit 328 outputs "false", which indicates no matching as the result of the match determination processing, at S2435. Then, the process proceeds to S2311 in Fig. 23. In this case, NO is determined at S2311.

### [Transfer processing]

Fig. 25 is a flowchart for detailed description of the transfer processing at S517 to S519 in Fig. 5B. The flowchart in Fig. 25 is started in a case where an image and a request transmitted from the image capturing device 110 are received by the image transfer apparatus 120 and the sortation processing at S516 ends. The request in the present flowchart is the same as that in the sortation processing, and each information included in the request is stored in the RAM 203 of the image transfer apparatus 120.

At S2501, the transfer unit 330 obtains a processing target user ID included in the request. In description of subsequent steps, it is assumed that the processing target user ID is "USR001".

At S2502, the transfer unit 330 obtains the value of an image ID as the current transfer determination processing target included in the request. In other words, the image transmitted from the image capturing device at S514 is set as the processing target. In description of subsequent steps, it is assumed that the processing target image ID is "IMGID0".

At S2503, the transfer unit 330 obtains the values of transfer destination IDs associated with the value of the processing target user ID from the transfer destination table 801. Then, a transfer destination list with elements that are the obtained values of the transfer destination IDs is generated. Specifically, the transfer destination list is a list with elements that are the values of transfer destination IDs held in "transfer destination ID" column, which are included in an entry group with "USR001" held in "user ID" column in the transfer destination table 801. In other words, the transfer destination list is a list of the values of transfer destination IDs corresponding to external services linked by the processing target user. For example, in the case of the transfer destination table 801 in Fig. 8A, the transfer destination list with elements that are the values "TRN001" and "TRN002" of transfer destination IDs associated with "USR001" is obtained.

At S2504, the transfer unit 330 initializes a transfer destination counter. The following S2505 to S2514 is loop processing performed on an element (transfer destination ID value) corresponding to the value of the transfer destination counter among the elements of the transfer destination list obtained at S2503. The transfer destination counter is initialized so that the first element of the transfer destination list is to be processed first.

At S2505, the transfer unit 330 determines whether all elements included in the transfer destination list have been processed. In a case where it is determined that there is any unprocessed element in the transfer destination list (NO at S2505), the process proceeds to S2506.

At S2506, the transfer unit 330 obtains the value of a processing target transfer destination ID that is a processing target element included in the transfer destination list.

At S2507, the transfer unit 330 obtains the values of sortation condition IDs associated with the value of the current processing target transfer destination ID from the relational information table 803 and generates a list with elements that are the obtained values of the sortation condition IDs. This list is a sortation condition list corresponding to the value of the current processing target transfer destination ID. For example, the current processing target transfer destination ID is "TRN001 ". In this case, an entry with "USR001" held in "user ID" column and "TRN001" held in "transfer destination ID" column is obtained from among the entries of the relational information table 803 in Fig. 8D. Then, a list with an element that is the sortation condition ID "SRT002" included in "sortation condition" column of the obtained entry is generated as the sortation condition list corresponding to the transfer destination ID "TRN001". Thus, the sortation condition list of the present flowchart is a list with elements that are sortation conditions associated with the processing target user and the current processing target transfer destination.

At S2508, the transfer unit 330 initializes the sortation condition counter. The following S2509 to S2513 is loop processing performed on an element (sortation condition ID value) corresponding to the value of the sortation condition counter among the elements of the sortation condition list corresponding to the value of the current processing target transfer destination ID and obtained at S2507. The value of the sortation condition represented by the processing target sortation condition ID is also referred to as the processing target sortation condition. The sortation condition counter is initialized so that the first element of the sortation condition list is to be processed first.

At S2509, the transfer unit 330 determines whether all elements included in the sortation condition list corresponding to the value of the current processing target transfer destination ID have been processed. In a case where it is determined that there is any unprocessed element (NO at S2509), the process proceeds to S2510.

At S2510, the transfer unit 330 obtains a sortation result associated with the value of the processing target image ID among sortation results managed by the management unit 323. Then, the transfer unit 330 obtains the value of a sortation condition ID held in the obtained sortation result. Specifically, a sortation result associated with the image ID "IMGID0" is obtained, and the value of a sortation condition ID is obtained from the sortation result. The value of a sortation condition ID held in the sortation result indicates a sortation condition that matches the analysis result of the image represented by the value of the processing target image ID.

At S2511, the transfer unit 330 determines whether the value of the sortation condition ID obtained at S2510 matches the value of the current processing target sortation condition ID. In a case where it is determined that the values match, it is indicated that the image corresponding to the processing target image ID is an image that matches a sortation condition associated with the processing target transfer destination (external service). In this case (YES at S2511), the process proceeds to S2512.

At S2512, the transfer unit 330 transfers the image represented by the processing target image ID to the external service corresponding to the value of the current processing target transfer destination ID. In a case where the processing target transfer destination ID is "TRN002", the external service ID corresponding to "TRN002" is "SVC001". Since the URL of the external service "edit service" corresponding to "SVC001" can be obtained according to the external service table 605, the image represented by the processing target image ID is transferred to the transfer destination represented by the processing target transfer destination ID. Then, the process proceeds to S2513.

At S2511, in a case where it is determined that the values do not match, the image represented by the processing target image ID is an image that does not match the current processing target sortation condition. In the present embodiment, an image that does not match a sortation condition associated with a transfer destination is controlled not to be transferred to the transfer destination. Accordingly, at S2511, in a case where it is determined that the values do not match (NO at S2511), the process skips S2512 and proceeds to S2513. In this manner, in the present embodiment, only an image that matches any sortation condition associated with a transfer destination can be transferred to the transfer destination.

At S2513, the transfer unit 330 increments the sortation condition counter, and the process returns to S2509.

At S2509, in a case where it is determined that all elements of the sortation condition list corresponding to the value of the current processing target transfer destination ID have been processed (YES at S2509), the process exits the loop processing at S2509 to S2513 and proceeds to S2514. At S2514, the transfer unit 330 increments the transfer destination counter, and the process returns to S2505. At S2505, in a case where it is determined that all elements of the transfer destination list have been processed (YES at S2505), the present flowchart ends.

As described above, according to the present embodiment, sortation conditions generated by the user are managed in association with identifiers based on first information such as the sortation condition table 702. Then, as illustrated in Fig. 20A, the user can select sortation conditions to be associated with a transfer destination from among the generated sortation conditions included in the sortation condition table 702. Thus, according to the present embodiment, generated sortation conditions can be associated with various transfer destinations.

In examples described above in the present embodiment, candidates for sortation conditions to be associated with a transfer destination are displayed in the order of the first sortation condition and the second sortation condition on the relational information generation screen 2001 in Fig. 20A. The display order of sortation condition candidates on the relational information generation screen 2001 is not limited to this scheme. Sortation conditions may be displayed in order of likelihood of being selected by the user.

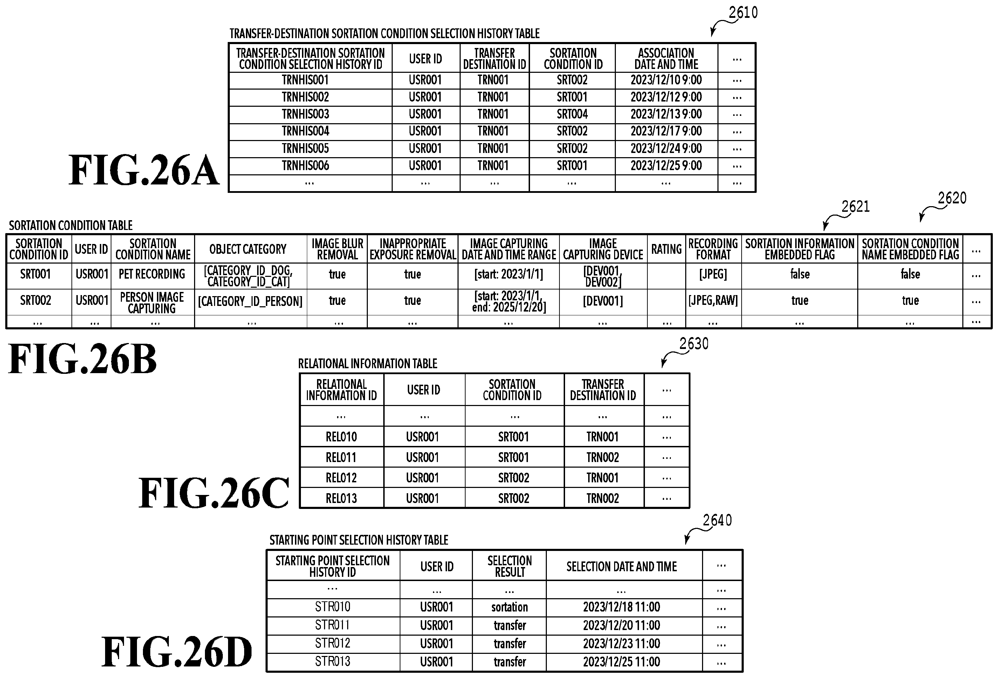

Fig. 26A is an example of a sortation condition selection history table. The management unit 323 of the image transfer apparatus 120 may further manage a sortation condition selection history table 2610. In the sortation condition selection history table 2610, the value of a transfer-destination sortation condition selection history ID is associated with the values of a user ID, a transfer destination ID, a sortation condition ID, association date and time, and the like. The value of the transfer-destination sortation condition selection history ID is a value for uniquely identifying a transfer-destination sortation condition selection history. In "sortation condition ID" column, the values of sortation condition IDs corresponding to sortation conditions associated currently or in the past are held for each transfer destination. The values of a user ID, a transfer destination ID, a sortation condition ID, association date and time, and the like can be referred from the sortation condition selection history table 2610. Thus, the sortation condition selection history table 2610 may be referred to display the relational information generation screen 2001 on which sortation condition candidates are displayed in order of sortation conditions with higher frequencies of being associated. Displaying such a relational information generation screen 2001 can allow the user to easily select sortation conditions with higher use frequencies for each transfer destination. In particular, it is effective to display the relational information generation screen in such a display order in a case where a large number of sortation conditions are registered.

### <Embodiment 2>

The present embodiment describes a method in which, during association between sortation conditions and transfer destinations, sortation conditions to be associated with transfer destinations are selected first, and then transfer destinations to be associated with the selected sortation conditions are selected to generate relational information. The present embodiment will describe mainly any difference from Embodiment 1. Parts not explicitly described below correspond to the same components and processes as those in Embodiment 1.

### [Functional configuration of image transfer apparatus]

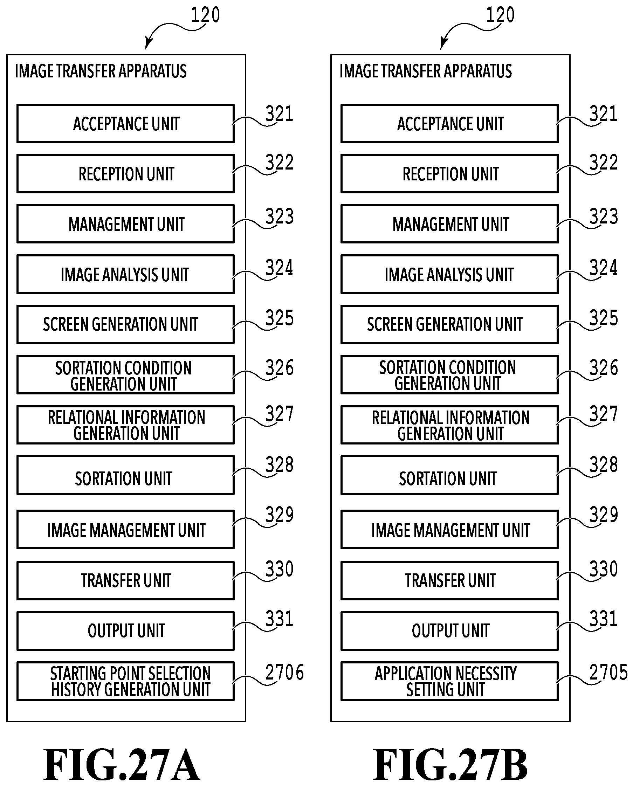

Fig. 27A is a diagram illustrating a functional configuration of the image transfer apparatus 120 of the present embodiment. Any component or function same as in Embodiment 1 is denoted by the same reference sign and description thereof is omitted. The image transfer apparatus 120 of the present embodiment further includes a starting point selection history generation unit 2706. The starting point selection history generation unit 2706 records a history of whether sortation condition starting point or transfer destination starting point is selected during association between sortation conditions and transfer destinations. Information managed by the management unit 323 of the present embodiment is different from that described above in Embodiment 1 and the relational information generation unit 327 of the present embodiment is different from the relational information generation unit 327 of Embodiment 1, where their differences will be described later.

### [Configuration of main screen]

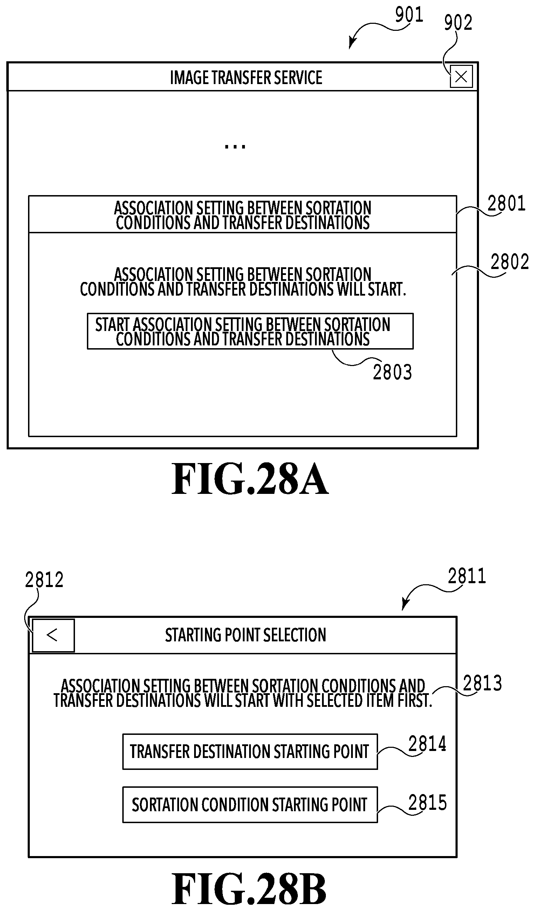

Fig. 28A is a diagram illustrating the configuration of the main screen 901 in the present embodiment. On the main screen 901 of the present embodiment, a relational information generation region 2801 is displayed in place of the external service setting region 930. The relational information generation region 2801 includes an association start button 2803. As indicated by the comment in a comment display region 2802, in a case where the association start button 2803 is pressed, a starting point selection screen 2811 is displayed to start setting of associating sortation conditions and transfer destinations.

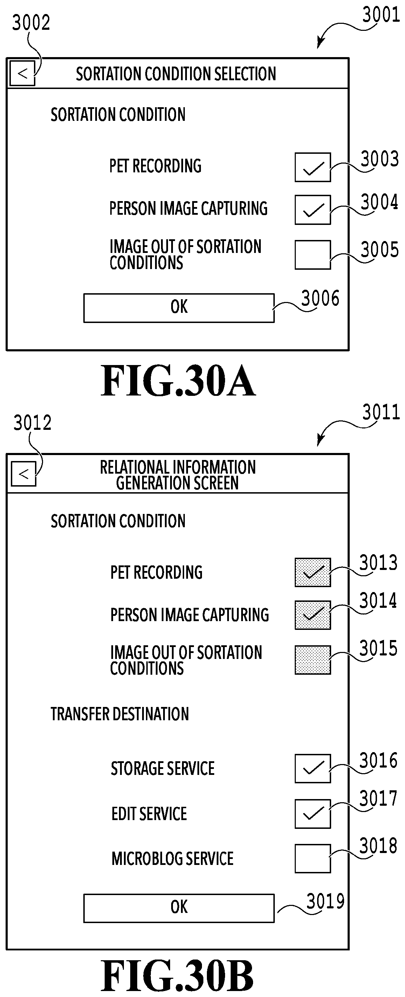

Fig. 28B is a diagram illustrating an example of the starting point selection screen 2811 displayed on the terminal 107 upon press of the association start button 2803. A back button 2812 is a button for closing the starting point selection screen 2811 and returning to the main screen 901 as the caller. A comment display region 2813 is a region for describing the function of the starting point selection screen 2811. A transfer destination starting point button 2814 is a button for transferring, to the image transfer apparatus 120, an instruction to display a screen on which transfer destinations are selected and then sortation conditions are selected during association between sortation conditions and transfer destinations. In a case where the transfer destination starting point button 2814 is pressed, an identifier "transfer" for calling a transfer destination starting point setting screen is transmitted to the image transfer apparatus 120 as "selection result type". As a result, a screen including the external service setting region 930 in Fig. 9 is displayed on the terminal 107. A sortation condition starting point button 2815 is a button for transferring, to the image transfer apparatus 120, an instruction to display a screen on which sortation conditions are selected and then transfer destinations are selected in setting of association between sortation conditions and transfer destinations. In a case where the sortation condition starting point button 2815 is pressed, an identifier "sortation" for calling a sortation condition starting point setting screen is transmitted to the image transfer apparatus 120 as "selection result type". As a result, a sortation condition selection screen 3001 (refer to Fig. 30A) is displayed on the terminal 107. The "selection result type" is included in "starting point selection result" and transmitted to the image transfer apparatus 120.

### [Starting point selection history generation processing]

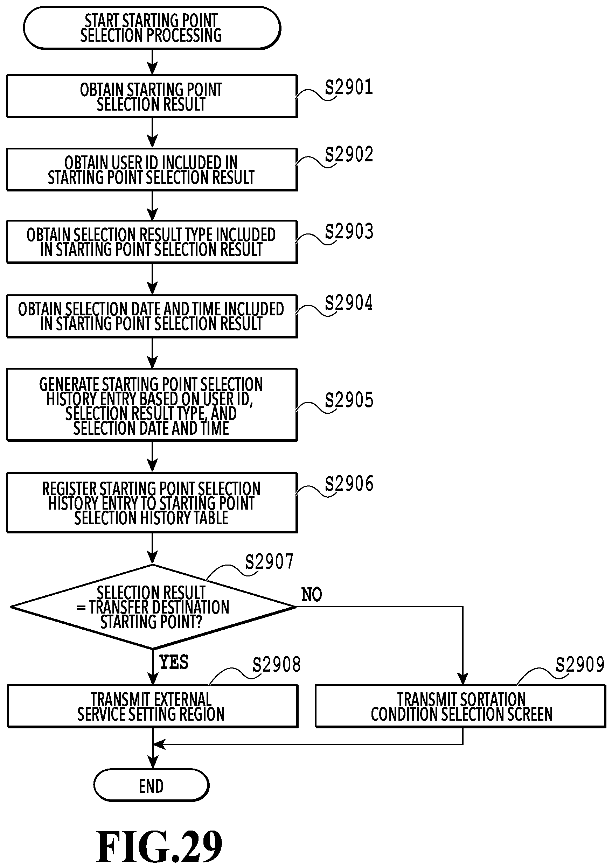

Fig. 29 is a flowchart for description of flow of starting point selection history generation processing that is started in a case where either of the transfer destination starting point button 2814 or the sortation condition starting point button 2815 is pressed.

At S2901, the starting point selection history generation unit 2706 obtains the starting point selection result transmitted from the terminal 107. The starting point selection result includes the values of the user ID of a user having logged in, the selection result type, and selection date and time. The selection date and time is date and time when starting point selection is performed upon press of the transfer destination starting point button 2814 or the sortation condition starting point button 2815 by the user.

At S2902, the starting point selection history generation unit 2706 obtains the value of the user ID included in the starting point selection result.

At S2903, the starting point selection history generation unit 2706 obtains a value (identifier) representing the selection result type included in the starting point selection result.

At S2904, the starting point selection history generation unit 2706 obtains the value of the selection date and time included in the starting point selection result.

At S2905, the starting point selection history generation unit 2706 generates an entry (starting point selection history) holding the values of the user ID, the selection result type, and the selection date and time. Specifically, an entry in which the values of the user ID, the selection result type, and the selection date and time obtained at S2902 to at S2904 are associated is generated.

At S2906, the starting point selection history generation unit 2706 registers the entry generated at S2905 to a starting point selection history table.

Fig. 26D is a diagram illustrating an example of the starting point selection history table. This starting point selection history table 2640 is managed by the management unit 323 of the present embodiment. The starting point selection history table 2640 holds the value of a starting point selection history ID for uniquely identifying the starting point selection history, and the values of the user ID, the selection result, the selection date and time, and the like associated with the value of the starting point selection history ID are held in each entry (row). The image transfer apparatus 120 can refer the values of the user ID, the selection result, the selection date and time, and the like by using the value of the starting point selection history ID as a key. The value of "selection result" is a value indicating whether, during association between sortation conditions and transfer destinations, the user designated sortation conditions and then designated transfer destinations or the user designated transfer destinations and then designated sortation conditions. The value of "selection date and time" indicates date and time when sortation conditions or transfer destinations were designated by the user.

At S2907, the starting point selection history generation unit 2706 determines whether a screen instructed by the user is a transfer destination starting point screen or a sortation condition starting point screen. In other words, it is determined whether the value (identifier) of the type of the selection result obtained at S2903 is "transfer" indicating transfer destination starting point. In a case where the value representing the selection result type is "transfer" (YES at S2907), the process proceeds to S2908.

At S2908, the starting point selection history generation unit 2706 transmits information for displaying a screen including the external service setting region 930 to the terminal 107. Then, the screen including the external service setting region 930 in Fig. 9 is displayed on the terminal 107. Thus, in a case where the same processing as in Embodiment 1 is to be performed, the transfer destination starting point button 2814 is pressed.

In a case where it is determined that the value of the type of the selection result is "sortation" indicating sortation condition starting point (NO at S2907), the process proceeds to S2909.

At S2909, the starting point selection history generation unit 2706 transmits information for displaying the sortation condition selection screen 3001 (refer to Fig. 30A) to the terminal 107. Then, the sortation condition selection screen 3001 (refer to Fig. 30A) is displayed on the terminal 107.

### [Sortation condition selection screen]

Fig. 30A is a diagram illustrating an example of a sortation condition selection screen called by the terminal 107 upon press of the sortation condition starting point button 2815. The sortation condition selection screen 3001 in Fig. 30A is an example of a sortation condition selection screen displayed in a case where one or more sortation conditions are registered to the image transfer apparatus 120. The sortation condition selection screen 3001 is a screen for the user to select sortation conditions to be associated with transfer destinations selected by the user later. A back button 3002 is a button for closing the sortation condition selection screen 3001 and transitioning to the starting point selection screen 2811 as the caller.

Check boxes 3003 to 3005 are check boxes for selecting sortation conditions to be associated with transfer destinations selected later. It is assumed that two sortation conditions are registered to the sortation condition table 702. In this case, the two check boxes 3003 and 3004 correspond these generated sortation conditions, respectively. The first check box 3003 is a check box for associating a first sortation condition with transfer destinations selected by the user later. In the example of Fig. 30A, the first sortation condition is "pet recording". The second check box 3004 is a check box for associating a second sortation condition with transfer destinations selected by the user later. In the example of Fig. 30A, the second sortation condition is "person image capturing". The third check box 3005 is a check box for associating "out of sortation conditions" with transfer destinations selected by the user later. Screen control is performed so that check of the first check box 3003 and the second check box 3004 is canceled in a case where the third check box 3005 is checked. Moreover, screen control is performed so that check of the third check box 3005 is canceled in a case where either of the first check box 3003 or the second check box 3004 is checked. In a case where press of an OK button 3006 is accepted, a request for displaying a relational information generation screen 3011 (refer to Fig. 30B) of the present embodiment is transmitted to the image transfer apparatus 120.

### [Processing of generating relational information generation screen]

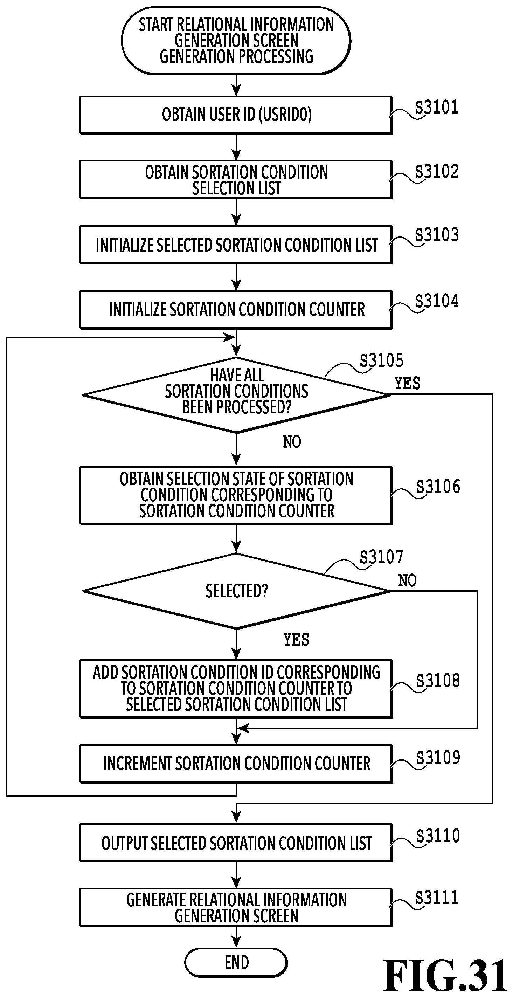

Fig. 31 is a flowchart for description of processing of generating the relational information generation screen of the present embodiment. The flowchart in Fig. 31 is started in a case where a request transmitted from the terminal 107 upon press of the OK button 3006 on the sortation condition selection screen 3001 in Fig. 30A is received. The request includes the value of a user ID representing a user having logged in and a sortation condition selection list. The sortation condition selection list includes the values of all sortation condition IDs associated with the value of the user ID in the sortation condition table 702, and the value of a "sortation condition selection flag" associated with the value of each sortation condition ID. The value of the sortation condition selection flag is "true" for a sortation condition selected by the user on the sortation condition selection screen 3001 or "false" for a sortation condition not selected by the user. The information included in the request is stored in the RAM 203 of the image transfer apparatus 120.

At S3101, the relational information generation unit 327 obtains the value of the user ID included in the received request.

At S3102, the relational information generation unit 327 obtains the sortation condition selection list included in the received request.

At S3103, the relational information generation unit 327 initializes a "selected sortation condition list". The "selected sortation condition list" will be described later.

At S3104, the relational information generation unit 327 initializes the sortation condition counter. The following S3105 to S3109 is loop processing performed on the value of a sortation condition ID corresponding to the value of the sortation condition counter in the sortation condition selection list included in the received request.

At S3105, the relational information generation unit 327 determines whether the values of all sortation condition IDs included in the sortation condition selection list have been processed. In a case where it is determined that there is any unprocessed value of a sortation condition ID (NO at S3105), the process proceeds to S3106.

At S3106, the relational information generation unit 327 obtains the value of the sortation condition selection flag associated with the value of a processing target sortation condition ID from the sortation condition selection list.

At S3107, the relational information generation unit 327 switches processing based on the value of the sortation condition selection flag obtained at S3106. In a case where it is determined that the value of the sortation condition selection flag is "true", the value of a sortation condition represented by the current processing target sortation condition ID was selected by the user on the sortation condition selection screen 3001. In this case (YES at S3107), the process proceeds to S3108. At S3108, the relational information generation unit 327 adds the value of the current processing target sortation condition ID to the "selected sortation condition list" as an element. Then, the process proceeds to S3109.

In a case where the value of the sortation condition selection flag is "false", the value of the sortation condition represented by the current processing target sortation condition ID was not selected by the user on the sortation condition selection screen 3001. In this case (NO at S3107), the process skips S3108 and proceeds to S3109.

At S3109, the relational information generation unit 327 increments the value of the sortation condition counter, and the process returns to S3105.

At S3105, in a case where it is determined that the values of all sortation condition IDs included in the sortation condition selection list have been processed (YES at S3105), the process proceeds to S3110.

At S3110, the relational information generation unit 327 stores the "selected sortation condition list".

At S3111, the relational information generation unit 327 generates information for displaying a relational information generation screen corresponding to the "selected sortation condition list" and transmits the generated information to the terminal 107. The relational information generation screen 3011 (refer to Fig. 30B) is displayed on the terminal 107.

### [Relational information generation screen]

Fig. 30B is a diagram illustrating an example of the relational information generation screen 3011 of the present embodiment, which is displayed as a result of S3111. The relational information generation screen 3011 of the present embodiment is a screen on which the user selects transfer destinations to be associated with sortation conditions selected on the sortation condition selection screen 3001 by the user. A back button 3012 is a button for closing the relational information generation screen 3011 and returning to the sortation condition selection screen 3001 as the caller.

Display regions 3013 to 3015 are regions for displaying which sortation condition is selected by the user on the sortation condition selection screen 3001. The display region 3013 is a region for displaying the selection state of the first sortation condition. The display region 3014 is a region for displaying the selection state of the second sortation condition. The display region 3015 is a region for displaying the selection state of "out of sortation conditions". For example, the OK button 3006 is pressed on the sortation condition selection screen 3001 while the first check box 3003 corresponding to the first sortation condition is checked. In this case, the display region 3013 corresponding to the first sortation condition is displayed in a state of being checked. In a case where the OK button 3006 is pressed on the sortation condition selection screen 3001 while the first check box 3003 is not checked, the display region 3013 corresponding to the first sortation condition is displayed in a state of being not checked. The relational information generation screen 3011 is generated while only the display region of a sortation condition corresponding to an element included in the selected sortation condition list is checked among the display regions 3013 to 3015. The display regions 3013 to 3015 may be grayed out so that their check states cannot be changed, or the check states may be allowed to be changed.

Check boxes 3016 to 3018 are check boxes for the user to select transfer destinations to be associated with sortation conditions checked in the display regions 3013 to 3015. The check boxes 3016 to 3018 correspond to respective external services as transfer destinations registered to the image transfer apparatus 120. The check box 3016 corresponds to the storage service as a first external service. The check box 3017 corresponds to the edit service as a second external service. The check box 3018 corresponds to the microblog service as a third external service. In a case where press of an OK button 3019 is accepted, a request to generate relational information based on input settings is transmitted to the image transfer apparatus 120.

### [Relational information generation processing]

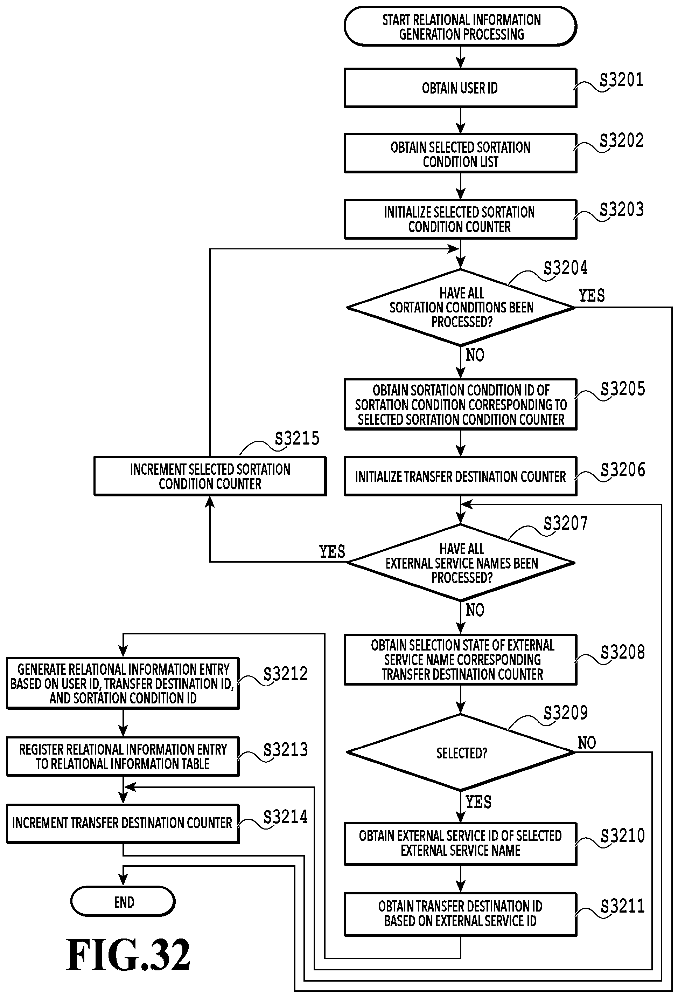

Fig. 32 is a flowchart for description of processing of associating sortation conditions and transfer destinations selected by the user through the relational information generation screen 3011. The flowchart in Fig. 32 is started in a case where a request transmitted from the terminal 107 upon press of the OK button 3019 on the relational information generation screen 3011 is received by the image transfer apparatus 120. The request includes the value of a user ID representing a user having logged in, the selected sortation condition list stored at S3110 in Fig. 31, and a transfer destination selection list. The transfer destination selection list includes all external service names associated with the value of the processing target user ID in the external service table 605, and the value of a "transfer destination selection flag" associated with each external service name. The value of the "transfer destination selection flag" is "true" in a case of being associated with an external service name selected by the user on the relational information generation screen 3011 or "false" in a case of being associated with an external service name not selected by the user. The information included in the request is stored in the RAM 203 of the image transfer apparatus 120.

At S3201, the relational information generation unit 327 obtains the value of the processing target user ID included in the request. In description of subsequent steps, it is assumed that the value of the processing target user ID is "USR001".

At S3202, the relational information generation unit 327 obtains the selected sortation condition list stored at S3110 in Fig. 31.

At S3203, the relational information generation unit 327 initializes a selected sortation condition counter. The following S3204 to S3215 is loop processing performed on an element (sortation condition ID value) corresponding to the value of the selected sortation condition counter among the elements of the sortation condition selection list obtained at S3202.

At S3204, the relational information generation unit 327 determines whether all elements constituting the selected sortation condition list have been processed. In a case where it is determined that there is any unprocessed element (NO at S3204), the process proceeds to S3205.

At S3205, the relational information generation unit 327 obtains the value of the processing target sortation condition ID as the processing target element among the elements of the selected sortation condition list. For example, "SRT002" corresponding to the sortation condition of "person image capturing" is obtained as the value of the sortation condition ID.

At S3206, the relational information generation unit 327 initializes the transfer destination counter. The following S3207 to S3214 is loop processing performed on an external service name corresponding to the value of the transfer destination counter among the external service names included in the transfer destination selection list included in the received request.

At S3207, the relational information generation unit 327 determines whether all external service names included in the transfer destination selection list have been processed. In a case where it is determined that there is any unprocessed external service name (NO at S3207), the process proceeds to S3208.

At S3208, the relational information generation unit 327 obtains the value of the transfer destination selection flag associated with the current processing target external service name from the transfer destination selection list.

At S3209, the relational information generation unit 327 switches processing based on the value of the transfer destination selection flag obtained at S3208. In a case where it is determined that the value of the transfer destination selection flag is "true", the processing target external service name is an external service name selected by the user on the relational information generation screen 3011. In this case (YES at S3209), the process proceeds to S3210.

At S3210, the relational information generation unit 327 obtains the value of an external service ID corresponding to the current processing target external service name from the external service table 605. For example, in a case where the processing target is "edit service", the process transitions to the present step since "edit service" is checked in Fig. 30B, and the external service ID "SVC002" corresponding to "edit service" is obtained.

At S3211, the relational information generation unit 327 obtains the value of a transfer destination ID corresponding to the value of the external service ID obtained at S3210 from the transfer destination table 801. For example, "TRN002" is obtained as the value of a transfer destination ID corresponding to the external service ID "SVC002".

At S3212, the relational information generation unit 327 generates an entry in which the value of the user ID obtained at S3201, the value of the current processing target sortation condition ID obtained at S3205, and the value of the current processing target transfer destination ID obtained at S3211 are held. Specifically, an entry (relational information) is generated by associating "USR001", "SRT002", and "TRN002".

At S3213, the relational information generation unit 327 adds the entry (relational information) generated at S3212 to a relational information table 2630. In this case, the value of the relational information ID is held in the entry. As a result, a new entry is added to the final row as illustrated in Fig. 26C. Then, the process proceeds to S3214.

At S3209, in a case where it is determined that the value of the transfer destination selection flag is "false", the current processing target external service name was not selected on the relational information generation screen 3011. In this case (NO at S3209), the process skips S3210 to S3213 and proceeds to S3214.

At S3214, the relational information generation unit 327 increments the transfer destination counter, and the process returns to S3207.

At S3207, in a case where it is determined that all external service names included in the transfer destination selection list have been processed (YES at S3207), the process exits the loop processing at S3207 to S3214 and proceeds to S3215.

At S3215, the relational information generation unit 327 increments the selected sortation condition counter, and the process returns to S3204.

At S3204, in a case where it is determined that all elements constituting the selected sortation condition list have been processed (YES at S3204), the present flowchart ends.

The relational information table 2630 in Fig. 26C is an example of a relational information table generated as a result of relational information generation processing of the present embodiment. The value of a relational information ID for uniquely identifying relational information is held in each entry (row). The values of a user ID, a sortation condition ID, a transfer destination ID, and the like associated with the value of a relational information ID are held in each entry. The image transfer apparatus 120 can refer the user ID, the sortation condition ID, the transfer destination ID, and the like by using the relational information ID as a key.

As described above, according to the present embodiment, a UI screen for generating relational information by using sortation conditions as a starting point can be provided. This allows the user to collectively designate transfer destinations to be associated with selected sortation conditions. Thus, according to the present embodiment, it is possible to reduce the user's work in selecting sortation conditions for each transfer destination.

In Fig. 28B, buttons are displayed on the starting point selection screen 2811 in the order of the transfer destination starting point button 2814 first and the sortation condition starting point button 2815 second, but the display order of buttons is not limited thereto. Sortation conditions may be displayed in order of likelihood of being selected by the user. For example, the sortation condition starting point button 2815 may be displayed first if the number of times sortation conditions were designated and then transfer destinations were designated in the past is high in a case where the starting point selection history table 2640 is referred. Alternatively, the sortation condition selection screen 3001 may be displayed, instead of displaying the starting point selection screen 2811, if the number of times sortation conditions were designated and then transfer destinations were designated in the past is high. Conversely, the transfer destination starting point button 2814 may be displayed first if the number of times transfer destinations were designated and then sortation conditions were designated in the past is high. Alternatively, a screen including the external service setting region 930 may be displayed, instead of displaying the starting point selection screen 2811, if the number of times transfer destinations were designated and then sortation conditions were designated in the past is high.

### <Embodiment 3>

The present embodiment describes a method of writing sortation information to the metadata of an image. The present embodiment will describe mainly any difference from Embodiment 1. Parts not explicitly described below correspond to the same components and processes as those in Embodiment 1.

### [Functional configuration of image transfer apparatus]

Fig. 27B is a diagram illustrating a functional configuration of the image transfer apparatus 120 of the present embodiment. Any function same as in Embodiment 1 is denoted by the same reference sign and description thereof is omitted. The image transfer apparatus 120 of the present embodiment further includes an application necessity setting unit 2705. The application necessity setting unit 2705 accepts setting related to whether to write sortation information to the metadata of an image. Information managed by the management unit 323 of the present embodiment is different from that in Embodiment 1. Moreover, the sortation condition generation unit 326 and the sortation unit 328 of the present embodiment perform processing different from that of the sortation condition generation unit 326 and the sortation unit 328 of Embodiment 1, where their differences will be described later.

### [Configuration of sortation condition table]

Fig. 26B is a diagram illustrating an example of a sortation condition table of the present embodiment. A sortation condition table 2620 in Fig. 26B is different from the sortation condition table 702 in Fig. 7A in that "sortation information embedded flag" column 2621 is included in the sortation condition table 2620. "Sortation information embedded flag" column holds "true" in a case where sortation information is to be written to the metadata of an image, or holds "false" otherwise.

### [Configuration of sortation condition production screen]

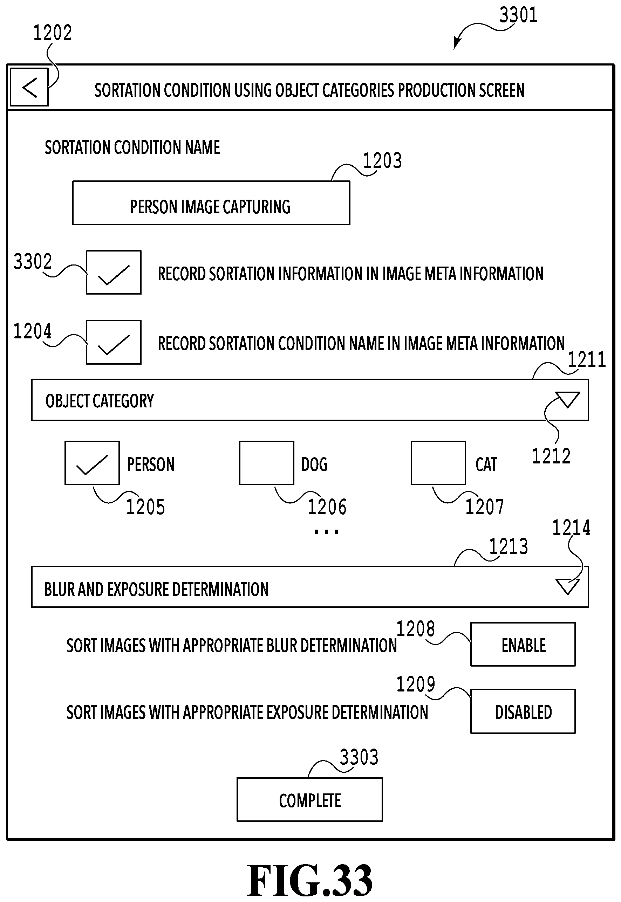

Fig. 33 is a diagram illustrating an example of a screen for production of sortation condition using object categories in the present embodiment. In the present embodiment, a sortation condition production screen 3301 in Fig. 33 is displayed in place of the sortation condition using object categories production screen 1201 in Fig. 12. Difference from Fig. 12 is that a check box 3302 is additionally included in Fig. 33. Although not illustrated, the check box 3302 is also included in the sortation condition using blur and exposure production screen 1401, the sortation condition using image capturing information production screen 1601, and the combined sortation condition production screen 1801 in the present embodiment. The check box 3302 is a check box for accepting setting related to whether to write sortation information to the metadata of an image. A request transmitted to the image transfer apparatus 120 upon press of an OK button 3303 in Fig. 33 further includes the value of a sortation information record flag in addition to information included in a request transmitted in Embodiment 1. The value of the sortation information record flag is "true" in a case where the check box 3302 is checked, or the value of the sortation information record flag is "false" in a case where the check box 3302 is not checked.

### [Flow of sortation condition generation processing]

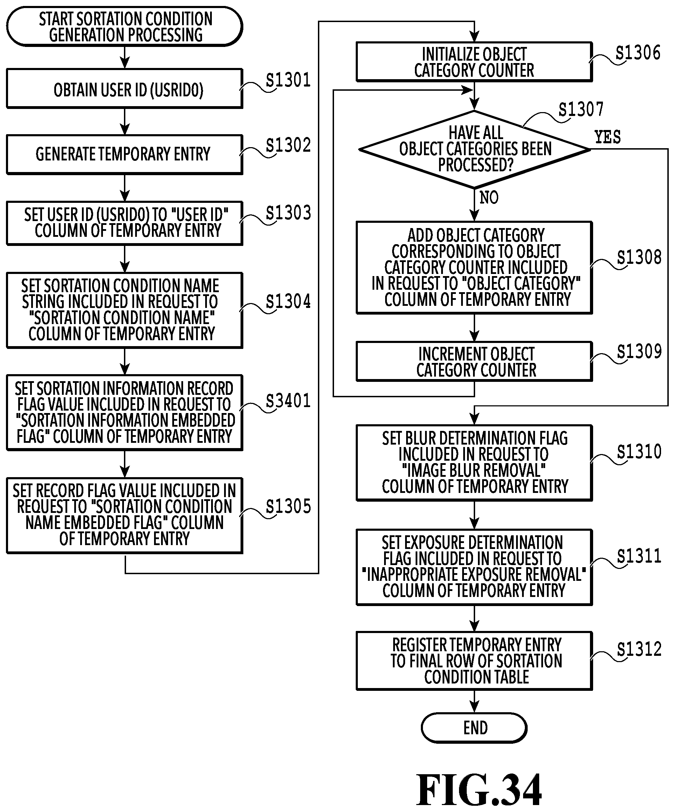

Fig. 34 is a flowchart of sortation condition generation processing in the image transfer apparatus 120, which is started in a case where a request transmitted upon press of the OK button 3303 on the sortation condition production screen 3301 in Fig. 33 is received. In the flowchart in Fig. 34, any step of performing the same processing as that of a step in the flowchart in Fig. 13 is denoted by the same number in Fig. 34. The flowchart in Fig. 34 includes step S3401 in addition to the flowchart in Fig. 13. Although not illustrated, step S3401 is added to the flowcharts in Figs. 15 and 17 as well.

At S3401, the sortation condition generation unit 326 holds the value of a sortation condition record flag included in the request in "sortation information embedded flag" column in the temporary entry.

### [Flow of sortation processing]

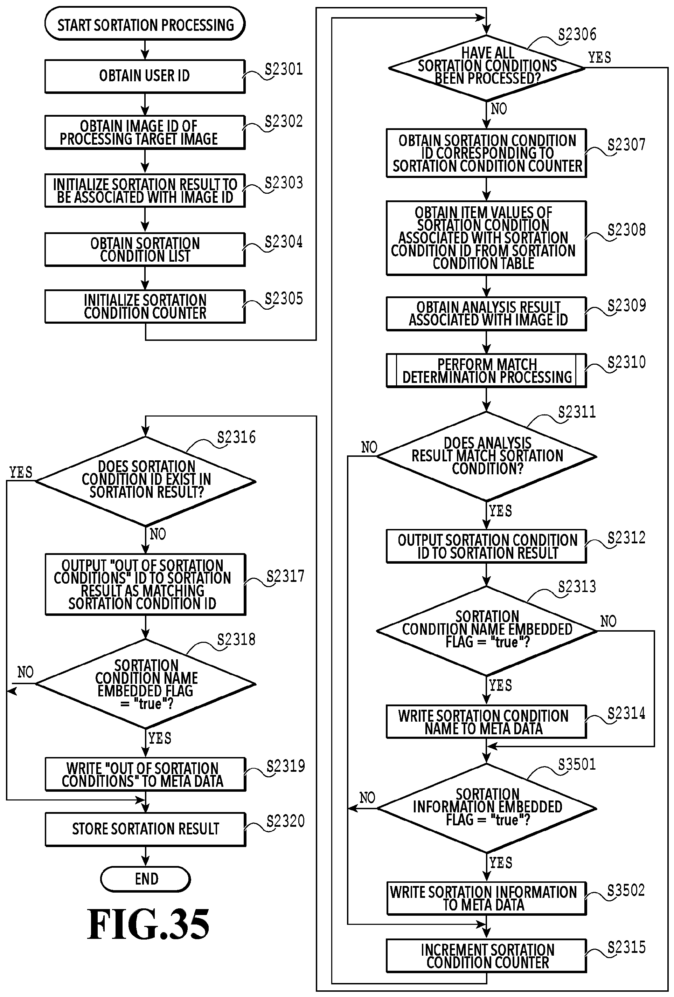

Fig. 35 is a flowchart for description of flow of the sortation processing of the present embodiment. Specifically, in the present embodiment, the flowchart in Fig. 35 is executed in place of the flowchart in Fig. 23. In Fig. 35, any step of performing the same processing as that of a step in the flowchart in Fig. 23 is denoted by the same number in Fig. 35.

At S2311, in a case where it is determined that the analysis result matches the current processing target sortation condition (YES at S2311), the process proceeds to S3501 after S2312 to S2314 are executed in the present embodiment. At S3501, the sortation unit 328 obtains the value of the sortation information embedded flag associated with the value of the current processing target sortation condition ID from the sortation condition table 2620. Then, it is determined whether the obtained value is "true". In a case where it is determined that the obtained value is "true" (YES at S3501), the process proceeds to S3502. In a case where the obtained value is "false" (NO at S3501), the process skips S3502 and proceeds to S2315. At S2311, in a case where it is determined that the analysis result does not match the current processing target sortation condition (NO at S2311), the process skips S2312 to S2314 and S3501 to S3502 and proceeds to S2315.

At S3502, the sortation unit 328 performs processing of writing information (sortation information) of a sortation condition corresponding to the value of the current processing target sortation condition ID to metadata such as Exif of the image represented by the processing target image ID. Then, the process proceeds to S2315. The sortation information is, for example, at least one of a sortation item and a sortation item value constituting the sortation condition.

As described above, according to the present embodiment, information of a sortation condition that matches the analysis result can be written to the metadata of the analysis target image. Embodiment 3 may be applied to Embodiment 2.

According to the technologies of the present disclosure, it is possible to reduce user's work in associating sortation conditions with transfer destinations of an image.

### <Other embodiments>

The above-described embodiments may be implemented as, for example, a system, an apparatus, a method, a computer program, or a recording media (storage medium), among other forms. Specifically, the above-described embodiments may be applied to a system constituted by a plurality of instruments (for example, host computer, interface instrument, image capturing device, and Web application) or may be applied to an apparatus constituted by one instrument.

The above-described embodiments are implemented as follows. A recording media (or storage medium) storing software program codes (computer program) that implement functions of the embodiments is supplied to a system or an apparatus. The storage medium is a computer-readable storage medium. Then, a computer (CPU or MPU) of the system or apparatus reads and executes the program codes stored in the recording media. In this case, the program codes read from the recording media implement the functions of the above-described embodiments, and the recording media storing the program codes constitutes the technologies of the present disclosure.

In the above-described embodiments, information received by the image transfer apparatus is images but not limited thereto and may be contents such as moving images, mails, and files. Moreover, the relational information generation unit may accept input related to sortation conditions registered in advance and optional sortation conditions.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to exemplary embodiments, it is to be understood that the disclosure is not limited to the disclosed exemplary embodiments. The scope of the following claims is to be accorded the broadest interpretation so as to encompass all such modifications and equivalent structures and functions.

## Claims

1. An image transfer apparatus (120) for transferring a received image to a transfer destination, the image transfer apparatus comprising:
a management unit (323) configured to manage first information in which sortation conditions to sort the received image are held;
an association unit (327) configured to associate a sortation condition selected by a user from among the sortation conditions included in the first information with a transfer destination selected by the user; and
a transfer unit (330) configured to transfer the received image to a specified transfer destination.

2. The image transfer apparatus according to claim 1, wherein
the transfer unit transfers the received image to the specified transfer destination in a case where the received image matches a sortation condition associated with the specified transfer destination, or does not transfer the received image to the specified transfer destination in a case where the received image does not match the sortation condition associated with the specified transfer destination.

3. The image transfer apparatus according to claim 1 or 2, wherein
the management unit further manages second information in which values representing transfer destinations is held, and
the association unit associates a sortation condition selected by the user from among the sortation conditions included in the first information with a value representing a transfer destination selected by the user from among values representing transfer destinations included in the second information.

4. The image transfer apparatus according to any one of claims 1 to 3, wherein
the management unit further manages third information in which relational information is held, the relational information being combination of a sortation condition selected by the user from among the sortation conditions held in the first information and a transfer destination selected by the user.

5. The image transfer apparatus according to claim 4, wherein
the management unit further manages a value representing a user who uses the image transfer apparatus, and
the relational information in the third information is further associated with the value representing the user.

6. The image transfer apparatus according to claim 2, wherein
the sortation condition is constituted by at least one sortation item, and
an image matches the sortation condition in a case where a value of the sortation item constituting the sortation condition matches an analysis result of the image.

7. The image transfer apparatus according to claim 6, wherein
the sortation item constituting the sortation condition includes at least one of an item for sorting an image including an object of a specified classification, an item related to image capturing information, and an item related to an image state.

8. The image transfer apparatus according to claim 7, wherein
the item related to an image state includes a sortation item related to at least one of image blur, exposure degree, and image tilt.

9. The image transfer apparatus according to claim 7 or 8, wherein
the item related to image capturing information includes a sortation item related to at least one of type of image capturing device, type of image, rating information, start date and time of an image capturing time range, end date and time of the image capturing time range, multiple exposure image capturing, continuous image capturing, lens used, scene mode, image capturing mode, strobe light emission state, recording quality, DPRAW, aspect ratio, exposure metering mode, white balance, and color reproduction parameter.

10. The image transfer apparatus according to any one of claim 7 to 9, wherein
the specified classification includes at least one of person, living being, animal, dog, cat, bird, plant, vehicle, car, train, airplane, food, sport, building, mountain, sea, night scene, and still object.

11. The image transfer apparatus according to any one of claim 1 to 10, further comprising
a generation unit configured to generate sortation conditions based on an input from a user, wherein the sortation conditions generated based on the input from the user are held in the first information.

12. The image transfer apparatus according to claim 11, further comprising
a control unit configured to control a display unit to display a first screen that accepts an input from the user to generate the sortation conditions, wherein
the first screen is a screen on which the user can input values of a predetermined subset of specified sortation items or a screen on which the user can input a value of a sortation item selected by the user from among the specified sortation items.

13. The image transfer apparatus according to claim 12, wherein
the specified sortation item includes an item for sorting an image including an object of a specified classification, an item related to image capturing information, and an item related to an image state.

14. The image transfer apparatus according to claim 2, further comprising
a sortation unit configured to determine whether the received image matches a sortation condition held in the first information.

15. The image transfer apparatus according to claim 2, further comprising
a writing unit configured to write information for identifying a sortation condition that matches the received image to metadata of the received image.

16. The image transfer apparatus according to claim 2, further comprising
a writing unit configured to write information of a sortation item constituting a sortation condition that matches the received image to metadata of the received image.

17. The image transfer apparatus according to any one of claim 1 to 16, further comprising
a display control unit configured to cause a display unit to display a second screen for a user to select a sortation condition to be associated with a transfer destination selected by the user, wherein
sortation conditions displayed to be selected by the user are displayed on the second screen in an order based on a history of the sortation conditions once associated with the transfer destination selected by the user.

18. The image transfer apparatus according to any one of claim 1 to 17, wherein the image is a still image or a moving image.

19. A control method for an image transfer apparatus for transferring a received image to a transfer destination, the control method comprising:
managing first information in which sortation conditions to sort the received image are held;
associating a sortation condition selected by a user from among the sortation conditions included in the first information with a transfer destination selected by the user; and
transferring the received image to a specified transfer destination.

20. A computer program for causing a computer to execute each unit of the image transfer apparatus according to any one of claims 1 to 18.
